(19)

Europäisches Patentamt

European Patent Office

Office européen des brevets

(11) **EP 3 663 268 A1**

(12) **EUROPEAN PATENT APPLICATION**

(43) Date of publication:
**10.06.2020 Bulletin 2020/24**

(21) Application number: **18386035.2**

(22) Date of filing: **06.12.2018**

(51) Int Cl.:
**C03C 11/00** (2006.01)
**C09K 21/02** (2006.01)
**C04B 20/00** (2006.01)
**A01G 24/00** (2018.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ImerTech SAS**
**75015 Paris (FR)**

(72) Inventors:
- **Papakonstantinou, Konstantina**
  **10443 Athens (GR)**
- **Karalis, Thanasis**
  **15233 Chalandri, Chalandri Attiki (GR)**

- **Dedeloudis, Christos**
  **17561 Athens (GR)**
- **Angelopoulos, Panagiotis**
  **11363 Athens (GR)**
- **Paspaliaris, Ioannis**
  **14121 N. Irakleion (GR)**
- **Taxiarchou, Maria**
  **19009 Pikermi (GR)**
- **Gaki, Anna**
  **15125 Amaroussion (GR)**

(74) Representative: **Yazitzoglou, Evagelia S. et al**
**Dr. Helen G. Papaconstantinou and Partners**
**2, Coumbari Street**
**Kolonaki**
**106 74 Athens (GR)**

(54) **EXPANDED AND EXPANDABLE GRANULAR MATERIALS**

(57)    A method of manufacturing an expanded granular material comprises: forming a mixture comprising a silicate material, an alkali compound and water; curing the mixture to form a solid precursor; crushing and/or milling the solid precursor to form an expandable granular material; and heating the granular material to form an expanded granular material.

EP 3 663 268 A1

**Description**

**TECHNICAL FIELD**

The present invention is directed to expanded and expandable granular materials, a method of manufacturing expanded and expandable granular materials, thermally insulating products, construction materials and horticultural or agricultural substrates comprising expanded granular materials and flame retardant materials comprising expandable granular materials.

**BACKGROUND TO THE INVENTION**

Expanded natural perlite is commonly used as a lightweight filler material in, for example, thermal insulation and construction materials. The desirable properties of expanded natural perlite products include low bulk densities, low water absorption, low water retention, and low thermal conductivities. Such properties, however, depend on the chemical composition of the raw perlite prior to expansion. In particular, expansion of natural perlite is achieved by heating natural perlite to remove "bound" or "chemical" water present in the form of hydroxyl groups in the perlitic matrix. The degree of expansion achieved is therefore dependent on the starting hydroxyl content. Since perlite is a naturally occurring material, the chemical composition, and particularly the hydroxyl content, is highly variable. Natural perlite often contains other mineral impurities, such as quartz and feldspar. A synthetic expandable granular material having controllable physical properties and a controllable chemical composition is therefore desirable.

**SUMMARY OF THE INVENTION**

According to a first aspect, the present invention is directed to a method of manufacturing an expanded granular material, the method comprising:

forming a mixture comprising:

a silicate material;
an alkali compound; and
water;

curing the mixture to form a solid precursor;
crushing and/or milling the solid precursor to form an expandable granular material; and
heating the expandable granular material to form an expanded granular material.

According to a second aspect, the present invention is directed to an expanded granular material manufactured by the method according to the first aspect.

According to a third aspect, the present invention is directed to an expanded granular material having:

a loose bulk density, measured according to PI 200-77 (where "PI" refers to the "Perlite Institute"), of from about 15 kg/m$^3$ to about 450 kg/m$^3$, for example from about 20 kg/m$^3$ to about 100 kg/m$^3$, or from about 20 kg/m$^3$ to about 30 kg/m$^3$, or from about 20 kg/m$^3$ to about 40 kg/m$^3$, or from about 55 kg/m$^3$ to about 100 kg/m$^3$, or from about 70 kg/m$^3$ to about 100 kg/m$^3$;
a compaction resistance, measured according to PI 306-80, of from about 3 PSI to about 350 PSI at 2", for example from about 3 PSI to about 200 PSI at 2", or from about 3 PSI to about 100 PSI at 2", or from about 3 PSI to about 10 PSI at 2", or from about 30 PSI to about 80 PSI at 2", or from about 40 PSI to about 75 PSI at 2", or from about 5 PSI to about 20 PSI at 2"; and/or
a thermal conductivity ($\lambda$, lambda value), measured according to EN 12667, of from about 0.0300 W/mK to about 0.0700 W/mk, for example from about 0.0320 W/mK to about 0.0420 W/mK, from about 0.0350 W/mK to about 0.0400 W/mK, or from about 0.0360 W/mK to about 0.0410 W/mK, or from about 0.0320 W/mK to about 0.0340 W/mK, or from about 0.042 W/mK to about 0.055 W/mK, or from about 0.055 W/mK to about 0.070 W/mK.

According to a fourth aspect, the present invention is directed to an expandable material comprising:

from about 0.1 wt. % to about 25 wt. %, for example from about 0.2 wt. % to about 5 wt. %, of $X_2O$, wherein X is an alkali metal such as Na or Li;
from about 0.1 wt. % to about 30 wt. %, for example from about 1 wt. % to about 20 wt. %, of $Al_2O_3$;

from about 30 wt. % to about 80 wt. %, for example from about 40 wt. % to about 60 wt. %, of $SiO_2$; and
from about 10 wt. % to about 40 wt. %, for example from about 15 wt. % to about 30 wt. %, of $H_2O$;

wherein the expandable material optionally comprises less than about 5 wt. %, for example less than about 3.5 wt. %, of $B_2O_3$.

According to a fifth aspect, the present invention is directed to a method of manufacturing an expandable material, the method comprising:

(a) forming a mixture comprising:

a silicate material;
an alkali compound; and
water;

wherein optionally:

(i) the mixture comprises a glass network-forming element other than silicon, a glass network intermediate element and/or a glass network-modifying element;
(ii) the mixture further comprises reactive silica; and/or
(iii) the mixture comprises two different silicate materials; and

(b) curing the mixture to form the expandable material.

According to a sixth aspect, the present invention is directed to an expandable material manufactured according to the method according to the fifth aspect.

According to a seventh aspect, the present invention is directed to a thermally insulating product, for example bulk granular material for cavity wall insulation, filler for acoustic or thermal insulation board, acoustic or thermal insulation board, a granular filler for thermal insulation of cryogenic or low-temperature vessels, or a thermally insulated cryogenic or low-temperature vessel, comprising the expanded granular material according to the second or third aspects or the expanded granular material formed by expanding the expandable material according to the fourth or sixth aspects.

According to an eighth aspect, the present invention is directed to a construction material, for example a sheet such as a fibre cement sheet, a mortar or plaster such as cementitious, gypsum-based and/or acrylic-based mortar or plaster, or concrete, comprising the expanded granular material according to the second or third aspects or the expanded granular material formed by expanding the expandable material according to the fourth or sixth aspects.

According to a ninth aspect, the present invention is directed to a horticultural or agricultural substrate or substrate component comprising the expanded granular material according to the second or third aspects or the expanded granular material formed by expanding the expandable material according to the fourth or sixth aspects.

According to a tenth aspect, the present invention is directed to a flame retardant material comprising the expandable material according to the fourth or sixth aspects or the expandable material manufactured by the method according to the fifth aspect.

According to an eleventh aspect, the present invention is directed to use of the expanded granular material according to the second or third aspects or the expanded granular material formed by expanding the expandable material according to the fourth or sixth aspects in a thermally insulating product, for example bulk material for insulating cavity walls, insulation board, or a thermally insulated vessel such as a cryogenic or low-temperature vessel, or a construction material, for example a sheet such as a fibre cement sheet, a mortar or plaster such as cementitious, gypsum-based and/or acrylic-based mortar or plaster, or concrete, or a horticultural or agricultural substrate or substrate component.

## DETAILED DESCRIPTION OF THE INVENTION

It has surprisingly been found that an expandable material can be manufactured by forming a mixture comprising a silicate material, an alkali compound and water, and curing the mixture. The expandable material (i.e. the cured mixture) can be expanded, by heating, to form an expanded material. Accordingly, the cured mixture may be referred to as a solid precursor for the expanded material.

The expanded granular material may be manufactured by crushing the solid precursor to form an expandable granular material and heating the expandable granular material to form the expanded granular material. The expanded granular material thus formed has been found to have beneficial physical properties, such as low loose bulk density, high compaction and attrition resistance and/or low thermal conductivity, which renders it suitable for use in thermally insulating products, acoustically insulating products, construction materials, in horticultural or agricultural applications, and as a flame retardant material. The manufactured expandable material has a low concentration of impurities and therefore typically forms ideally expanded spherical particles having a high concentration (typically greater than 98 %) of floaters, as explained in more detail below.

Initial mixture

A first step in forming the expandable material, or the expanded material, comprises forming a mixture comprising: a silicate material; an alkali compound; and water.

*Silicate material*

Throughout this specification and the appended claims, the term "silicate material" refers to a material which contains a substantial proportion of silicon and oxygen. Silicate materials include silicate salts, wherein a silicate salt is a salt of the family of silicate anions having the general formula $SiO_{4\text{-}x}^{(4\text{-}2x)}$, where $0 \leq x < 2$, which includes orthosilicate, metasilicate and pyrosilicate anions. Silicate materials also include silicate glasses, wherein a silicate glass is an amorphous (i.e. non-crystalline) solid material formed predominantly from a covalently-bonded silicon dioxide network, i.e. the material commonly referred to simply as "glass". Silicate materials also include silicate minerals, wherein silicate minerals are rock-forming minerals having predominantly silicate anions or formed predominantly from silicon dioxide.

Silicate materials include aluminosilicate materials. The term "aluminosilicate material" refers to a silicate material which contains aluminium in addition to silicon and oxygen. Accordingly, aluminosilicate materials include aluminosilicate salts, aluminosilicate glasses and aluminosilicate minerals.

Accordingly, the silicate material in the mixture may be a silicate salt. The silicate material in the mixture may be an aluminosilicate salt. For example, the silicate material in the mixture may be sodium silicate, i.e. waterglass, or sodium aluminosilicate.

The silicate material in the mixture may be a silicate glass. The silicate glass may comprise (e.g. consist of) predominantly silicon and oxygen. However, the silicate glass may also contain one or more elements in addition to silicon and oxygen. For example, the silicate glass may contain aluminium, sodium, iron, chromium, lead, zinc, calcium, manganese, magnesium, barium, potassium, boron, fluorine, germanium, sulphur, selenium and/or tellurium, in addition to silicon and oxygen.

The silicate glass may be selected from: fused silica glass, soda-lime glass, borosilicate glass, lead-oxide glass, aluminosilicate glass, and silica-germania glass.

The silicate glass may comprise (e.g. be) virgin glass. Additionally or alternatively, the silicate glass may comprise (e.g. be) recycled glass, for example recycled glass cullet.

Unless otherwise stated, particle size properties referred to herein for particulate materials such as ground glass or minerals, where the particle sizes are quoted as being less than 300 $\mu$m, are as measured in a well-known manner by wet Malvern laser scattering (standard ISO 13320-1). In this technique, the size of particles in powders, suspensions and emulsions may be measured using the diffraction of a laser beam, based on the application of Mie theory. Such a machine, for example a Malvern Mastersizer S (as supplied by Malvern instruments) provides measurements and a plot of the cumulative percentage by volume of particles having a size, referred to in the art as the "equivalent spherical diameter" (e.s.d), less than given e.s.d values. The mean particle size $d_{50}$ is the value determined in this way of the particle e.s.d. at which there are 50% by volume of the particles which have an equivalent spherical diameter less than that $d_{50}$ value.

Where particle sizes are quoted as being equal to or greater than 300 $\mu$m, the particle sizes are as measured by applying sieve granulometric analysis. In particular, a representative sample of the material is taken with a sampler (300-400 mL) and weighed. The sample is placed above sieves with openings of 300 $\mu$m and above (smaller sieves can be used for finer samples). The sample is thrown on the sieve with the largest opening (located above) and the lid is put on top. The column with the sieves is shaken back and forth 30 times without losing contact with the ground (like scrolling). Then the column is allowed to fall freely from a height of 10 cm for 4 times. The column is rotated by 90° and the procedure is repeated. The fraction that is under 300 microns is then analyzed using a laser particle analyser.

The silicate glass may be provided in the form of ground silicate glass (i.e. silicate glass cullet). The ground silicate glass may have a maximum particle size of about 200 $\mu$m, for example, about 150 $\mu$m, or about 100 $\mu$m, or about 80 $\mu$m, or about 70 $\mu$m, or about 65 $\mu$m. The ground silicate glass may have a $d_{50}$ of no greater than about 100 $\mu$m, for example, no greater than about 80 $\mu$m, or no greater than about 60 $\mu$m, or no greater than about 50 $\mu$m, or no greater than about 40 $\mu$m, or no greater than about 35 $\mu$m, or no greater than about 30 $\mu$m, or no greater than about 29 $\mu$m, or no greater than about 28 $\mu$m. The ground silicate glass may have a $d_{50}$ of no less than about 5 $\mu$m, for example, no less than about 10 $\mu$m, or no less than about 15 $\mu$m, or no less than about 20 $\mu$m, or no less than about

25 $\mu$m, or no less than about 26 $\mu$m, or no less than about 27 $\mu$m, or no less than about 28 $\mu$m. The ground silicate glass may have a $d_{50}$ of from about 5 $\mu$m to about 100 $\mu$m, for example, from about 10 $\mu$m to about 80 $\mu$m, or from about 15 $\mu$m to about 50 $\mu$m, or from about 20 $\mu$m to about 35 $\mu$m, or from about 25 $\mu$m to about 30 $\mu$m, or from about 26 $\mu$m to about 28 $\mu$m, or from about 27 $\mu$m to about 28 $\mu$m, or from about 27 $\mu$m to about 29 $\mu$m, or from about 28 $\mu$m to about 29 $\mu$m.

It may be that the silicate glass is ground soda-lime glass having a maximum particle size of about 200 $\mu$m, for example, about 150 $\mu$m, or about 100 $\mu$m, or about 80 $\mu$m, or about 70 $\mu$m, or about 65 $\mu$m. It may be that the silicate glass is ground soda-lime glass having a dso of from about 5 $\mu$m to about 100 $\mu$m, for example, from about 10 $\mu$m to about 80 $\mu$m, or from about 15 $\mu$m to about 50 $\mu$m, or from about 20 $\mu$m to about 35 $\mu$m, or from about 25 $\mu$m to about 30 $\mu$m, or from about 27 $\mu$m to about 29 $\mu$m, or from about 28 $\mu$m to about 29 $\mu$m.

It may be that the silicate glass is ground borosilicate glass having a maximum particle size of about 200 $\mu$m, for example, about 150 $\mu$m, or about 100 $\mu$m, or about 80 $\mu$m, or about 70 $\mu$m. It may be that the silicate glass is ground borosilicate glass having a $d_{50}$ of from about 5 $\mu$m to about 100 $\mu$m, for example, from about 10 $\mu$m to about 80 $\mu$m, or from about 15 $\mu$m to about 50 $\mu$m, or from about 20 $\mu$m to about 35 $\mu$m, or from about 25 $\mu$m to about 30 $\mu$m, or from about 26 $\mu$m to about 28 $\mu$m, or from about 27 $\mu$m to about 28 $\mu$m, or from about 27 $\mu$m to about 29 $\mu$m.

It will be appreciated that, throughout this specification and the appended claims, unless stated otherwise, the elemental composition of a glass, mineral or mixture is expressed in terms of the oxide equivalents of the elements present, as is standard in the field. For example, the composition of a glass, mineral or mixture containing silicon, aluminium, iron, calcium, magnesium, potassium sodium and/or boron is expressed in terms of the equivalent content of $SiO_2$, $Al_2O_3$, $Fe_2O_3$, $CaO$, $MgO$, $K_2O$, $Na_2O$ and/or $B_2O_3$ respectively. The elemental composition of a glass, mineral or mixture may be determined using Energy Dispersive X-Ray Fluoresence (EDXRF), for example using the Xepos instrument available from SPECTRO A. I. GmbH. Similarly, the mineralogical content of a material may be determined using X-Ray Diffractometry, for example using a SIEMENS D5000 Diffractometer with Cu K$\alpha$1 (Ni filtered) radiation, in the 2$\theta$ range from 2° to 72° and a 0.02°/sec step.

The silicate glass may comprise no less than about 50 wt. %, for example, no less than about 60 wt. %, or no less than about 70 wt. %, or no less than about 75 wt. %, or no less than about 78 wt. %, of $SiO_2$. The silicate glass may comprise no greater than about 100 wt. %, for example, no greater than about 90 wt. %, or no greater than about 85 wt. %, or no greater than about 80 wt. %, or no greater than about 75 wt. %, or no greater than about 72 wt. %, of $SiO_2$. The silicate glass may comprise from about 50 wt. % to about 100 wt. %, for example, from about 60 wt. % to about 90 wt. %, or from about 70 wt. % to about 80 wt. %, or from about 70 wt. % to about 75 wt. %, or from about 70 wt. % to about 72 wt. %, or from about 75 wt. % to about 80 wt. %, or from about 78 wt. % to about 80 wt. %, of $SiO_2$. It may be that the silicate glass is soda-lime glass comprising from about 50 wt. % to about 95 wt. %, for example, from about 60 wt. % to about 90 wt. %, or from about 70 wt. % to about 80 wt. %, or from about 70 wt. % to about 75 wt. %, or from about 70 wt. % to about 72 wt. %, of $SiO_2$. It may be that the silicate glass is borosilicate glass comprising from 50 wt. % to about 95 wt. %, for example, from about 60 wt. % to about 90 wt. %, or from about 70 wt. % to about 80 wt. %, or from about 75 wt. % to about 80 wt. %, or from about 78 wt. % to about 80 wt. %, of $SiO_2$.

The silicate glass may comprise no less than about 0.1 wt. %, for example, no less than about 0.2 wt. %, or no less than about 0.3 wt. %, or no less than about 0.5 wt. %, or no less than about 1.0 wt. %, or no less than about 2.0 wt. %, or no less than about 3.0 wt. %, of $Al_2O_3$. The silicate glass may comprise no greater than about 10 wt. %, for example, no greater than about 8.0 wt. %, or no greater than about 6.0 wt. %, or no greater than about 5.0 wt. %, or no greater than about 4.0 wt. %, or no greater than about 3.5 wt. %, or no greater than about 3.0 wt. %, or no greater than about 2.0 wt. %, or no greater than about 1.0 wt. %, or no greater than about 0.5 wt. %, of $Al_2O_3$. The silicate glass may comprise from about 0.1 wt. % to about 10 wt. %, for example, from about 0.2 wt. % to about 8.0 wt. %, or from about 0.3 wt. % to about 6.0 wt. %, or from about 0.3 wt. % to about 0.5 wt. %, or from about 0.3 wt. % to about 0.4 wt. %, or from about 2 wt. % to about 6 wt. %, or from about 3 wt. % to about 4 wt. %, of $Al_2O_3$. It may be that the silicate glass is soda-lime glass comprising from about 0.1 wt. % to about 10 wt. %, for example, from about 0.2 wt. % to about 8.0 wt. %, or from about 0.3 wt. % to about 6.0 wt. %, or from about 0.3 wt. % to about 0.5 wt. %, or from about 0.3 wt. % to about 0.4 wt. %, of $Al_2O_3$. It may be that the silicate glass is borosilicate glass comprising from about 0.1 wt. % to about 10 wt. %, for example, from about 0.2 wt. % to about 8.0 wt. %, or from about 0.3 wt. % to about 6.0 wt. %, or from about 2 wt. % to about 6 wt. %, or from about 3 wt. % to about 4 wt. %, of $Al_2O_3$.

The silicate glass may comprise no less than about 0.001 wt. %, for example, no less than about 0.005 wt. %, or no less than about 0.01 wt. %, or no less than about 0.02 wt. %, or no less than about 0.03 wt. %, or no less than about 0.03 wt. %, or no less than about 0.04 wt. %, or no less than about 0.05 wt. %, or no less than about 0.06 wt. %, or no less than about 0.07 wt. %, or no less than about 0.08 wt. %, of $Fe_2O_3$. The silicate glass may comprise no greater than about 1.0 wt. %, for example, no greater than about 0.5 wt. %, or no greater than about 0.1 wt. %, or no greater than about 0.09 wt. %, or no greater than about 0.08 wt. %, or no greater than about 0.07 wt. %, or no greater than about 0.06 wt. %, of $Fe_2O_3$. The silicate glass may comprise from about 0.001 wt. % to about 1.0 wt. %, for example, from about 0.005 wt. % to about 0.5 wt. %, or from about 0.01 wt. % to about 0.1 wt. %, or from about 0.04 wt. % to about 0.08 wt. %, or from about 0.05 wt. % to about 0.07 wt. %, or from about 0.05 wt. % to about 0.1 wt. %, or from about 0.06 wt. % to about 0.1 wt. %, or from about 0.07 wt. % to about 0.09 wt. %, of $Fe_2O_3$. It may be that the silicate glass is soda-lime glass comprising from about 0.001 wt. % to about 1.0 wt. %, for example, from about 0.005 wt. % to about 0.5 wt. %, or from about 0.01 wt. % to about 0.1 wt. %, or from about 0.04 wt. % to about 0.08 wt. %, or from about 0.05 wt. % to about 0.07 wt. %, of $Fe_2O_3$. It may be that the silicate glass is borosilicate glass comprising from about 0.001 wt. % to about 1.0 wt. %, for example, from about 0.005 wt. % to about 0.5 wt. %, or from about 0.01 wt. % to about 0.1 wt. %, or from about 0.05 wt. % to about 0.1 wt. %, or from about 0.06 wt. % to about 0.1 wt. %, or from about 0.07 wt. % to about 0.09 wt. %, of $Fe_2O_3$.

The silicate glass may comprise no less than about 0.01 wt. %, for example, no less than about 0.05 wt. %, or no less than about 0.1 wt. %, or no less than about 0.15 wt. %, or no less than about 1 wt. %, or no less than about 5 wt. %, or no less than about 10 wt. %, or no less than about 11 wt. %, of CaO. The silicate glass may comprise no greater than about 20 wt. %, for example, no greater than about 15 wt. %, or no greater than about 13 wt. %, or no greater than about 10 wt. %, or no greater than about 5 wt. %, or no greater than about 1 wt. %, or no greater than about 0.5 wt. %, or no greater than about 0.2 wt. %, of CaO. The silicate glass may comprise from about 0.01 wt. % to about 20 wt. %, for example, from about 0.05 wt. %, to about 15 wt. %, or from about 0.1 wt. % to about 13 wt. %, or from about 10 wt. % to about 20 wt. %, or from about 10 wt. % to about 15 wt. %, or from about 11 wt. % to about 13 wt. %, or from about 0.05 wt. % to about 1 wt. %, or from about 0.1 wt. % to about 1 wt. %, or from about 0.1 wt. % to about 0.2 wt. %, of CaO. It may be that the silicate glass is soda-lime glass comprising from about 0.01 wt. % to about 20 wt. %, for example, from about 0.05 wt. %, to about 15 wt. %, or from about 0.1 wt. % to about 13 wt. %, or from about 10 wt. % to about 20 wt. %, or from about 10 wt. % to about 15 wt. %, or from about 11 wt. % to about 13 wt. %, of CaO. It may be that the silicate glass is borosilicate glass comprising from about 0.01 wt. % to about 20 wt. %, for example, from about 0.05 wt. %, to about 15 wt. %, or from about 0.1 wt. % to about 13 wt. %, or from about 0.05 wt. % to about 1 wt. %, or from about 0.1 wt. % to about 1 wt. %, or from about 0.1 wt. % to about 0.2 wt. %, of CaO.

The silicate glass may comprise no greater than about 10 wt. %, for example, no greater than about 5 wt. %, or no greater than about 3 wt. %, of MgO. The silicate glass may comprise no less than about 1 wt. %, for example, no less than about 2 wt. %, or no less than about 2.5 wt. %, of MgO. The silicate glass may comprise from about 1 wt. % to about 10 wt. %, for example, from about 2 wt. % to about 5 wt. %, or from about 2.5 wt. % to about 3 wt. %, of MgO. It may be that the silicate glass is soda-lime glass comprising from about 1 wt. % to about 10 wt. %, for example, from about 2 wt. % to about 5 wt. %, or from about 2.5 wt. % to about 3 wt. %, of MgO. It may be that the silicate glass contains substantially no MgO, i.e. the silicate glass may be substantially MgO-free. For example, it may be that the silicate glass comprises no greater than 0.1 wt. %, for example, no greater than 0.01 wt. %, or no greater than 0.001 wt. %, of MgO. It may be that the silicate glass is borosilicate glass containing substantially no MgO, e.g. comprising no greater than 0.1 wt. %, for example, no greater than 0.01 wt. %, or no greater than 0.001 wt. %, of MgO.

The silicate glass may comprise no less than about 0.001 wt. %, for example, no less than about 0.01 wt. %, or no less than about 0.04 wt. %, or no less than about 0.05 wt. %, or no less than about 0.1 wt. %, or no less than about 0.2 wt. %, or no less than about 0.3 wt. %, or no less than about 0.4 wt. %, of $K_2O$. The silicate glass may comprise no greater than about 5 wt. %, for example, no greater than about 1 wt. %, or no greater than about 0.5 wt. %, or no greater than about 0.45 wt. %, or no greater than about 0.2 wt. %, or no greater than about 0.1 wt. %, or no greater than about 0.06 wt. %, of $K_2O$. The silicate glass may comprise from about 0.001 wt. % to about 5 wt. %, for example, from about 0.01 wt. % to about 1 wt. %, or from about 0.04 wt. % to about 0.5 wt. %, or from about 0.04 wt. % to about 0.1 wt. %, or from about 0.04 wt. % to about 0.06 wt. %, or from about 0.1 wt. % to about 1 wt. %, or from about 0.2 wt. % to about 0.5 wt. %, or from about 0.4 wt. % to about 0.5 wt. %, of $K_2O$. It may be that the silicate glass is soda-lime glass comprising from about 0.001 wt. % to about 5 wt. %, for example, from about 0.01 wt. % to about 1 wt. %, or from about 0.04 wt. % to about 0.5 wt. %, or from about 0.04 wt. % to about 0.1 wt. %, or from about 0.04 wt. % to about 0.06 wt. %, of $K_2O$. It may be that the silicate glass is borosilicate glass comprising from about 0.01 wt. % to about 1 wt. %, or from about 0.04 wt. % to about 0.5 wt. %, or from about 0.1 wt. % to about 1 wt. %, or from about 0.2 wt. % to about 0.5 wt. %, or from about 0.4 wt. % to about 0.5 wt. %, of $K_2O$.

The silicate glass may comprise no less than about 1 wt. %, for example, no less than about 2 wt. %, or no less than about 3 wt. %, or no less than about 5 wt. %, or no less than about 10 w. %, or no less than about 11 wt. %, or no less than about 12 wt. %, of $Na_2O$. The silicate glass may comprise no greater than about 20 wt. %, for example, no greater than about 15 wt. %, or no greater than about 13 wt. %, or no greater than about 10 wt. %, or no greater than about 5 wt. %, or no greater than about 4 wt. %, of $Na_2O$. The silicate glass may comprise from about 1 wt. % to about 20 wt. %, for example, from about 2 wt. % to about 15 wt. %, or from about 3 wt. % to about 13 wt. %, or from about 10 wt. % to about 15 wt. %, or from about 11 wt. % to about 13 wt. %, or from about 12 wt. % to about 13 wt. %, or from about 1 wt. % to about 5 wt. %, or from about 2 wt. % to about 4 wt. %, of $Na_2O$. It may be that the silicate glass is soda-lime glass comprising from about 1 wt. % to about 20 wt. %, for example, from about 2 wt. % to about 15 wt. %, or from about 3 wt. % to about 13 wt. %, or from about 10 wt. % to about 15 wt. %, or from about 11 wt. % to about 13 wt. %, or from about 12 wt. % to about 13 wt. %, of $Na_2O$. It may be that the silicate glass is borosilicate glass comprising from about 1 wt. % to about 20 wt. %, for example, from about 2 wt. % to about 15 wt. %, or from about 3 wt. % to about 13 wt. %, or from about 1 wt. % to about 5 wt. %, or from about 2 wt. % to about 4 wt. %, of $Na_2O$.

The silicate glass may comprise no less than about 1 wt. %, for example, no less than about 5 wt. %, or no less than about 10 wt. %, or no less than about 13 wt. %, of $B_2O_3$. The silicate glass may comprise no greater than about 25 wt. %, for example, no greater than about 20 wt. %, or no greater than about 15 wt. %, or no greater than about 14 wt. %, of $B_2O_3$. The silicate glass may comprise from about 1 wt. % to about 25 wt. %, for example, from about 5 wt. % to about 20 wt. %, or from about 10 wt. % to about 15 wt. %, or from about 13 wt. % to about 14 wt. %, of $B_2O_3$. It may be that the silicate glass is borosilicate glass comprising from about 1 wt. % to about 25 wt. %, for example, from about 5 wt. % to about 20 wt. %, or from about 10 wt. % to about 15 wt. %, or from about 13 wt. % to about 14 wt. %, of $B_2O_3$.

The silicate glass may consist predominantly of $SiO_2$, $Al_2O_3$, $Fe_2O_3$, CaO, MgO, $K_2O$, $Na_2O$ and/or $B_2O_3$. The silicate glass may comprise at least 80 wt. %, for example, at least 90 wt. %, or at least 95 wt. %, or at least 98 wt. %, or at least 99 wt. %, of $SiO_2$, $Al_2O_3$, $Fe_2O_3$, CaO, MgO, $K_2O$, $Na_2O$ and/or $B_2O_3$. It may be that the silicate glass is soda-lime glass consisting predominantly of $SiO_2$, $Al_2O_3$, $Fe_2O_3$, CaO, MgO, $K_2O$ and $Na_2O$. It may be that the silicate glass is borosilicate glass consisting predominantly of $SiO_2$, $Al_2O_3$, $Fe_2O_3$, CaO, $K_2O$, $Na_2O$ and $B_2O_3$.

The silicate glass may comprise one or more elements or compounds in addition to $SiO_2$, $Al_2O_3$, $Fe_2O_3$, CaO, MgO, $K_2O$, $Na_2O$ and/or $B_2O_3$. The silicate glass may comprise no less than about 0.001 wt. %, for example, no less than about 0.01 wt. %, or no less than about 0.05 wt. %, or no less than about 0.1 wt. %, of water and/or volatile substances (i.e. substances which contribute to "loss on ignition" (LOI)). The silicate glass may comprise no greater than about 1 wt. %, for example, no greater than about 0.5 wt. %, or no greater than about 0.2 wt. %, or no greater than about 0.1 wt. %, of water and/or volatile substances (i.e. substances which contribute to "loss on ignition" (LOI)). The silicate glass may comprise from about 0.001 wt. % to about 1 wt. %, for example, from about 0.01 wt. % to about 0.5 wt. %, or from about 0.05 wt. % to about 0.2 wt. %, or from about 0.1 wt. % to about 0.2 wt. %, of water and/or volatile substances (i.e. substances which contribute to "loss on ignition" (LOI)).

Loss on ignition (LOI) of a material may be determined by heating a dried (i.e. moisture-free) and pulverized sample of the material up to 1050 °C for 1 hour and measuring the weight loss on heating.

It may be that the silicate glass is soda-lime glass comprising: from about 60 wt. % to about 80 wt. % $SiO_2$; from about 0.1 wt. % to about 1 wt. % of $Al_2O_3$; from about 0.01 wt. % to about 0.1 wt. % of $Fe_2O_3$; from about 5 wt. % to about 20 wt. % of CaO; from about 1 wt. % to about 5 wt. % of MgO; from about 0.01 wt. % to about 0.1 wt. % of $K_2O$; from about 5 wt. % to about 20 wt. % of $Na_2O$; and optionally from about 0.01 wt. % to about 0.5 wt. % of water and/or volatile substances (i.e. substances which contribute to "loss on ignition" (LOI)).

It may be that the silicate glass is borosilicate glass comprising: from about 70 wt. % to about 90 wt. % of $SiO_2$; from about 1 w.t % to about 10 wt. % of $Al_2O_3$; from about 0.01 wt. % to about 0.15 wt. % of $Fe_2O_3$; from about 0.05 wt. % to about 0.25 wt. % of CaO; from about 0.1 wt. % to about 1 wt. % of $K_2O$; from about 1 wt. % to about 5 wt. % of $Na_2O$; from about 5 wt. % to about 20 wt. % of $B_2O_3$; and optionally from about 0.01 wt. % to about 0.5 wt. % of water and/or volatile substances (i.e. substances which contribute to "loss on ignition" (LOI)).

The silicate material in the mixture may be a silicate mineral.

For the purposes of this specification, the term "mineral" is not limited to crystalline materials but also encompasses naturally-occurring glasses (e.g. volcanic glasses, such as obsidian or perlite), amorphous phases of minerals (e.g. metakaolin), sedimentary rocks (e.g. siliceous rocks), and fossilised biological matter (e.g. diatomaceous earth).

The silicate mineral in the mixture may be a naturally-occurring silicate mineral. The silicate mineral in the mixture may be a naturally-occurring silicate mineral which has undergone physical and/or chemical treatment, for example calcination or thermal treatment. Alternatively, the silicate mineral in the mixture may be a synthetic silicate mineral.

The silicate mineral may be an aluminosilicate mineral.

The silicate material may be a volcanic glass.

The volcanic glass may comprise no less than about 50 wt. %, for example, no less than about 60 wt. %, or no less than about 65 wt. %, or no less than about 70 wt. %, or no less than about 75 wt. %, of $SiO_2$. The volcanic glass may comprise no more than about 95 wt. %, for example, no more than about 90 wt. %, or no more than about 85 wt. %, or no more than about 80 wt. %, or no more than about 75 wt. %, or no more than about 70 wt. %, of $SiO_2$. The volcanic glass may comprise from about 50 wt. % to about 95 wt. %, for example, from about 60 wt. % to about 90 wt. %, or from about 60 wt. % to about 80 wt. %, or from about 60 wt. % to about 70 wt. %, or from about 70 wt. % to about 80 wt. %, of $SiO_2$.

The volcanic glass may comprise no less than about 5 wt. %, for example, no less than about 8 wt. %, or no less than about 10 wt. %, or no less than about 12 wt. %, of $Al_2O_3$. The volcanic glass may comprise no more than about 25 wt. %, for example, no more than about 20 wt. %, or no more than about 15 wt. %, or more than about 12 wt. %, of $Al_2O_3$. The volcanic glass may comprise from about 5 wt. % to about 25 wt. %, for example, from about 8 wt. % to about 20 wt. %, for example from about 8 wt. % to about 12 wt. %, or from about 12 wt. % to about 15 wt. %, of $Al_2O_3$.

The volcanic glass may comprise no less than about 0.5 wt. %, for example, no less than about 1 wt. %, or no less than about 2 wt. %, of $Fe_2O_3$. The volcanic glass may comprise no greater than about 5 wt. %, for example, no greater than about 3 wt. %, or no greater than about 2 wt. %, of $Fe_2O_3$. The volcanic glass may comprise from about 0.5 wt. % to about 5 wt. %, for example, from about 1 wt. % to about 3 wt. %, or from about 2 wt. % to about 3 wt. %, or from about 1 wt. % to about 2 wt. %, of $Fe_2O_3$.

The volcanic glass may comprise no less than about 0.5 wt. %, for example, no less than about 0.8 wt. %, of CaO. The volcanic glass may comprise no greater than about 5 wt. %, for example, no greater than about 3 wt. %, or no greater than about 2 wt. %, of CaO. The volcanic glass may comprise from about 0.5 wt. % to about 5 wt. %, for example, from about 0.8 wt. % to about 3 wt. %, or from about 0.8 wt. % to about 2 wt. %, of CaO.

The volcanic glass may comprise no less than about 0.05 wt. %, for example, no less than about 0.1 wt. %, or no less than about 0.2 wt. %, or no less than about 0.5 wt. %, or no less than about 1 wt. %, or no less than about 1.2 wt. %, of MgO. The volcanic glass may comprise no more than about 10 wt. %, for example, no more than about 5 wt. %, or no more than about 2 wt. %, or no more than about 1 wt. %, or no more than about 0.5 wt. %, or no more than about 0.3 wt. %, of MgO. The volcanic glass may comprise from about 0.05 wt. % to about 10 wt. %, for example, from about 0.1 wt. % to about 5 wt. %, or from about 0.2 wt. % to about 2 wt. %, or from about 0.2 wt. % to about 1 wt. %, or from about 0.2 wt. % to about 0.5 wt. %, or from about 0.2 wt. % to about 0.3 wt. %, or from about 1 wt. % to about 5 wt. %, or from about 1 wt. % to about 2 wt. %, of MgO.

The volcanic glass may comprise no less than about 1 wt. %, for example, no less than about 2 wt. %, or no less than about 3 wt. %, or no less than about 4 wt. %, of $K_2O$. The volcanic glass may comprise no greater than about 10 wt. %, for example, no greater than about 8 wt. %, or no greater than about 6 wt. %, or no greater than about 5 wt. %, of $K_2O$. The volcanic glass may comprise from about 1 wt. % to about 10 wt. %, for example, from about 2 wt. % to about 8 wt. %, or from about 3 wt. % to about 6 wt. %, or from about 4 wt. % to about 5 wt. %, of $K_2O$.

The volcanic glass may comprise no less than about 1 wt. %, for example, no less than about 2 wt. %, or no less than about 3 wt. %, of $Na_2O$. The volcanic glass may comprise no greater than about 10 wt. %, for example, no greater than about 8 wt. %, or no greater than about 6 wt. %, or no greater than about 4 wt. %, of $Na_2O$. The volcanic glass may comprise from about 1 wt. % to about 10 wt. %, for example, from about 2 wt. % to about 8 wt. %, or from about 3 wt. % to about 6 wt. %, or from about 3 wt. % to about 4 wt. %, of $Na_2O$.

The volcanic glass may comprise substantially no $B_2O_3$. For example, the volcanic glass may comprise less than 1 wt. %, for example, less than 0.1 wt. %, or less than 0.01 wt. %, of $B_2O_3$.

The volcanic glass may comprise no less than about 1 wt. %, for example, no less than about 2 wt. %, or no less than about 2.5 wt. %, or no less than about 3 wt. %, or no less than about 4 wt. %, or no less than about 5 wt. %, of chemically bound water and/or volatile substances (i.e. substances which contribute to "loss on ignition" (LOI)). The volcanic glass may comprise no greater than about 10 wt. %, for example, no greater than about 8 wt. %, or no greater than about 6 wt. %, or no greater than about 4 wt. %, or no greater than about 3 wt. %, of chemically bound water and/or volatile substances (i.e. substances which contribute to "loss on ignition" (LOI)). The volcanic glass may comprise from about 1 wt. % to about 10 wt. %, for example, from about 2 wt. % to about 8 wt. %, or from about 2 wt. % to about 6 wt. %, or from about 2 wt. % to about 3 wt. %, or from about 5 wt. % to about 6 wt. %, of chemically bound water and/or volatile substances (i.e. substances which contribute to "loss on ignition" (LOI)).

The volcanic glass may comprise: from about 70 wt. % to about 80 wt. % of $SiO_2$; from about 5 wt. % to about 15 wt. % of $Al_2O_3$; from about 0.5 wt. % to about 1.5 wt. % of $Fe_2O_3$; from about 0.5 wt. % to about 2 wt. % of CaO; from about 0.05 wt. % to about 1 wt. % of MgO; from about 1 wt. % to about 10 wt. % of $K_2O$; from about 1 wt. % to about 8 wt. % of $Na_2O$; from about 1 wt. % to about 5 wt. % of chemically bound water and/or volatile substances (i.e. substances which contribute to "loss on ignition" (LOI)); and optionally less than about 1 wt. % of $B_2O_3$.

The volcanic glass may comprise: from about 65 wt. % to about 75 wt. % of $SiO_2$; from about 8 wt. % to about 17 wt. % of $Al_2O_3$; from about 1 wt. % to about 5 wt. % of $Fe_2O_3$; from about 0.5 wt. % to about 2 wt. % of CaO; from about 0.5 wt. % to about 5 wt. % of MgO; from about 1 wt. % to about 10 wt. % of $K_2O$; from about 1 wt. % to about 8 wt. % of $Na_2O$; from about 3 wt. % to about 8 wt. % of chemically bound water and/or volatile substances (i.e. substances which contribute to "loss on ignition" (LOI)); and optionally less than about 1 wt. % of $B_2O_3$.

The volcanic glass may have a $d_{50}$ of no less than about 1 μm, for example, no less than about 3 μm, or no less than about 5 μm, or no less than about 6 μm, or no less than about 10 μm, or no less than about 20 μm, or no less than about 25 μm, or no less than about 30 μm. The volcanic glass may have a dso of no greater than about 250 μm, for example, no greater than about 200 μm, or no greater than about 150 μm, or no greater than about 100 μm, or no greater than about 80 μm, or no greater than about 60 μm, or no greater than about 50 μm, or no greater than about 40 μm, or no greater than about 35 μm, or no greater than about 30 μm, or no greater than about 15 μm, or no greater than about 10 μm, or no greater than about 8 μm, or no greater than about 7 μm. The volcanic glass may have a dso of from about 1 μm to about 250 μm, for example, from about 1 μm to about 200 μm, or from about 1 μm to about 150 μm, or from about 1 μm to about 100 ,pm, or from about 1 μm to about 80 μm, or from about 1 μm to about 60 μm, or from about 1 μm to about 50 μm, from about 3 μm to about 40 μm, or from about 5 μm to about 35 μm, or from about 5 μm to about 10 μm, or from about 5 μm to about 8 μm, or from about 6 μm to about 7 μm, or from about 20 μm to

about 40 μm, or from about 25 μm to about 35 μm.

The silicate material (e.g. the silicate glass or silicate mineral) may be a perlitic material. The perlitic material may be perlite. The perlitic material may be naturally occurring perlite, for example naturally occurring perlite ore. Naturally occurring perlite is an amorphous volcanic glass formed predominantly from silicon dioxide, typically in combination with aluminium oxide, sodium oxide, potassium oxide, iron oxide, magnesium oxide and/or calcium oxide. Perlite may be formed naturally by the hydration of obsidian. The perlitic material may contain small quantities of crystalline phases, such as biotite, quartz, cristobalite, feldspars or hydroxysodalite.

The perlitic material may be unexpanded perlite, for example unexpanded natural perlite ore. The unexpanded perlite, for example unexpanded natural perlite ore, may have a water content of greater than about 2 wt. %. The unexpanded perlite, for example unexpanded natural perlite ore, may be unexpanded perlite, for example unexpanded natural perlite ore, derived from natural perlite ore tailings. That is to say, the unexpanded perlite may be the perlitic material (i.e. by-product) which is left over after a more valuable fraction has been removed from unexpanded natural perlite ore. The natural perlite ore tailings may be derived from different stages of perlite ore processing.

The perlitic material (e.g. the unexpanded natural perlite ore) may comprise no less than about 50 wt. %, for example, no less than about 60 wt. %, or no less than about 65 wt. %, or no less than about 70 wt. %, or no less than about 75 wt. %, of $SiO_2$. The perlitic material (e.g. the unexpanded natural perlite ore) may comprise no more than about 95 wt. %, for example, no more than about 90 wt. %, or no more than about 85 wt. %, or no more than about 80 wt. %, or no more than about 75 wt. %, or no more than about 70 wt. %, of $SiO_2$. The perlitic material (e.g. the unexpanded natural perlite ore) may comprise from about 50 wt. % to about 95 wt. %, for example, from about 60 wt. % to about 90 wt. %, or from about 60 wt. % to about 80 wt. %, or from about 60 wt. % to about 70 wt. %, or from about 70 wt. % to about 80 wt. %, of $SiO_2$.

The perlitic material (e.g. the unexpanded natural perlite ore) may comprise no less than about 5 wt. %, for example, no less than about 8 wt. %, or no less than about 10 wt. %, or no less than about 12 wt. %, of $Al_2O_3$. The perlitic material (e.g. the unexpanded natural perlite ore) may comprise no more than about 25 wt. %, for example, no more than about 20 wt. %, or no more than about 15 wt. %, or more than about 12 wt. %, of $Al_2O_3$. The perlitic material (e.g. the unexpanded natural perlite ore) may comprise from about 5 wt. % to about 25 wt. %, for example, from about 8 wt. % to about 20 wt. %, for example from about 8 wt. % to about 12 wt. %, or from about 12 wt. % to about 15 wt. %, of $Al_2O_3$.

The perlitic material (e.g. the unexpanded natural perlite ore) may comprise no less than about 0.5 wt. %, for example, no less than about 1 wt. %, or no less than about 2 wt. %, of $Fe_2O_3$. The perlitic material (e.g. the unexpanded natural perlite ore) may comprise no greater than about 5 wt. %, for example, no greater than about 3 wt. %, or no greater than about 2 wt. %, of $Fe_2O_3$. The perlitic material (e.g. the unexpanded natural perlite ore) may comprise from about 0.5 wt. % to about 5 wt. %, for example, from about 1 wt. % to about 3 wt. %, or from about 2 wt. % to about 3 wt. %, or from about 1 wt. % to about 2 wt. %, of $Fe_2O_3$.

The perlitic material (e.g. the unexpanded natural perlite ore) may comprise no less than about 0.5 wt. %, for example, no less than about 0.8 wt. %, of CaO. The perlitic material (e.g. the unexpanded natural perlite ore) may comprise no greater than about 5 wt. %, for example, no greater than about 3 wt. %, or no greater than about 2 wt. %, of CaO. The perlitic material (e.g. the unexpanded natural perlite ore) may comprise from about 0.5 wt. % to about 5 wt. %, for example, from about 0.8 wt. % to about 3 wt. %, or from about 0.8 wt. % to about 2 wt. %, of CaO.

The perlitic material (e.g. the unexpanded natural perlite ore) may comprise no less than about 0.05 wt. %, for example, no less than about 0.1 wt. %, or no less than about 0.2 wt. %, or no less than about 0.5 wt. %, or no less than about 1 wt. %, or no less than about 1.2 wt. %, of MgO. The perlitic material (e.g. the unexpanded natural perlite ore) may comprise no more than about 10 wt. %, for example, no more than about 5 wt. %, or no more than about 2 wt. %, or no more than about 1 wt. %, or no more than about 0.5 wt. %, or no more than about 0.3 wt. %, of MgO. The perlitic material (e.g. the unexpanded natural perlite ore) may comprise from about 0.05 wt. % to about 10 wt. %, for example, from about 0.1 wt. % to about 5 wt. %, or from about 0.2 wt. % to about 2 wt. %, or from about 0.2 wt. % to about 1 wt. %, or from about 0.2 wt. % to about 0.5 wt. %, or from about 0.2 wt. % to about 0.3 wt. %, or from about 1 wt. % to about 5 wt. %, or from about 1 wt. % to about 2 wt. %, of MgO.

The perlitic material (e.g. the unexpanded natural perlite ore) may comprise no less than about 1 wt. %, for example, no less than about 2 wt. %, or no less than about 3 wt. %, or no less than about 4 wt. %, of $K_2O$. The perlitic material (e.g. the unexpanded natural perlite ore) may comprise no greater than about 10 wt. %, for example, no greater than about 8 wt. %, or no greater than about 6 wt. %, or no greater than about 5 wt. %, of $K_2O$. The perlitic material (e.g. the unexpanded natural perlite ore) may comprise from about 1 wt. % to about 10 wt. %, for example, from about 2 wt. % to about 8 wt. %, or from about 3 wt. % to about 6 wt. %, or from about 4 wt. % to about 5 wt. %, of $K_2O$. The perlitic material (e.g. the unexpanded natural perlite ore) may comprise no less than about 1 wt. %, for example, no less than about 2 wt. %, or no less than about 3 wt. %, of $Na_2O$. The perlitic material (e.g. the unexpanded natural perlite ore) may comprise no greater than about 10 wt. %, for example, no greater than about 8 wt. %, or no greater than about 6 wt. %, or no greater than about 4 wt. %, of $Na_2O$. The perlitic material (e.g. the unexpanded natural perlite ore) may comprise from about 1 wt. % to about 10 wt. %, for example, from about 2 wt. % to about 8 wt. %, or from about 3 wt. % to about 6 wt. %, or from about 3 wt. % to about 4 wt. %, of $Na_2O$.

The perlitic material (e.g. the unexpanded natural perlite ore) may comprise substantially no $B_2O_3$. For example, the perlitic material (e.g. the unexpanded natural perlite ore) may comprise less than 1 wt. %, for example, less than 0.1 wt. %, or less than 0.01 wt. %, of $B_2O_3$.

The perlitic material (e.g. the unexpanded natural perlite ore) may comprise no less than about 1 wt. %, for example, no less than about 2 wt. %, or no less than about 2.5 wt. %, or no less than about 3 wt. %, or no less than about 4 wt. %, or no less than about 5 wt. %, of chemically bound water and/or volatile substances (i.e. substances which contribute to "loss on ignition" (LOI)). The perlitic material (e.g. the unexpanded natural perlite ore) may comprise no greater than about 10 wt. %, for example, no greater than about 8 wt. %, or no greater than about 6 wt. %, or no greater than about 4 wt. %, or no greater than about 3 wt. %, of chemically bound water and/or volatile substances (i.e. substances which contribute to "loss on ignition" (LOI)). The perlitic material (e.g. the unexpanded natural perlite ore) may comprise from about 1 wt. % to about 10 wt. %, for example, from about 2 wt. % to about 8 wt. %, or from about 2 wt. % to about 6 wt. %, or from about 2 wt. % to about 3 wt. %, or from about 5 wt. % to about 6 wt. %, of chemically bound water and/or volatile substances (i.e. substances which contribute to "loss on ignition" (LOI)).

The perlitic material (e.g. the unexpanded natural perlite ore) may comprise: from about 70 wt. % to about 80 wt. % of $SiO_2$; from about 5 wt. % to about 15 wt. % of $Al_2O_3$; from about 0.5 wt. % to about 1.5 wt. % of $Fe_2O_3$; from about 0.5 wt. % to about 2 wt. % of CaO; from about 0.05 wt. % to about 1 wt. % of MgO; from about 1 wt. % to about 10 wt. % of $K_2O$; from about 1 wt. % to about 8 wt. % of $Na_2O$; from about 1 wt. % to about 5 wt. % of chemically bound water and/or volatile substances (i.e. substances which contribute to "loss on ignition" (LOI)); and optionally less than about 1 wt. % of $B_2O_3$. The perlitic material (e.g. the unexpanded natural perlite ore) may comprise: from about 65 wt. % to about 75 wt. % of $SiO_2$; from about 8 wt. % to about 17 wt. % of $Al_2O_3$; from about 1 wt. % to about 5 wt. % of $Fe_2O_3$; from about 0.5 wt. % to about 2 wt. % of CaO; from about 0.5 wt. % to about 5 wt. % of MgO; from about 1 wt. % to about 10 wt. % of $K_2O$; from about 1 wt. % to about 8 wt. % of $Na_2O$; from about 3 wt. % to about 8 wt. % of chemically bound water and/or volatile substances (i.e. substances which contribute to "loss on ignition" (LOI)); and optionally less than about 1 wt. % of $B_2O_3$.

The perlitic material (e.g. the unexpanded natural perlite ore) may have a $d_{50}$ of no less than about 1 $\mu$m, for example, no less than about 3 $\mu$m, or no less than about 5 $\mu$m, or no less than about 6 $\mu$m, or no less than about 10 $\mu$m, or no less than about 20 $\mu$m, or no less than about 25 $\mu$m, or no less than about 30 $\mu$m. The perlitic material (e.g. the unexpanded natural perlite ore) may have a $d_{50}$ of no greater than about 250 $\mu$m, for example, no greater than about 200 $\mu$m, or no greater than about 150 $\mu$m, or no greater than about 100 $\mu$m, or no greater than about 80 $\mu$m, or no greater than about 60 $\mu$m, or no greater than about 50 $\mu$m, or no greater than about 40 $\mu$m, or no greater than about 35 $\mu$m, or no greater than about 30 $\mu$m, or no greater than about 15 $\mu$m, or no greater than about 10 $\mu$m, or no greater than about 8 $\mu$m, or no greater than about 7 $\mu$m. The perlitic material (e.g. the unexpanded natural perlite ore) may have a $d_{50}$ of from about 1 $\mu$m to about 250 $\mu$m, for example, from about 1 $\mu$m to about 200 $\mu$m, or from about 1 $\mu$m to about 150 $\mu$m, or from about 1 $\mu$m to about 100 $\mu$m, or from about 1 $\mu$m to about 80 $\mu$m, or from about 1 $\mu$m to about 60 $\mu$m, or from about 1 $\mu$m to about 50 $\mu$m, from about 3 $\mu$m to about 40 $\mu$m, or from about 5 $\mu$m to about 35 $\mu$m, or from about 5 $\mu$m to about 10 $\mu$m, or from about 5 $\mu$m to about 8 $\mu$m, or from about 6 $\mu$m to about 7 $\mu$m, or from about 20 $\mu$m to about 40 $\mu$m, or from about 25 $\mu$m to about 35 $\mu$m.

The silicate material (e.g. the silicate mineral) may be a phyllosilicate mineral. The phyllosilicate mineral may be a clay mineral, i.e a hydrous aluminium phyllosilicate mineral. The silicate materials (e.g. the silicate mineral) may be selected from: halloysite, kaolinite, illite, montmorillonite, nontronite, beidellite, vermiculite, talc, sepiolite, palygorskite, pyrophyllite. The silicate material (e.g. the silicate mineral) may be kaolin, for example calcined kaolin (i.e. metakaolin). The silicate material (e.g. the silicate mineral) may be bentonite or any other smectite-containing clay mineral. The silicate material (e.g. the silicate mineral) may be bentonite tailings, such as Na-bentonite tailings or Ca-bentonite tailings.

The silicate material (e.g. the silicate mineral) may be diatomaceous earth or a diatomaceous earth containing mineral, for example a mineral containing both diatomaceous earth and a clay mineral (in any relative proportions).

The silicate material (e.g. the silicate salt, the silicate glass or the silicate mineral) may comprise no less than about 30 wt. %, for example, no less than about 40 wt. %, or no less than about 50 wt. %, or no less than about 60 wt. %, of $SiO_2$. The silicate material (e.g. the silicate salt, the silicate glass or the silicate mineral) may comprise up to about 100 wt. %, for example, no greater than about 99 wt. %, or no greater than about 95 wt. %, or no greater than about 90 wt. %, or no greater than about 85 wt. %, or no greater than about 80 wt. %, or no greater than about 70 wt. %, or no greater than about 60 wt. %, of $SiO_2$. The silicate material (e.g. the silicate salt, the silicate glass or the silicate mineral) may comprise from about 30 wt. % to about 100 wt. %, for example, from about 40 wt. % to about 99 wt. %, or from about 50 wt. % to about 95 wt. %, or from about 60 wt. % to about 90 wt. %, or from about 60 wt. % to about 85 wt. %, of $SiO_2$.

The silicate material (e.g. the silicate salt, the silicate glass or the silicate mineral) may comprise no less than about 0.1 wt. %, for example, no less than about 0.5 wt. %, or no less than about 1 wt. %, or no less than about 2 wt. %, of $Na_2O$. The silicate material (e.g. the silicate salt, the silicate glass or the silicate mineral) may comprise no greater than about 40 wt. %, for example, no greater than about 30 wt. %, or no greater than about 20 wt. %, or no greater than about 15 wt. %, of $Na_2O$. The silicate material (e.g. the silicate salt, the silicate glass or the silicate mineral) may comprise from about 0.1 wt. % to about 40 wt. %, for example, from about 0.5 wt. % to about 30 wt. %, or from about 1 wt. % to about 30 wt. %, or from about 2 wt. % to about 15 wt. %, of $Na_2O$.

The silicate material (e.g. the silicate salt, the silicate glass or the silicate mineral) may comprise substantially 0 wt. % of $K_2O$. The silicate material (e.g. the silicate salt, the silicate glass or the silicate mineral) may comprise no less than about 0.01 wt. % of $K_2O$. The silicate material (e.g. the silicate salt, the silicate glass or the silicate mineral) may comprise no greater than about 20 wt. %, for example, no greater than about 15 wt. %, or no greater than about 10 wt. %, or no greater than about 6 wt. %, of $K_2O$. The silicate material (e.g. the silicate salt, the silicate glass or the silicate mineral) may comprise from about 0 wt. % to about 20 wt. %, for example, from about 0 wt. % to about 15 wt. %, or from about 0.01 wt. % to about 10 wt. %, or from about 0.01 wt. % to about 6 wt. %, of $K_2O$.

The silicate material (e.g. the silicate salt, the silicate glass or the silicate mineral) may comprise substantially 0 wt. % of CaO. The silicate material (e.g. the silicate salt, the silicate glass or the silicate mineral) may comprise no less than about 0.05 wt. % of CaO. The silicate material (e.g. the silicate salt, the silicate glass or the silicate mineral) may comprise no greater than about 20 wt. %, for example, no greater than about 15 wt. %, of CaO. The silicate material (e.g. the silicate salt, the silicate glass or the silicate mineral) may comprise from about 0 wt. % to about 20 wt. %, for example, from about 0.05 wt. % to about 15 wt. %, of CaO.

The silicate material (e.g. the silicate salt, the silicate glass or the silicate mineral) may comprise substantially 0 wt. % of $Al_2O_3$. The silicate material (e.g. the silicate salt, the silicate glass or the silicate mineral) may comprise no less than about 0.1 wt. % of $Al_2O_3$. The silicate material (e.g. the silicate salt, the silicate glass or the silicate mineral) may comprise no greater than about 20 wt. %, for example, no greater than about 15 wt. %, of $Al_2O_3$. The silicate material (e.g. the silicate salt, the silicate glass or the silicate mineral) may comprise from about 0 wt. % to about 20 wt. %, for example, from about 0.1 wt. % to about 15 wt. %, of $Al_2O_3$.

The silicate material (e.g. the silicate salt, the silicate glass or the silicate mineral) may comprise substantially 0 wt. % of $B_2O_3$. The silicate material (e.g. the silicate salt, the silicate glass or the silicate mineral) may comprise no less than about 0.01 wt. %, for example, no less than about 0.05 wt. %, or no less than about 0.1 wt. %, of $B_2O_3$. The silicate material (e.g. the silicate salt, the silicate glass or the silicate mineral) may comprise no greater than about 20 wt. %, for example, no greater than about 15 wt. %, or no greater than about 10 wt. %, of $B_2O_3$. The silicate material (e.g. the silicate salt, the silicate glass or the silicate mineral) may comprise from about 0 wt. % to about 20 wt. %, for example, from about 0 wt. % to about 15 wt. %, or from about 0.01 wt. % to about 10 wt. %, or from about 0.1 wt. % to about 10 wt. %, of $B_2O_3$.

The silicate material (e.g. the silicate salt, the silicate glass or the silicate mineral) may comprise substantially 0 wt. % of PbO. The silicate material (e.g. the silicate salt, the silicate glass or the silicate mineral) may comprise no less than about 0.01 wt. %, for example, no less than about 0.05 wt. %, or no less than about 0.1 wt. %, of PbO. The silicate material (e.g. the silicate salt, the silicate glass or the silicate mineral) may comprise no greater than about 20 wt. %, for example, no greater than about 15 wt. %, or no greater than about 10 wt. %, of PbO. The silicate material (e.g. the silicate salt, the silicate glass or the silicate mineral) may comprise from about 0 wt. % to about 20 wt. %, for example, from about 0 wt. % to about 15 wt. %, or from about 0.01 wt. % to about 10 wt. %, or from about 0.1 wt. % to about 10 wt. %, of PbO.

The silicate material (e.g. the silicate salt, the silicate glass or the silicate mineral) may comprise substantially 0 wt. % of MgO. The silicate material (e.g. the silicate salt, the silicate glass or the silicate mineral) may comprise no less than about 0.01 wt. %, for example, no less than about 0.05 wt. %, or no less than about 0.1 wt. %, of MgO. The silicate material (e.g. the silicate salt, the silicate glass or the silicate mineral) may comprise no greater than about 10 wt. %, for example, no greater than about 5 wt. %, or no greater than about 2 wt. %, of MgO. The silicate material (e.g. the silicate salt, the silicate glass or the silicate mineral) may comprise from about 0 wt. % to about 10 wt. %, for example, from about 0 wt. % to about 5 wt. %, or from about 0.01 wt. % to about 2 wt. %, or from about 0.1 wt. % to about 2 wt. %, of MgO.

The silicate material (e.g. the silicate salt, the silicate glass or the silicate mineral) may comprise substantially 0 wt. % of BaO. The silicate material (e.g. the silicate salt, the silicate glass or the silicate mineral) may comprise no less than about 0.01 wt. %, for example, no less than about 0.05 wt. %, or no less than about 0.1 wt. %, of BaO. The silicate material (e.g. the silicate salt, the silicate glass or the silicate mineral) may comprise no greater than about 10 wt. %, for example, no greater than about 5 wt. %, or no greater than about 2 wt. %, of BaO. The silicate material (e.g. the silicate salt, the silicate glass or the silicate mineral) may comprise from about 0 wt. % to about 10 wt. %, for example, from about 0 wt. % to about 5 wt. %, or from about 0.01 wt. % to about 2 wt. %, or from about 0.1 wt. % to about 2 wt. %, of BaO.

The silicate material (e.g. the silicate salt, the silicate glass or the silicate mineral) may comprise: from about 50 wt. % to about 95 wt. %, for example, from about 60 wt. % to about 85 wt. %, of $SiO_2$; from about 1 wt. % to about 30 wt. %, for example, from about 2 wt. % to about 15 wt. %, of $Na_2O$; from about 0 wt. % to about 15 wt. %, for example, from about 0.01 wt. % to about 6 wt. %, of $K_2O$; from about 0 wt. % to about 20 wt. %, for example, from about 0.05 wt. % to about 15 wt. %, of CaO; from about 0 wt. % to about 20 wt. %, for example, from about 0.1 wt. % to about 15 wt. %, of $Al_2O_3$; no greater than about 20 wt. %, for example, less than about 15 wt. %, of $B_2O_3$; no greater than about 20 wt. %, for example, less than about 15 wt. %, of PbO; no greater than about 10 wt. %, for example, less than about 5 wt. %, of MgO; and no greater than about 10 wt. %, for example, less than about 5 wt. %, of BaO.

The silicate material may be crystalline. Alternatively, the silicate material may be amorphous. The silicate material may comprise no less than 25 wt. %, for example, no less than about 50 wt. %, or no less than about 75 wt. %, or no less than about 90 wt. %, amorphous material. For example, the silicate material may comprise from about 25 wt. % to about 100 wt. %, for example, from about 50 wt. % to about 100 wt. %, or from about 75 wt. % to about 100 wt. %, or from about 90 wt. % to about 100 wt. %, amorphous material.

*Alkali compound*

An alkali compound is a compound of an alkali metal or an alkaline earth metal. Accordingly, the alkali compound may be an alkali metal compound or an alkaline earth metal compound.

The alkali compound may be an alkali salt. An alkali salt is a basic salt of an alkali metal or an alkaline earth metal. Accordingly, the alkali salt may be an alkali metal salt or an alkaline earth metal salt. The alkali salt may be a hydroxide, carbonate or silicate salt of an alkali metal or an alkaline earth metal, i.e. the alkali salt may be an alkali hydroxide, an alkali carbonate or an alkali silicate. The alkali salt may be an alkali metal hydroxide, an alkali metal carbonate or an alkali metal silicate. The alkali salt may be selected from: sodium hydroxide (NaOH), lithium hydroxide (LiOH), potassium hydroxide (KOH), sodium carbonate ($Na_2CO_3$), lithium carbonate ($Li_2CO_3$), potassium carbonate ($Na_2CO_3$), sodium silicate ($Na_2SiO_3$, $Na_4SiO_4$ or $Na_6Si_2O_7$), lithium silicate ($Li_2SiO_3$, $Lia_4SiO_4$ or $Lia_6Si_2O_7$), potassium silicate ($K_2SiO_3$, $K_4SiO_4$ or $K_6Si_2O_7$).

In certain embodiments, the alkali salt is a sodium salt, such as sodium hydroxide.

In certain embodiments, the alkali salt is a lithium salt, such as lithium hydroxide.

In certain embodiments, the alkali salt is a mixture of sodium salt and lithium salt, for example, a mixture of sodium hydroxide and lithium hydroxide. It may be that the ratio of wt. % sodium salt to wt. % lithium salt in the mixture is no less than about 1, for example, no less than about 1.5. It may be that the ratio of wt. % of sodium salt to wt. % of lithium salt in the mixture is no greater than about 20, for example, no greater than about 15, or no greater than about 10. It may be that the ratio of wt. % of sodium salt to wt. % of lithium salt in the mixture is from about 1 to about 20, for example, from about 1.5 to about 15, or from about 1.5 to about 10. For example, it may be that the ratio of wt. % sodium hydroxide to wt. % lithium hydroxide in the mixture is no less than about 1, for example, no less than about 1.5. It may be that the ratio of wt. % of sodium hydroxide to wt. % of lithium hydroxide in the mixture is no greater than about 20, for example, no greater than about 15, or no greater than about 10. It may be that the ratio of wt. % of sodium hydroxide to wt. % of lithium hydroxide in the mixture is from about 1 to about 20, for example, from about 1.5 to about 15, or from about 1.5 to about 10. Accordingly, the alkali salt may be described as a mixed alkali salt, for example a sodium/lithium salt or a sodium/potassium salt such as sodium/lithium silicate or sodium/potassium silicate.

*Water*

The water in the mixture may contain one or more impurities such as dissolved minerals. The water in the mixture may comprise no less than about 95 wt. %, for example, no less than about 96 wt. %, or no less than about 97 wt. %, or no less than about 98 wt. %, or no less than about 99 wt. %, or no less than about 99.5 wt. %, of $H_2O$. The water in the mixture may comprise substantially 100 wt. % $H_2O$. The water in the mixture may comprise no greater than about 99.999 wt. %, for example, no greater than about 99.99 wt. %, or no greater than about 99.9 wt. %, or no greater than about 99.5 wt. %, or no greater than about 99 wt. %, of $H_2O$. The water in the mixture may comprise from about 95 wt. % to about 100 wt. %, for example, from about 96 wt. % to about 99.999 wt. %, or from about 98 wt. % to about 99.99 wt. %, or from about 99 wt. % to about 99.9 wt. %, or from about 95 wt. % to about 99.5 wt. %, or from about 95 wt. % to about 99 wt. %, of $H_2O$.

*Reactive silica*

The mixture may comprise reactive silica in addition to the silicate material. The reactive silica, where present, has a different chemical composition and/or physical structure (e.g. crystalline, microcrystalline, nanocrystalline or amorphous phase, microstructure, particle morphology or shape) from the silicate material.

The reactive silica may be a high-surface-area (i.e. particulate) form of silica. For example, the reactive silica may have (e.g. comprise particles of silica having) a specific surface area (for example, a BET specific surface area) of no less than about 50 $m^2/g$, or no less than about 100 $m^2/g$, or no less than about 200 $m^2/g$, or no less than about 300

$m^2/g$. The reactive silica may have (e.g. comprise particles of silica having) a specific surface area (for example, a BET specific surface area) of no greater than about 1000 $m^2/g$, for example, no greater than about 800 $m^2/g$, or no greater than about 600 $m^2/g$. The reactive silica may have (e.g. comprise particles of silica having) a specific surface area (for example, a BET specific surface area) of from about 50 $m^2/g$ to about 1000 $m^2/g$, for example, from about 100 $m^2/g$ to about 1000 $m^2/g$, or from about 200 $m^2/g$ to about 1000 $m^2/g$, or from about 300 $m^2/g$ to about 1000 $m^2/g$, or from about 50 $m^2/g$ to about 800 $m^2/g$, or from about 200 $m^2/g$ to about 800 $m^2/g$, or from about 100 $m^2/g$ to about 800 $m^2/g$, or from about 300 $m^2/g$ to about 800 $m^2/g$, or from about 50 $m^2/g$ to about 600 $m^2/g$, or from about 600 $m^2/g$ to about 600 $m^2/g$, or from about 100 $m^2/g$ to about 600 $m^2/g$, or from about 300 $m^2/g$ to about 600 $m^2/g$.

The reactive silica may be a mid-surface-area (i.e. particulate) form of silica. For example, the reactive silica may have (e.g. comprise particles of silica having) a specific surface area (for example, a BET specific surface area) of no less than about 5 $m^2/g$, or no less than about 8 $m^2/g$, or no less than about 10 $m^2/g$, or no less than about 12 $m^2/g$, or no less than about 15 $m^2/g$. The reactive silica may have (e.g. comprise particles of silica having) a specific surface area (for example, a BET specific surface area) of no greater than about 100 $m^2/g$, for example, no greater than about 75 $m^2/g$, or no greater than about 50 $m^2/g$, or no greater than about 30 $m^2/g$. The reactive silica may have (e.g. comprise particles of silica having) a specific surface area (for example, a BET specific surface area) of from about 5 $m^2/g$ to about 100 $m^2/g$, for example, from about 8 $m^2/g$ to about 100 $m^2/g$, or from about 10 $m^2/g$ to about 100 $m^2/g$, or from about 12 $m^2/g$ to about 100 $m^2/g$, or from about 15 $m^2/g$ to about 100 $m^2/g$, or from about 5 $m^2/g$ to about 75 $m^2/g$, or from about 8 $m^2/g$ to about 75 $m^2/g$, or from about 10 $m^2/g$ to about 75 $m^2/g$, or from about 12 $m^2/g$ to about 75 $m^2/g$, or from about 15 $m^2/g$ to about 75 $m^2/g$, or from about 5 $m^2/g$ to about 50 $m^2/g$, or from about 8 $m^2/g$ to about 50 $m^2/g$, or from about 10 $m^2/g$ to about 50 $m^2/g$, or from about 12 $m^2/g$ to about 50 $m^2/g$, or from about 15 $m^2/g$ to about 50 $m^2/g$, or from about 5 $m^2/g$ to about 30 $m^2/g$, or from about 8 $m^2/g$ to about 30 $m^2/g$, or from about 10 $m^2/g$ to about 30 $m^2/g$, or from about 12 $m^2/g$ to about 30 $m^2/g$, or from about 15 $m^2/g$ to about 30 $m^2/g$.

The reactive silica may be a low-surface-area (i.e. particulate) form of silica. For example, the reactive silica may have (e.g. comprise particles of silica having) a specific surface area (for example, a BET specific surface area) of no less than about 1 $m^2/g$, or no less than about 2 $m^2/g$. The reactive silica may have (e.g. comprise particles of silica having) a specific surface area (for example, a BET specific surface area) of no greater than about 10 $m^2/g$, for example, no greater than about 5 $m^2/g$, or no greater than about 3 $m^2/g$. The reactive silica may have (e.g. comprise particles of silica having) a specific surface area (for example, a BET specific surface area) of from about 1 $m^2/g$ to about 10 $m^2/g$, for example, from about 1 $m^2/g$ to about 5 $m^2/g$, or from about 1 $m^2/g$ to about 3 $m^2/g$, or from about 2 $m^2/g$ to about 10 $m^2/g$, or from about 2 $m^2/g$ to about 5 $m^2/g$, or from about 2 $m^2/g$ to about 3 $m^2/g$.

The reactive silica may be predominantly (e.g. entirely) amorphous. The reactive silica may be (e.g. by volume) at least about 50 %, for example, at least about 60 %, or at least about 70 %, or at least about 80 %, or at least about 90 %, or at least about 95 %, amorphous.

The reactive silica may comprise (e.g. be) silica fume. Silica fume, also known as microsilica, is an amorphous polymorph of silicon dioxide. Silica fume may be provided in the form of a powder, for example a powder of spherical particles. The silica fume particles may have a $d_{50}$ of no less than about 10 nm, for example, no less than about 50 nm, or no less than about 100 nm, or no less than about 200 nm, or no less than about 500 nm. The silica fume particles may have a $d_{50}$ of no greater than about 5 $\mu$m, or no greater than about 1 $\mu$m, or no greater than about 900 nm, or no greater than about 800 nm, or no greater than about 600 nm, or no greater than about 500 nm, or no greater than about 400 nm, or no greater than about 300 nm, or no greater than about 200 nm. The silica fume particles may have a $d_{50}$ of from about 10 nm to about 5 $\mu$m, for example, from about 50 nm to about 1 $\mu$m, or from about 100 nm to about 500 nm, or from about 100 nm to about 200 nm.

Additionally or alternatively, the reactive silica may comprise (e.g. be) fumed silica. Fumed silica, also known as pyrogenic silica, comprises branched, chain-like agglomerations of amorphous silicon dioxide primary particles. The silicon dioxide primary particles may have a dso of no less than about 1 nm, or no less than about 5 nm, or no less than about 10 nm. The silicon dioxide primary particles may have a $d_{50}$ of no greater than about 1 $\mu$m, or no greater than about 500 nm, or no greater than about 100 nm, or no greater than about 50 nm. The silicon dioxide primary particles may have a $d_{50}$ of from about 1 nm to about 1 $\mu$m, for example from about 5 nm to about 500 nm, or from about 10 nm to about 100 nm, or from about 10 nm to about 50 nm.

Additionally or alternatively, the reactive silica may comprise (e.g. be) silica gel, natural volcanic glass, perlitic material or combusted organic matter, for example rice husk ash.

*Glass network-forming elements*

The mixture may comprise a glass network-forming element other than silicon. The glass network-forming element other than silicon in the mixture may be provided by the silicate material.

Glass network-forming elements are those elements whose oxides can spontaneously form covalently-bonded glass network structures (for example, meeting Zachariasen's rules for glass network formation). Glass network-forming elements include silicon, boron, germanium and phosphorous.

Accordingly, the glass network-forming element other than silicon present in the mixture may be boron. For example, the silicate material may be a silicate glass which is a boron-containing glass such as borosilicate glass. Additionally or alternatively, the mixture may comprise one or more other sources of boron, such as boric acid or one or more borates (for example, Borax, i.e. sodium borate).

Alternatively, the glass network-forming element other than silicon present in the mixture may be germanium. For example, the silicate material may be a silicate glass which is a germanium-containing glass such as silica-germania glass.

Alternatively, the glass network-forming element other than silicon present in the mixture may be phosphorous. For example, the silicate material may be a silicate glass which is a phosphorous-containing glass. Additionally or alternatively, the mixture may comprise one or more other sources of phosphorous, such as phosphoric acid or one or more phosphates.

*Glass network intermediate elements*

The mixture may comprise one or more glass network intermediate elements. The one or more glass network intermediate elements in the mixture may be provided by the silicate material.

Glass network intermediate elements are those elements whose oxides do not spontaneously form glass network structures but which can act like glass network formers when combined with other glass network-forming elements. Glass network intermediates include titanium, aluminium, zirconium, beryllium, magnesium and zinc. The silicate material may be a silicate glass which contains one or more glass network intermediate elements such as titanium, aluminium, zirconium, beryllium, magnesium or zinc. For example, the silicate glass may be an aluminium-containing glass, such as an aluminosilicate glass.

*Glass network-modifying elements*

The mixture may comprise one or more glass network-modifying elements. The one or more glass network-modifying elements present in the mixture may be provided by the silicate material and/or the alkali compound.

Glass network-modifying elements are those elements whose oxides do not form glass network structures, either alone or in combination with glass network-forming elements. Glass network-modifying elements, when present in a glass, disrupt or modify the glass network structure. Glass network-modifying elements are typically present in a glass in ionic form; the charge of the glass network-modifying ions is compensated by nearby non-bridging oxygen atoms covalently bonded to nearby glass networking-forming elements.

Glass network-modifying elements include calcium, lead, lithium, sodium and potassium. The silicate material may be a silicate glass which contains one or more glass network-modifying elements such as calcium, lead, lithium, sodium or potassium.

*Mixture*

The mixture may comprise no less than about 5 wt. %, for example, no less than about 10 wt. %, or no less than about 20 wt. %, or no less than about 30 wt. %, or no less than about 40 wt. %, or no less than about 50 wt. %, of the silicate material. The mixture may comprise no greater than about 90 wt. %, for example, no greater than about 80 wt. %, or no greater than about 70 wt. %, or no greater than about 60 wt. %, of the silicate material. The mixture may comprise from about 5 wt. % to about 90 wt. %, for example, from about 10 wt. % to about 90 wt. %, or from about 20 wt. % to about 90 wt. %, or from about 30 wt. % to about 90 wt. %, or from about 40 wt. % to about 90 wt. %, or from about 50 wt. % to about 90 wt. %, or from about 5 wt. % to about 80 wt. %, or from about 10 wt. % to about 80 wt. %, or from about 20 wt. % to about 80 wt. %, or from about 30 wt. % to about 80 wt. %, or from about 40 wt. % to about 80 wt. %, or from about 50 wt. % to about 80 wt. %, or from about 5 wt. % to about 70 wt. %, or from about 10 wt. % to about 70 wt. %, or from about 20 wt. % to about 70 wt. %, or from about 30 wt. % to about 70 wt. %, or from about 40 wt. % to about 70 wt. %, or from about 50 wt. % to about 70 wt. %, or from about 5 wt. % to about 60 wt. %, or from about 10 wt. % to about 60 wt. %, or from about 20 wt. % to about 60 wt. %, or from about 30 wt. % to about 60 wt. %, or from about 40 wt. % to about 60 wt. %, or from about 50 wt. % to about 60 wt. %, of the silicate material.

The mixture may comprise no less than about 5 wt. %, for example, no less than about 10 wt. %, or no less than about 20 wt. %, or no less than about 30 wt. %, or no less than about 40 wt. %, or no less than about 50 wt. %, of amorphous silicate material. The mixture may comprise no greater than about 90 wt. %, for example, no greater than about 80 wt. %, or no greater than about 70 wt. %, or no greater than about 60 wt. %, of amorphous silicate material. The mixture may comprise from about 5 wt. % to about 90 wt. %, for example, from about 10 wt. % to about 90 wt. %, or from about 20 wt. % to about 90 wt. %, or from about 30 wt. % to about 90 wt. %, or from about 40 wt. % to about 90 wt. %, or from about 50 wt. % to about 90 wt. %, or from about 5 wt. % to about 80 wt. %, or from about 10 wt. % to about 80 wt. %, or from about 20 wt. % to about 80 wt. %, or from about 30 wt. % to about 80 wt. %, or from about 40 wt. % to about 80 wt. %, or from about 50 wt. % to about 80 wt. %, or from about 5 wt. % to about 70 wt. %, or from about 10 wt. % to about 70 wt. %, or from about 20 wt. % to about 70 wt. %, or from about 30 wt. % to about 70 wt. %, or from about 40 wt. % to about 70 wt. %, or from about 50 wt. % to about 70 wt. %, or from about 5 wt. % to about 60 wt. %, or from about 10 wt. % to about 60 wt. %, or from about 20 wt. % to about 60 wt. %, or from about 30 wt. % to about 60 wt. %, or from about 40 wt. % to about 60 wt. %, or from about 50 wt. % to about 60 wt. %, of amorphous silicate material.

The mixture may comprise no less than about 5 wt. %, for example, no less than about 10 wt. %, or no less than about 20 wt. %, or no less than about 30 wt. %, or no less than about 40 wt. %, or no less than about 50 wt. %, of aluminosilicate material. The mixture may comprise no greater than about 90 wt. %, for example, no greater than about 80 wt. %, or no greater than about 70 wt. %, or no greater than about 60 wt. %, of aluminosilicate material. The mixture may comprise from about 5 wt. % to about 90 wt. %, for example, from about 10 wt. % to about 90 wt. %, or from about 20 wt. % to about 90 wt. %, or from about 30 wt. % to about 90 wt. %, or from about 40 wt. % to about 90 wt. %, or from about 50 wt. % to about 90 wt. %, or from about 5 wt. % to about 80 wt. %, or from about 10 wt. % to about 80 wt. %, or from about 20 wt. % to about 80 wt. %, or from about 30 wt. % to about 80 wt. %, or from about 40 wt. % to about 80 wt. %, or from about 50 wt. % to about 80 wt. %, or from about 5 wt. % to about 70 wt. %, or from about 10 wt. % to about 70 wt. %, or from about 20 wt. % to about 70 wt. %, or from about 30 wt. % to about 70 wt. %, or from about 40 wt. % to about 70 wt. %, or from about 50 wt. % to about 70 wt. %, or from about 5 wt. % to about 60 wt. %, or from about 10 wt. % to about 60 wt. %, or from about 20 wt. % to about 60 wt. %, or from about 30 wt. % to about 60 wt. %, or from about 40 wt. % to about 60 wt. %, or from about 50 wt. % to about 60 wt. %, of the aluminosilicate material.

The mixture may comprise no less than about 5 wt. %, for example, no less than about 10 wt. %, or no less than about 20 wt. %, or no less than about 30 wt. %, or no less than about 40 wt. %, or no less than about 50 wt. %, of silicate salt. The mixture may comprise no greater than about 90 wt. %, for example, no greater than about 80 wt. %, or no greater than about 70 wt. %, or no greater than about 60 wt. %, of silicate salt. The mixture may comprise from about 5 wt. % to about 90 wt. %, for example, from about 10 wt. % to about 90 wt. %, or from about 20 wt. % to about 90 wt. %, or from about 30 wt. % to about 90 wt. %, or from about 40 wt. % to about 90 wt. %, or from about 50 wt. % to about 90 wt. %, or from about 5 wt. % to about 80 wt. %, or from about 10 wt. % to about 80 wt. %, or from about 20 wt. % to about 80 wt. %, or from about 30 wt. % to about 80 wt. %, or from about 40 wt. % to about 80 wt. %, or from about 50 wt. % to about 80 wt. %, or from about 5 wt. % to about 70 wt. %, or from about 10 wt. % to about 70 wt. %, or from about 20 wt. % to about 70 wt. %, or from about 30 wt. % to about 70 wt. %, or from about 40 wt. % to about 70 wt. %, or from about 50 wt. % to about 70 wt. %, or from about 5 wt. % to about 60 wt. %, or from about 10 wt. % to about 60 wt. %, or from about 20 wt. % to about 60 wt. %, or from about 30 wt. % to about 60 wt. %, or from about 40 wt. % to about 60 wt. %, or from about 50 wt. % to about 60 wt. %, of silicate salt.

The mixture may comprise no less than about 5 wt. %, for example, no less than about 10 wt. %, or no less than about 20 wt. %, or no less than about 30 wt. %, or no less than about 40 wt. %, or no less than about 50 wt. %, of aluminosilicate salt. The mixture may comprise no greater than about 90 wt. %, for example, no greater than about 80 wt. %, or no greater than about 70 wt. %, or no greater than about 60 wt. %, of aluminosilicate salt. The mixture may comprise from about 5 wt. % to about 90 wt. %, for example, from about 10 wt. % to about 90 wt. %, or from about 20 wt. % to about 90 wt. %, or from about 30 wt. % to about 90 wt. %, or from about 40 wt. % to about 90 wt. %, or from about 50 wt. % to about 90 wt. %, or from about 5 wt. % to about 80 wt. %, or from about 10 wt. % to about 80 wt. %, or from about 20 wt. % to about 80 wt. %, or from about 30 wt. % to about 80 wt. %, or from about 40 wt. % to about 80 wt. %, or from about 50 wt. % to about 80 wt. %, or from about 5 wt. % to about 70 wt. %, or from about 10 wt. % to about 70 wt. %, or from about 20 wt. % to about 70 wt. %, or from about 30 wt. % to about 70 wt. %, or from about 40 wt. % to about 70 wt. %, or from about 50 wt. % to about 70 wt. %, or from about 5 wt. % to about 60 wt. %, or from about 10 wt. % to about 60 wt. %, or from about 20 wt. % to about 60 wt. %, or from about 30 wt. % to about 60 wt. %, or from about 40 wt. % to about 60 wt. %, or from about 50 wt. % to about 60 wt. %, of aluminosilicate salt.

The mixture may comprise no less than about 5 wt. %, for example, no less than about 10 wt. %, or no less than about 20 wt. %, or no less than about 30 wt. %, or no less than about 40 wt. %, or no less than about 50 wt. %, of silicate glass. The mixture may comprise no greater than about 90 wt. %, for example, no greater than about 80 wt. %, or no greater than about 70 wt. %, or no greater than about 60 wt. %, of silicate glass. The mixture may comprise from about 5 wt. % to about 90 wt. %, for example, from about 10 wt. % to about 90 wt. %, or from about 20 wt. % to about 90 wt. %, or from about 30 wt. % to about 90 wt. %, or from about 40 wt. % to about 90 wt. %, or from about 50 wt. % to about 90 wt. %, or from about 5 wt. % to about 80 wt. %, or from about 10 wt. % to about 80 wt. %, or from about 20 wt. % to about 80 wt. %, or from about 30 wt. % to about 80 wt. %, or from about 40 wt. % to about 80 wt. %, or from about 50 wt. % to about 80 wt. %, or from about 5 wt. % to about 70 wt. %, or from about 10 wt. % to about 70 wt. %, or from about 20 wt. % to about 70 wt. %, or from about 30 wt. % to about 70 wt. %, or from about 40 wt. % to about 70 wt. %, or from about 50 wt. % to about 70 wt. %, or from about 5 wt. % to about 60 wt. %, or from about 10 wt. % to about 60 wt. %, or from about 20 wt. % to about 60 wt. %, or from about 30 wt. % to about 60 wt. %, or from about 40 wt. % to about 60 wt. %, or from about 50 wt. % to about 60 wt. %, of silicate glass.

The mixture may comprise no less than about 5 wt. %, for example, no less than about 10 wt. %, or no less than about 20 wt. %, or no less than about 30 wt. %, or no less than about 40 wt. %, or no less than about 50 wt. %, of aluminosilicate glass. The mixture may comprise no greater than about 90 wt. %, for example, no greater than about 80 wt. %, or no greater than about 70 wt. %, or no greater than about 60 wt. %, of aluminosilicate glass. The mixture may comprise from about 5 wt. % to about 90 wt. %, for example, from about 10 wt. % to about 90 wt. %, or from about 20 wt. % to about 90 wt. %, or from about 30 wt. % to about 90 wt. %, or from about 40 wt. % to about 90 wt. %, or from about 50 wt. % to about 90 wt. %, or from about 5 wt. % to about 80 wt. %, or from about 10 wt. % to about 80 wt. %, or from about 20 wt. % to about 80 wt. %, or from about 30 wt. % to about 80 wt. %, or from about 40 wt. % to about 80 wt. %, or from about 50 wt. % to about 80 wt. %, or from about 5 wt. % to about 70 wt. %, or from about 10 wt. % to about 70 wt. %, or from about 20 wt. % to about 70 wt. %, or from about 30 wt. % to about 70 wt. %, or from about 40 wt. % to about 70 wt. %, or from about 50 wt. % to about 70 wt. %, or from about 5 wt. % to about 60 wt. %, or from about 10 wt. % to about 60 wt. %, or from about 20 wt. % to about 60 wt. %, or from about 30 wt. % to about 60 wt. %, or from about 40 wt. % to about 60 wt. %, or from about 50 wt. % to about 60 wt. %, of aluminosilicate glass.

The mixture may comprise no less than about 5 wt. %, for example, no less than about 10 wt. %, or no less than about 20 wt. %, or no less than about 30 wt. %, or no less than about 40 wt. %, or no less than about 50 wt. %, of borosilicate glass. The mixture may comprise no greater than about 90 wt. %, for example, no greater than about 80 wt. %, or no greater than about 70 wt. %, or no greater than about 60 wt. %, of borosilicate glass. The mixture may comprise from about 5 wt. % to about 90 wt. %, for example, from about 10 wt. % to about 90 wt. %, or from about 20 wt. % to about 90 wt. %, or from about 30 wt. % to about 90 wt. %, or from about 40 wt. % to about 90 wt. %, or from about 50 wt. % to about 90 wt. %, or from about 5 wt. % to about 80 wt. %, or from about 10 wt. % to about 80 wt. %, or from about 20 wt. % to about 80 wt. %, or from about 30 wt. % to about 80 wt. %, or from about 40 wt. % to about 80 wt. %, or from about 50 wt. % to about 80 wt. %, or from about 5 wt. % to about 70 wt. %, or from about 10 wt. % to about 70 wt. %, or from about 20 wt. % to about 70 wt. %, or from about 30 wt. % to about 70 wt. %, or from about 40 wt. % to about 70 wt. %, or from about 50 wt. % to about 70 wt. %, or from about 5 wt. % to about 60 wt. %, or from about 10 wt. % to about 60 wt. %, or from about 20 wt. % to about 60 wt. %, or from about 30 wt. % to about 60 wt. %, or from about 40 wt. % to about 60 wt. %, or from about 50 wt. % to about 60 wt. %, of borosilicate glass.

For example, the mixture comprise may comprise no less than about 5 wt. %, for example, no less than about 8 wt. %, or no less than about 10 wt. %, or no less than about 12 wt. %, or no less than about 13 wt. %, or no less than about 14 wt. %, of borosilicate glass. The mixture may comprise no greater than about 50 wt. %, for example, no greater than about 30 wt. %, or no greater than about 25 wt. %, or no greater than about 20 wt. %, or no greater than about 17 wt. %, or no greater than about 16 wt. %, or no greater than about 15 wt. %, or no greater than about 14 wt. %, of borosilicate glass. The mixture may comprise from about 5 wt. % to about 50 wt. %, for example, from about 5 wt. % to about 30 wt. %, or from about 5 wt. % to about 25 wt. %, or from about 10 wt. % to about 20 wt. %, or from about 12 wt. % to about 16 wt. %, or from about 12 wt. % to about 14 wt. %, or from about 13 wt. % to about 14 wt. %, or from about 14 wt. % to about 16 wt. %, or from about 14 wt. % to about 15 wt. %, of borosilicate glass.

The mixture may comprise no less than about 5 wt. %, for example, no less than about 10 wt. %, or no less than about 20 wt. %, or no less than about 30 wt. %, or no less than about 40 wt. %, or no less than about 50 wt. %, of silicate mineral. The mixture may comprise no greater than about 90 wt. %, for example, no greater than about 80 wt. %, or no greater than about 70 wt. %, or no greater than about 60 wt. %, of silicate mineral. The mixture may comprise from about 5 wt. % to about 90 wt. %, for example, from about 10 wt. % to about 90 wt. %, or from about 20 wt. % to about 90 wt. %, or from about 30 wt. % to about 90 wt. %, or from about 40 wt. % to about 90 wt. %, or from about 50 wt. % to about 90 wt. %, or from about 5 wt. % to about 80 wt. %, or from about 10 wt. % to about 80 wt. %, or from about 20 wt. % to about 80 wt. %, or from about 30 wt. % to about 80 wt. %, or from about 40 wt. % to about 80 wt. %, or from about 50 wt. % to about 80 wt. %, or from about 5 wt. % to about 70 wt. %, or from about 10 wt. % to about 70 wt. %, or from about 20 wt. % to about 70 wt. %, or from about 30 wt. % to about 70 wt. %, or from about 40 wt. % to about 70 wt. %, or from about 50 wt. % to about 70 wt. %, or from about 5 wt. % to about 60 wt. %, or from about 10 wt. % to about 60 wt. %, or from about 20 wt. % to about 60 wt. %, or from about 30 wt. % to about 60 wt. %, or from about 40 wt. % to about 60 wt. %, or from about 50 wt. % to about 60 wt. %, of silicate mineral.

The mixture may comprise no less than about 5 wt. %, for example, no less than about 10 wt. %, or no less than about 20 wt. %, or no less than about 30 wt. %, or no less than about 40 wt. %, or no less than about 50 wt. %, of aluminosilicate mineral. The mixture may comprise no greater than about 90 wt. %, for example, no greater than about 80 wt. %, or no greater than about 70 wt. %, or no greater than about 60 wt. %, of aluminosilicate mineral. The mixture may comprise from about 5 wt. % to about 90 wt. %, for example, from about 10 wt. % to about 90 wt. %, or from about 20 wt. % to about 90 wt. %, or from about 30 wt. % to about 90 wt. %, or from about 40 wt. % to about 90 wt. %, or from about 50 wt. % to about 90 wt. %, or from about 5 wt. % to about 80 wt. %, or from about 10 wt. % to about 80 wt. %, or from about 20 wt. % to about 80 wt. %, or from about 30 wt. % to about 80 wt. %, or from about 40 wt. % to about 80 wt. %, or from about 50 wt. % to about 80 wt. %, or from about 5 wt. % to about 70 wt. %, or from about 10 wt. % to about 70 wt. %, or from about 20 wt. % to about 70 wt. %, or from about 30 wt. % to about 70 wt. %, or from about 40 wt. % to about 70 wt. %, or from about 50 wt. % to about 70 wt. %, or from about 5 wt. % to about 60 wt. %, or from about 10 wt. % to about 60 wt. %, or from about 20 wt. % to about 60 wt. %, or from about 30 wt. % to about 60 wt. %, or from about 40 wt. % to about 60 wt. %, or from about 50 wt. % to about 60 wt. %, of aluminosilicate mineral.

The mixture may comprise no less than about 5 wt. %, for example, no less than about 10 wt. %, or no less than about 20 wt. %, or no less than about 30 wt. %, or no less than about 40 wt. %, or no less than about 50 wt. %, of volcanic glass. The mixture may comprise no greater than about 90 wt. %, for example, no greater than about 80 wt. %, or no greater than about 70 wt. %, or no greater than about 60 wt. %, of volcanic glass. The mixture may comprise from about 5 wt. % to about 90 wt. %, for example, from about 10 wt. % to about 90 wt. %, or from about 20 wt. % to about 90 wt. %, or from about 30 wt. % to about 90 wt. %, or from about 40 wt. % to about 90 wt. %, or from about 50 wt. % to about 90 wt. %, or from about 5 wt. % to about 80 wt. %, or from about 10 wt. % to about 80 wt. %, or from about 20 wt. % to about 80 wt. %, or from about 30 wt. % to about 80 wt. %, or from about 40 wt. % to about 80 wt. %, or from about 50 wt. % to about 80 wt. %, or from about 5 wt. % to about 70 wt. %, or from about 10 wt. % to about 70 wt. %, or from about 20 wt. % to about 70 wt. %, or from about 30 wt. % to about 70 wt. %, or from about 40 wt. % to about 70 wt. %, or from about 50 wt. % to about 70 wt. %, or from about 5 wt. % to about 60 wt. %, or from about 10 wt. % to about 60 wt. %, or from about 20 wt. % to about 60 wt. %, or from about 30 wt. % to about 60 wt. %, or from about 40 wt. % to about 60 wt. %, or from about 50 wt. % to about 60 wt. %, of volcanic glass.

For example, the mixture may comprise no less than about 20 wt. %, for example, no less than about 25 wt. %, or no less than about 28 wt. %, or no less than about 30 wt. %, or no less than about 34 wt. %, of volcanic glass. The mixture may comprise no more than about 50 wt. %, for example, no more than about 45 wt. %, or no more than about 40 wt. %, or no more than about 35 wt. %, or no more than about 30 wt. %, of volcanic glass. The mixture may comprise from about 20 wt. % to about 50 wt. %, for example, from about 25 wt. % to about 45 wt. %, or from about 25 wt. % to about 35 wt. %, or from about 25 wt. % to about 30 wt. %, or from about 28 wt. % to about 30 wt. %, or from about 30 wt. % to about 40 wt. %, or from about 34 wt. % to about 35 wt. %, of volcanic glass.

The mixture may comprise no less than about 5 wt. %, for example, no less than about 10 wt. %, or no less than about 20 wt. %, or no less than about 30 wt. %, or no less than about 40 wt. %, or no less than about 50 wt. %, of perlitic material. The mixture may comprise no greater than about 90 wt. %, for example, no greater than about 80 wt. %, or no greater than about 70 wt. %, or no greater than about 60 wt. %, of perlitic material. The mixture may comprise from about 5 wt. % to about 90 wt. %, for example, from about 10 wt. % to about 90 wt. %, or from about 20 wt. % to about 90 wt. %, or from about 30 wt. % to about 90 wt. %, or from about 40 wt. % to about 90 wt. %, or from about 50 wt. % to about 90 wt. %, or from about 5 wt. % to about 80 wt. %, or from about 10 wt. % to about 80 wt. %, or from about 20 wt. % to about 80 wt. %, or from about 30 wt. % to about 80 wt. %, or from about 40 wt. % to about 80 wt. %, or from about 50 wt. % to about 80 wt. %, or from about 5 wt. % to about 70 wt. %, or from about 10 wt. % to about 70 wt. %, or from about 20 wt. % to about 70 wt. %, or from about 30 wt. % to about 70 wt. %, or from about 40 wt. % to about 70 wt. %, or from about 50 wt. % to about 70 wt. %, or from about 5 wt. % to about 60 wt. %, or from about 10 wt. % to about 60 wt. %, or from about 20 wt. % to about 60 wt. %, or from about 30 wt. % to about 60 wt. %, or from about 40 wt. % to about 60 wt. %, or from about 50 wt. % to about 60 wt. %, of perlitic material.

For example, the mixture may comprise no less than about 20 wt. %, for example, no less than about 25 wt. %, or no less than about 28 wt. %, or no less than about 30 wt. %, or no less than about 34 wt. %, of perlitic material. The mixture may comprise no more than about 50 wt. %, for example, no more than about 45 wt. %, or no more than about 40 wt. %, or no more than about 35 wt. %, or no more than about 30 wt. %, of perlitic material. The mixture may comprise from about 20 wt. % to about 50 wt. %, for example, from about 25 wt. % to about 45 wt. %, or from about 25 wt. % to about 35 wt. %, or from about 25 wt. % to about 30 wt. %, or from about 28 wt. % to about 30 wt. %, or from about 30 wt. % to about 40 wt. %, or from about 34 wt. % to about 35 wt. %, of perlitic material.

The mixture may comprise no less than about 20 wt. %, for example, no less than about 25 wt. %, or no less than about 28 wt. %, or no less than about 30 wt. %, or no less than about 34 wt. %, of unexpanded natural perlite ore. The mixture may comprise no more than about 50 wt. %, for example, no more than about 45 wt. %, or no more than about 40 wt. %, or no more than about 35 wt. %, or no more than about 30 wt. %, of unexpanded natural perlite ore. The mixture may comprise from about 20 wt. % to about 50 wt. %, for example, from about 25 wt. % to about 45 wt. %, or from about 25 wt. % to about 35 wt. %, or from about 25 wt. % to about 30 wt. %, or from about 28 wt. % to about 30 wt. %, or from about 30 wt. % to about 40 wt. %, or from about 34 wt. % to about 35 wt. %, of unexpanded natural perlite ore.

The mixture may comprise no less than about 5 wt. %, for example, no less than about 8 wt. %, or no less than about 10 wt. %, or no less than about 12 wt. %, or no less than about 15 wt. %, or no less than about 17 wt. %, of alkali compound. The mixture may comprise no more than about 30 wt. %, for example, no more than about 25 wt. %, or no more than about 20 wt. %, or no more than about 18 wt. %, or no more than about 17 wt. %, or no more than about 15 wt. % or no more than about 14 wt. %, of alkali compound. The mixture may comprise from about 5 wt. % to about 30 wt. %, for example, from about 5 wt. % to about 25 wt. %, or from about 5 wt. % to about 20 wt. %, or from about 8 wt.

% to about 20 wt. %, or from about 8 wt. % to about 18 wt. %, or from about 10 wt. % to about 15 wt. %, or from about 12 wt. % to about 15 wt. %, or from about 12 wt. % to about 14 wt. %, or from about 10 wt. % to about 14 wt. %, or from about 14 wt. % to about 18 wt. %, or from about 15 wt. % to about 17 wt. %, or from about 16 wt. % to about 20 wt. %, of alkali compound.

The mixture may comprise no less than about 5 wt. %, for example, no less than about 8 wt. %, or no less than about 10 wt. %, or no less than about 12 wt. %, or no less than about 15 wt. %, or no less than about 17 wt. %, of alkali hydroxide. The mixture may comprise no more than about 30 wt. %, for example, no more than about 25 wt. %, or no more than about 20 wt. %, or no more than about 18 wt. %, or no more than about 17 wt. %, or no more than about 15 wt. % or no more than about 14 wt. %, of alkali hydroxide. The mixture may comprise from about 5 wt. % to about 30 wt. %, for example, from about 5 wt. % to about 25 wt. %, or from about 5 wt. % to about 20 wt. %, or from about 8 wt. % to about 20 wt. %, or from about 8 wt. % to about 18 wt. %, or from about 10 wt. % to about 15 wt. %, or from about 12 wt. % to about 15 wt. %, or from about 12 wt. % to about 14 wt. %, or from about 10 wt. % to about 14 wt. %, or from about 14 wt. % to about 18 wt. %, or from about 15 wt. % to about 17 wt. %, or from about 16 wt. % to about 20 wt. %, of alkali hydroxide.

The mixture may comprise no less than about 5 wt. %, for example, no less than about 8 wt. %, or no less than about 10 wt. %, or no less than about 12 wt. %, or no less than about 15 wt. %, or no less than about 17 wt. %, of alkali carbonate. The mixture may comprise no more than about 30 wt. %, for example, no more than about 25 wt. %, or no more than about 20 wt. %, or no more than about 18 wt. %, or no more than about 17 wt. %, or no more than about 15 wt. % or no more than about 14 wt. %, of alkali carbonate. The mixture may comprise from about 5 wt. % to about 30 wt. %, for example, from about 5 wt. % to about 25 wt. %, or from about 5 wt. % to about 20 wt. %, or from about 8 wt. % to about 20 wt. %, or from about 8 wt. % to about 18 wt. %, or from about 10 wt. % to about 15 wt. %, or from about 12 wt. % to about 15 wt. %, or from about 12 wt. % to about 14 wt. %, or from about 10 wt. % to about 14 wt. %, or from about 14 wt. % to about 18 wt. %, or from about 15 wt. % to about 17 wt. %, or from about 16 wt. % to about 20 wt. %, of alkali carbonate.

The mixture may comprise no less than about 5 wt. %, for example, no less than about 8 wt. %, or no less than about 10 wt. %, or no less than about 12 wt. %, or no less than about 15 wt. %, or no less than about 17 wt. %, of alkali silicate. The mixture may comprise no more than about 30 wt. %, for example, no more than about 25 wt. %, or no more than about 20 wt. %, or no more than about 18 wt. %, or no more than about 17 wt. %, or no more than about 15 wt. % or no more than about 14 wt. %, of alkali silicate. The mixture may comprise from about 5 wt. % to about 30 wt. %, for example, from about 5 wt. % to about 25 wt. %, or from about 5 wt. % to about 20 wt. %, or from about 8 wt. % to about 20 wt. %, or from about 8 wt. % to about 18 wt. %, or from about 10 wt. % to about 15 wt. %, or from about 12 wt. % to about 15 wt. %, or from about 12 wt. % to about 14 wt. %, or from about 10 wt. % to about 14 wt. %, or from about 14 wt. % to about 18 wt. %, or from about 15 wt. % to about 17 wt. %, or from about 16 wt. % to about 20 wt. %, of alkali silicate.

For example, the mixture may comprise no less than about 5 wt. %, for example, no less than about 8 wt. %, or no less than about 10 wt. %, or no less than about 12 wt. %, or no less than about 15 wt. %, or no less than about 17 wt. %, of sodium hydroxide, lithium hydroxide, and/or potassium hydroxide. The mixture may comprise no more than about 30 wt. %, for example, no more than about 25 wt. %, or no more than about 20 wt. %, or no more than about 18 wt. %, or no more than about 17 wt. %, or no more than about 15 wt. % or no more than about 14 wt. %, of sodium hydroxide, lithium hydroxide, and/or potassium hydroxide. The mixture may comprise from about 5 wt. % to about 30 wt. %, for example, from about 5 wt. % to about 25 wt. %, or from about 5 wt. % to about 20 wt. %, or from about 8 wt. % to about 20 wt. %, or from about 8 wt. % to about 18 wt. %, or from about 10 wt. % to about 15 wt. %, or from about 12 wt. % to about 15 wt. %, or from about 12 wt. % to about 14 wt. %, or from about 10 wt. % to about 14 wt. %, or from about 14 wt. % to about 18 wt. %, or from about 15 wt. % to about 17 wt. %, or from about 16 wt. % to about 20 wt. %, of sodium hydroxide, lithium hydroxide, and/or potassium hydroxide.

The mixture may comprise no less than about 5 wt. %, for example, no less than about 8 wt. %, or no less than about 10 wt. %, or no less than about 12 wt. %, or no less than about 15 wt. %, or no less than about 17 wt. %, of sodium carbonate, lithium carbonate, and/or potassium carbonate. The mixture may comprise no more than about 30 wt. %, for example, no more than about 25 wt. %, or no more than about 20 wt. %, or no more than about 18 wt. %, or no more than about 17 wt. %, or no more than about 15 wt. % or no more than about 14 wt. %, of sodium carbonate, lithium carbonate, and/or potassium carbonate. The mixture may comprise from about 5 wt. % to about 30 wt. %, for example, from about 5 wt. % to about 25 wt. %, or from about 5 wt. % to about 20 wt. %, or from about 8 wt. % to about 20 wt. %, or from about 8 wt. % to about 18 wt. %, or from about 10 wt. % to about 15 wt. %, or from about 12 wt. % to about 15 wt. %, or from about 12 wt. % to about 14 wt. %, or from about 10 wt. % to about 14 wt. %, or from about 14 wt. % to about 18 wt. %, or from about 15 wt. % to about 17 wt. %, or from about 16 wt. % to about 20 wt. %, of sodium carbonate, lithium carbonate, and/or potassium carbonate. The mixture may comprise no less than about 5 wt. %, for example, no less than about 8 wt. %, or no less than about 10 wt. %, or no less than about 12 wt. %, or no less than about 15 wt. %, or no less than about 17 wt. %, of sodium silicate, lithium silicate, and/or potassium silicate. The mixture may comprise no more than about 30 wt. %, for example, no more than about 25 wt. %, or no more than about 20 wt. %, or no more than about 18 wt. %, or no more than about 17 wt. %, or no more than about 15 wt. % or no more than about 14 wt. %, of sodium silicate, lithium silicate, and/or potassium silicate. The mixture may comprise from about 5 wt. % to about 30 wt. %, for example, from about 5 wt. % to about 25 wt. %, or from about 5 wt. % to about 20 wt. %, or from about 8 wt. % to about 20 wt. %, or from about 8 wt. % to about 18 wt. %, or from about 10 wt. % to about 15 wt. %, or from about 12 wt. % to about 15 wt. %, or from about 12 wt. % to about 14 wt. %, or from about 10 wt. % to about 14 wt. %, or from about 14 wt. % to about 18 wt. %, or from about 15 wt. % to about 17 wt. %, or from about 16 wt. % to about 20 wt. %, of sodium silicate, lithium silicate, and/or potassium silicate.

The mixture may comprise no less than about 15 wt. %, for example, no less than about 20 wt. %, or no less than about 22 wt. %, or less than about 25 wt. %, of water. The mixture may comprise no more than about 45 wt. %, for example, no more than about 40 wt. %, or no more than about 35 wt. %, or no more than about 30 wt. %, of water. The mixture may comprise from about 15 wt. % to about 45 wt. %, for example, from about 20 wt. % to about 40 wt. %, or from about 20 wt. % to about 30 wt. %, or from about 25 wt. % to about 30 wt. %, of water.

The mixture may comprise two different silicate materials.

For example, the mixture may comprise a silicate glass (e.g. an aluminosilicate glass) and a silicate mineral (e.g. an aluminosilicate mineral). The mixture may comprise no less than about 5 wt. %, for example, no less than about 8 wt. %, or no less than about 10 wt. %, or no less than about 12 wt. %, or no less than about 15 wt. %, or no less than about 20 wt. %, of the silicate glass (e.g. the aluminosilicate glass). The mixture may comprise no greater than about 50 wt. %, for example, no greater than about 40 wt. %, or no greater than about 30 wt. %, or no greater than about 25 wt. %, or no greater than about 20 wt. %, or no greater than about 16 wt. %, of the silicate glass (e.g. the aluminosilicate glass). The mixture may comprise from about 5 wt. % to about 50 wt. %, for example, from about 8 wt. % to about 40 wt. %, or from about 10 wt. % to about 30 wt. %, or from about 10 wt. % to about 20 wt. %, or from about 12 wt. % to about 16 wt. %, of the silicate glass (e.g. the aluminosilicate glass). Additionally, the mixture may comprise no less than about 10 wt. %, for example, no less than about 15 wt. %, or no less than about 20 wt. %, or no less than about 25 wt. %, of the silicate mineral (e.g. the aluminosilicate mineral). The mixture may comprise no greater than about 60 wt. %, for example, no greater than about 50 wt. %, or no greater than about 45 wt. %, or no greater than about 40 wt. %, or no greater than about 35 wt. %, of the silicate mineral (e.g. the aluminosilicate mineral). The mixture may comprise from about 10 wt. % to about 60 wt. %, for example, from about 15 wt. % to about 50 wt. %, or from about 20 wt. % to about 45 wt. %, or from about 25 wt. % to about 45 wt. %, or from about 25 wt. % to about 30 wt. %, of the silicate mineral (e.g. the aluminosilicate mineral).

Alternatively, the mixture may comprise a first silicate glass (e.g. a first aluminosilicate glass) and a second silicate glass (e.g. a second aluminosilicate glass). The mixture may comprise no less than about 5 wt. %, for example, no less than about 8 wt. %, or no less than about 10 wt. %, or no less than about 12 wt. %, or no less than about 15 wt. %, or no less than about 20 wt. %, of the first silicate glass (e.g. the first aluminosilicate glass). The mixture may comprise no greater than about 50 wt. %, for example, no greater than about 40 wt. %, or no greater than about 30 wt. %, or no greater than about 25 wt. %, or no greater than about 20 wt. %, or no greater than about 16 wt. %, of the first silicate glass (e.g. the first aluminosilicate glass). The mixture may comprise from about 5 wt. % to about 50 wt. %, for example, from about 8 wt. % to about 40 wt. %, or from about 10 wt. % to about 30 wt. %, or from about 10 wt. % to about 20 wt. %, or from about 12 wt. % to about 16 wt. %, of the first silicate glass (e.g. the first aluminosilicate glass). Additionally, the mixture may comprise no less than about 5 wt. %, for example, no less than about 8 wt. %, or no less than about 10 wt. %, or no less than about 12 wt. %, or no less than about 15 wt. %, or no less than about 20 wt. %, of the second silicate glass (e.g. the second aluminosilicate glass). The mixture may comprise no greater than about 50 wt. %, for example, no greater than about 40 wt. %, or no greater than about 30 wt. %, or no greater than about 25 wt. %, or no greater than about 20 wt. %, or no greater than about 16 wt. %, of the second silicate glass (e.g. the second aluminosilicate glass). The mixture may comprise from about 5 wt. % to about 50 wt. %, for example, from about 8 wt. % to about 40 wt. %, or from about 10 wt. % to about 30 wt. %, or from about 10 wt. % to about 20 wt. %, or from about 12 wt. % to about 16 wt. %, of the second silicate glass (e.g. the second aluminosilicate glass).

It may be that one of the two different silicate materials is selected from: a perlitic material, for example unexpanded natural perlite ore having a water content of greater than about 2 wt. %; a phyllosilicate mineral, for example bentonite, kaolin or calcined kaolin; diatomaceous earth. Additionally or alternatively, it may be that one of the two different silicate materials is selected from: fused silica glass, soda-lime glass, borosilicate glass, lead-oxide glass, aluminosilicate glass, silica-germania glass.

For example, it may be that the mixture comprises:

a first silicate material selected from:

a volcanic glass such as a perlitic material, for example unexpanded natural perlite ore having a water content of greater than about 2 wt. %;
a phyllosilicate mineral, for example bentonite, kaolin or calcined kaolin; and

diatomaceous earth; or a combination thereof; and

a second silicate material selected from:

fused silica glass, soda-lime glass, borosilicate glass, lead-oxide glass, aluminosilicate glass, silica-germania glass.

It may be that the mixture comprises a first silicate material, which is a perlitic material, and a second silicate material selected from: fused silica glass, soda-lime glass, borosilicate glass, lead-oxide glass, aluminosilicate glass, silica-germania glass.

It may be that the mixture comprises a perlitic material, for example unexpanded natural perlite ore having a water content of greater than about 2 wt. %, and a silicate glass other than a perlitic material. For example, it may be that the mixture comprises a perlitic material, for example unexpanded natural perlite ore having a water content of greater than about 2 wt. %, and borosilicate glass.

It may be that both the first silicate material and the second silicate material are silicate glasses. For example, it may be that the mixture comprises two different silicate glasses selected from: fused silica glass, soda-lime glass, borosilicate glass, lead-oxide glass, aluminosilicate glass, silica-germania glass. It may be that the mixture comprises borosilicate glass and soda-lime glass.

It may be that the mixture comprises three or more different silicate materials. For example, it may be that the mixture comprises a first silicate glass, a second silicate glass different from the first silicate glass and a silicate mineral different from the first and second silicate glasses. For example, it may be that the mixture comprises: first and second silicate glasses selected from: used silica glass, soda-lime glass, borosilicate glass, lead-oxide glass, aluminosilicate glass, silica-germania glass; and a silicate mineral selected from: a volcanic glass such as a perlitic material, for example unexpanded natural perlite ore having a water content of greater than about 2 wt. %; a phyllosilicate mineral, for example bentonite, kaolin or calcined kaolin; diatomaceous earth; or a combination thereof (for example, a moler (i.e. a clayey diatomite containing both clay minerals and diatomaceous earth)). It may be that the mixture comprises borosilicate glass, soda-lime glass and a perlitic material (e.g. unexpanded natural perlite ore having a water content of greater than about 2 wt. %).

It will be appreciated that whenever a mixture is described as comprising both a silicate material (e.g. a silicate glass or a silicate mineral) and a perlitic material, the silicate material (e.g. the silicate glass or the silicate mineral) is not a perlitic material. Similarly, whenever a mixture is described as comprising both a silicate glass and a silicate mineral, the silicate glass and the silicate mineral are not the same material, i.e. the silicate glass and the silicate mineral differ in chemical composition and/or physical structure, e.g. crystalline or amorphous phase and/or microstructure.

The mixture may comprise no less than about 1 wt. %, for example, no less than about 5 wt. %, or no less than about 8 wt. %, or no less than about 10 wt. %, or no less than about 12 wt. %, or no less than about 14 wt. %, or no less than about 20 wt. %, or no less than about 30 wt. %, or no less than about 35 wt. %, or no less than about 40 wt. %, of reactive silica. The mixture may comprise no more than about 60 wt. %, for example, no more than about 50 wt. %, or no more than about 45 wt. %, or no more than about 40 wt. %, or no more than about 30 wt. %, or no more than about 20 wt. %, or no more than about 18 wt. %, or no more than about 15 wt. %, of reactive silica. The mixture may comprise from about 1 wt. % to about 60 wt. %, for example, from about 5 wt. % to about 50 wt. %, or from about 5 wt. % to about 45 wt. %, or from about 5 wt. % to about 25 wt. %, or from about 5 wt. % to about 20 wt. %, or from about 8 wt. % to about 20 wt. %, or from about 8 wt. % to about 18 wt. %, or from about 8 wt. % to about 12 wt. %, or from about 10 wt. % to about 18 wt. %, or from about 12 wt. % to about 18 wt. %, or from about 14 wt. % to about 15 wt. %, or from about 20 wt. % to about 60 wt. %, or from about 30 wt. % to about 50 wt. %, or from about 35 wt. % to about 45 wt. %, of reactive silica.

For example, the mixture may comprise no less than about 1 wt. %, for example, no less than about 5 wt. %, or no less than about 8 wt. %, or no less than about 10 wt. %, or no less than about 12 wt. %, or no less than about 14 wt. %, or no less than about 20 wt. %, or no less than about 30 wt. %, or no less than about 35 wt. %, or no less than about 40 wt. %, of silica fume. The mixture may comprise no more than about 60 wt. %, for example, no more than about 50 wt. %, or no more than about 45 wt. %, or no more than about 40 wt. %, or no more than about 30 wt. %, or no more than about 20 wt. %, or no more than about 18 wt. %, or no more than about 15 wt. %, of silica fume. The mixture may comprise from about 1 wt. % to about 60 wt. %, for example, from about 5 wt. % to about 50 wt. %, or from about 5 wt. % to about 45 wt. %, or from about 5 wt. % to about 25 wt. %, or from about 5 wt. % to about 20 wt. %, or from about 8 wt. % to about 20 wt. %, or from about 8 wt. % to about 18 wt. %, or from about 8 wt. % to about 12 wt. %, or from about 10 wt. % to about 18 wt. %, or from about 12 wt. % to about 18 wt. %, or from about 14 wt. % to about 15 wt. %, or from about 20 wt. % to about 60 wt. %, or from about 30 wt. % to about 50 wt. %, or from about 35 wt. % to about 45 wt. %, of silica fume.

Alternatively, the mixture may comprise no less than about 1 wt. %, for example, no less than about 5 wt. %,

or no less than about 8 wt. %, or no less than about 10 wt. %, or no less than about 12 wt. %, or no less than about 14 wt. %, or no less than about 20 wt. %, or no less than about 30 wt. %, or no less than about 35 wt. %, or no less than about 40 wt. %, of fumed silica. The mixture may comprise no more than about 60 wt. %, for example, no more than about 50 wt. %, or no more than about 45 wt. %, or no more than about 40 wt. %, or no more than about 30 wt. %, or no more than about 20 wt. %, or no more than about 18 wt. %, or no more than about 15 wt. %, of fumed silica. The mixture may comprise from about 1 wt. % to about 60 wt. %, for example, from about 5 wt. % to about 50 wt. %, or from about 5 wt. % to about 45 wt. %, or from about 5 wt. % to about 25 wt. %, or from about 5 wt. % to about 20 wt. %, or from about 8 wt. % to about 20 wt. %, or from about 8 wt. % to about 18 wt. %, or from about 8 wt. % to about 12 wt. %, or from about 10 wt. % to about 18 wt. %, or from about 12 wt. % to about 18 wt. %, or from about 14 wt. % to about 15 wt. %, or from about 20 wt. % to about 60 wt. %, or from about 30 wt. % to about 50 wt. %, or from about 35 wt. % to about 45 wt. %, of fumed silica.

The mixture may comprise: from about 5 wt. % to about 80 wt. %, for example, from about 10 wt. % to about 70 wt. %, or from about 10 wt. % to about 20 wt. %, or from about 20 wt. % to about 70 wt. %, or from about 30 wt. % to about 70 wt. %, or from about 40 wt. % to about 70 wt. %, or from about 50 wt. % to about 70 wt. %, of silicate material; from about 5 wt. % to about 30 wt. %, for example, from about 5 wt. % to about 20 wt. %, of alkali compound; and from about 20 wt. % to about 40 wt. %, for example, from about 20 wt. % to about 30 wt. %, of water.

For example, the mixture may consist of: from about 40 wt. % to about 80 wt. %, for example, from about 50 wt. % to about 70 wt. %, of silicate material; from about 5 wt. % to about 30 wt. %, for example, from about 5 wt. % to about 20 wt. %, of alkali compound; and from about 20 wt. % to about 50 wt. %, for example, from about 20 wt. % to about 40 wt. %, of water. The mixture may consist of: from about 40 wt. % to about 80 wt. %, for example, from about 50 wt. % to about 70 wt. %, of silicate glass (e.g. borosilicate glass); from about 5 wt. % to about 30 wt. %, for example, from about 5 wt. % to about 20 wt. %, of alkali compound; and from about 20 wt. % to about 50 wt. %, for example, from about 20 wt. % to about 40 wt. %, of water.

The mixture may comprise: from about 5 wt. % to about 80 wt. %, for example, from about 10 wt. % to about 70 wt. %, or from about 10 wt. % to about 50 wt. %, or from about 10 wt. % to about 30 wt. %, of silicate material; from about 10 wt. % to about 60 wt. %, for example, from about 15 wt. % to about 50 wt. %, of reactive silica other than the silicate material; from about 5 wt. % to about 30 wt. %, for example, from about 5 wt. % to about 25 wt. %, of alkali compound; and from about 20 wt. % to about 40 wt. %, for example, from about 20 wt. % to about 35 wt. %, of water.

For example, the mixture may consist of: from about 5 wt. % to about 80 wt. %, for example, from about 10 wt. % to about 70 wt. %, or from about 10 wt. % to about 50 wt. %, or from about 10 wt. % to about 30 wt. %, of silicate glass (e.g. borosilicate glass and/or soda-lime glass); from about 10 wt. % to about 60 wt. %, for example, from about 15 wt. % to about 50 wt. %, of reactive silica; from about 5 wt. % to about 30 wt. %, for example, from about 5 wt. % to about 25 wt. %, of alkali compound; and from about 20 wt. % to about 40 wt. %, for example, from about 20 wt. % to about 35 wt. %, of water.

The mixture may comprise: from about 5 wt. % to about 50 wt. %, for example, from about 5 wt. % to about 40 wt. %, of a first silicate material; from about 5 wt. % to about 50 wt. %, for example, from about 5 wt. % to about 40 wt. %, of a second silicate material; from about 5 wt. % to about 30 wt. %, for example, from about 5 wt. % to about 25 wt. %, of alkali compound; and from about 20 wt. % to about 40 wt. %, for example, from about 20 wt. % to about 35 wt. %, of water.

The mixture may comprise: from about 5 wt. % to about 50 wt. %, for example, from about 5 wt. % to about 40 wt. %, of a first silicate glass (e.g. borosilicate glass); from about 5 wt. % to about 50 wt. %, for example, from about 5 wt. % to about 40 wt. %, of a second silicate glass (e.g. soda-lime glass); from about 5 wt. % to about 30 wt. %, for example, from about 5 wt. % to about 25 wt. %, of alkali compound; and from about 20 wt. % to about 40 wt. %, for example, from about 20 wt. % to about 35 wt. %, of water.

The mixture may comprise: from about 5 wt. % to about 50 wt. %, for example, from about 5 wt. % to about 40 wt. %, of silicate glass (e.g. borosilicate and/or soda-lime glass); from about 5 wt. % to about 50 wt. %, for example, from about 5 wt. % to about 40 wt. %, of silicate mineral other than the silicate glass; from about 5 wt. % to about 30 wt. %, for example, from about 5 wt. % to about 25 wt. %, of alkali compound; and from about 20 wt. % to about 40 wt. %, for example, from about 20 wt. % to about 35 wt. %, of water.

The mixture may comprise: from about 5 wt. % to about 50 wt. %, for example, from about 5 wt. % to about 40 wt. %, of perlitic material (e.g. unexpanded natural perlite ore having a water content of greater than about 2 wt. %); from about 5 wt. % to about 50 wt. %, for example, from about 5 wt. % to about 40 wt. %, of silicate glass other than the perlitic material (e.g. borosilicate and/or soda-lime glass); from about 5 wt. % to about 30 wt. %, for example, from about 5 wt. % to about 25 wt. %, of alkali compound; and from about 20 wt. % to about 40 wt. %, for example, from about 20 wt. % to about 35 wt. %, of water.

The mixture may comprise: from about 5 wt. % to about 50 wt. %, for example, from about 5 wt. % to about 40 wt. %, of a first silicate material; from about 5 wt. % to about 50 wt. %, for example, from about 5 wt. % to about 40 wt. %, of a second silicate material; from about 5 wt. % to about 50 wt. %, for example from about 5 wt. % to about 40 wt.

%, of reactive silica other than the first and second silicate materials; from about 5 wt. % to about 30 wt. %, for example, from about 5 wt. % to about 25 wt. %, of alkali compound; and from about 20 wt. % to about 40 wt. %, for example, from about 20 wt. % to about 35 wt. %, of water.

The mixture may comprise: from about 5 wt. % to about 50 wt. %, for example, from about 5 wt. % to about 40 wt. %, of a first silicate glass; from about 5 wt. % to about 50 wt. %, for example, from about 5 wt. % to about 40 wt. %, of a second silicate glass; from about 5 wt. % to about 50 wt. %, for example from about 5 wt. % to about 40 wt. %, of reactive silica; from about 5 wt. % to about 30 wt. %, for example, from about 5 wt. % to about 25 wt. %, of alkali compound; and from about 20 wt. % to about 40 wt. %, for example, from about 20 wt. % to about 35 wt. %, of water.

The mixture may comprise: from about 5 wt. % to about 50 wt. %, for example, from about 5 wt. % to about 40 wt. %, of silicate glass; from about 5 wt. % to about 50 wt. %, for example, from about 5 wt. % to about 40 wt. %, of a silicate mineral; from about 5 wt. % to about 50 wt. %, for example from about 5 wt. % to about 40 wt. %, of reactive silica; from about 5 wt. % to about 30 wt. %, for example, from about 5 wt. % to about 25 wt. %, of alkali compound; and from about 20 wt. % to about 40 wt. %, for example, from about 20 wt. % to about 35 wt. %, of water.

The mixture may comprise: from about 5 wt. % to about 50 wt. %, for example, from about 5 wt. % to about 40 wt. %, of a perlitic material (e.g. unexpanded natural perlite ore having a water content of greater than about 2 wt. %); from about 5 wt. % to about 50 wt. %, for example, from about 5 wt. % to about 40 wt. %, of silicate glass (e.g. borosilicate and/or soda-lime glass) other than the perlitic material; from about 5 wt. % to about 50 wt. %, for example from about 5 wt. % to about 40 wt. %, of reactive silica other than the first and second silicate materials; from about 5 wt. % to about 30 wt. %, for example, from about 5 wt. % to about 25 wt. %, of alkali compound; and from about 20 wt. % to about 40 wt. %, for example, from about 20 wt. % to about 35 wt. %, of water.

The mixture may comprise: from about 5 wt. % to about 25 wt. %, for example from about 10 wt. % to about 20 wt. %, of silicate glass; from about 1 wt. % to about 50 wt. %, for example from about 5 wt. % to about 45 wt. %, of reactive silica; from about 5 wt. % to about 30 wt. %, for example from about 10 wt. % to about 20 wt. %, of alkali compound; from about 20 wt. % to about 40 wt. %, for example from about 20 wt. % to about 30 wt. %, of water; and optionally from about 20 wt. % to about 55 wt. %, for example from about 25 wt. % to about 50 wt. %, of perlitic material. For example, the mixture may comprise: from about 5 wt. % to about 25 wt. %, for example from about 10 wt. % to about 20 wt. %, of borosilicate glass; from about 5 wt. % to about 20 wt. %, for example from about 10 wt. % to about 45 wt. %, of silica fume; from about 5 wt. % to about 20 wt. %, for example from about 10 wt. % to about 20 wt. %, of sodium hydroxide and/or lithium hydroxide; from about 20 wt. % to about 40 wt. %, for example from about 20 wt. % to about 30 wt. %, of water; and optionally from about 20 wt. % to about 55 wt. %, for example from about 25 wt. % to about 50 wt. %, of unexpanded natural perlite ore.

The mixture may comprise: from about 5 wt. % to about 25 wt. %, for example from about 10 wt. % to about 20 wt. %, of silicate glass; from about 20 wt. % to about 50 wt. %, for example from about 25 wt. % to about 45 wt. %, of perlitic material; from about 5 wt. % to about 20 wt. %, for example from about 10 wt. % to about 15 wt. %, of reactive silica; from about 5 wt. % to about 20 wt. %, from about 10 wt. % to about 17 wt. %, of alkali compound; and from about 20 wt. % to about 40 wt. %, for example from about 20 wt. % to about 30 wt. %, of water. For example, the mixture may comprise: from about 5 wt. % to about 25 wt. %, for example from about 10 wt. % to about 20 wt. %, of borosilicate glass; from about 20 wt. % to about 50 wt. %, for example from about 25 wt. % to about 45 wt. %, of unexpanded natural perlite ore; from about 5 wt. % to about 20 wt. %, for example from about 10 wt. % to about 15 wt. %, of silica fume; from about 5 wt. % to about 20 wt. %, from about 10 wt. % to about 17 wt. %, of sodium hydroxide and/or lithium hydroxide; and from about 20 wt. % to about 40 wt. %, for example from about 20 wt. % to about 30 wt. %, of water.

The mixture may comprise (e.g. consist essentially, or consist, of): from about 10 wt. % to about 15 wt. % of silicate glass; from about 35 wt. % to about 45 wt. % of reactive silica; from about 15 wt. % to about 20 wt. % of alkali compound; and from about 25 wt. % to about 35 wt. % of water. For example, the mixture may comprise (e.g. consist essentially, or consist, of): from about 10 wt. % to about 15 wt. % of borosilicate glass; from about 35 wt. % to about 45 wt. % of silica fume; from about 15 wt. % to about 20 wt. % of sodium hydroxide and/or lithium hydroxide; and from about 25 wt. % to about 35 wt. % of water.

The mixture may comprise (e.g. consist essentially, or consist, of): from about 30 wt. % to about 40 wt. % of perlitic material; from about 10 wt. % to about 20 wt. % of silicate glass; from about 5 wt. % to about 15 wt. % of reactive silica; from about 10 wt. % to about 15 wt. % of alkali compound; and from about 20 wt. % to about 30 wt. % of water. For example, the mixture may comprise (e.g. consist essentially, or consist, of): from about 30 wt. % to about 40 wt. % of unexpanded natural perlite ore; from about 10 wt. % to about 20 wt. % of borosilicate glass; from about 5 wt. % to about 15 wt. % of silica fume; from about 10 wt. % to about 15 wt. % of sodium hydroxide and/or lithium hydroxide; and from about 20 wt. % to about 30 wt. % of water.

The mixture may comprise (e.g. consist essentially, or consist, of): from about 25 wt. % to about 35 wt. % of perlitic material; from about 10 wt. % to about 20 wt. % of silicate glass; from about 10 wt. % to about 20 wt. % of reactive silica; from about 10 wt. % to about 20 wt. % of alkali compound; and from about 20 wt. % to about 30 wt. % of water. For example, the mixture may comprise (e.g. consist essentially, or consist, of): from about 25 wt. % to about 35 wt. %

of unexpanded natural perlite ore; from about 10 wt. % to about 20 wt. % of borosilicate glass; from about 10 wt. % to about 20 wt. % of silica fume; from about 10 wt. % to about 20 wt. % of sodium hydroxide and/or lithium hydroxide; and from about 20 wt. % to about 30 wt. % of water.

The mixture may comprise (e.g. consist essentially, or consist, of): from about 20 wt. % to about 50 wt. % of silicate mineral; from about 10 wt. % to about 20 wt. % of silicate glass; from about 5 wt. % to about 45 wt. % of reactive silica; from about 5 wt. % to about 30 wt. % of alkali compound; and from about 15 wt. % to about 40 wt. % of water. For example, the mixture may comprise (e.g. consist essentially, or consist, of): from about 20 wt. % to about 50 wt. % of perlitic material; from about 10 wt. % to about 20 wt. % of borosilicate and/or soda-lime glass; from about 5 wt. % to about 45 wt. % of silica fume; from about 5 wt. % to about 30 wt. % of sodium hydroxide and/or lithium hydroxide; and from about 15 wt. % to about 40 wt. % of water. The mixture may comprise (e.g. consist essentially, or consist, of): from about 20 wt. % to about 50 wt. % of perlitic material; from about 10 wt. % to about 20 wt. % of borosilicate and/or soda-lime glass; from about 5 wt. % to about 45 wt. % of silica fume; from about 5 wt. % to about 20 wt. % of sodium hydroxide; from about 0 wt. % to about 10 wt. % of lithium hydroxide; and from about 15 wt. % to about 40 wt. % of water.

The mixture may comprise no less than about 0.01 wt. %, for example, no less than about 0.1 wt. %, or no less than about 1 wt. %, of a glass network-forming element other than silicon. The mixture may comprise no greater than about 20 wt. %, for example, no greater than about 15 wt. %, or no greater than about 10 wt. %, or no greater than about 5 wt. %, or no greater than about 3 wt. %, or no greater than about 1 wt. %, of a glass network-forming element other than silicon. The mixture may comprise from about 0.01 wt. % to about 10 wt. %, for example, from about 0.01 wt. % to about 5 wt. %, or from about 0.01 wt. % to about 3 wt. %, or from about 0.01 wt. % to about 1 wt. %, of a glass network-forming element other than silicon.

For example, the mixture may comprise no less than about 0.01 wt. %, for example, no less than about 0.1 wt. %, or no less than about 1 wt. %, of boron. The mixture may comprise no greater than about 20 wt. %, for example, no greater than about 15 wt. %, or no greater than about 10 wt. %, or no greater than about 5 wt. %, or no greater than about 3 wt. %, or no greater than about 1 wt. %, of boron. The mixture may comprise from about 0.01 wt. % to about 10 wt. %, for example, from about 0.01 wt. % to about 5 wt. %, or from about 0.01 wt. % to about 3 wt. %, or from about 0.01 wt. % to about 1 wt. %, of boron.

The mixture may comprise boron in an amount such that the cured mixture (i.e. the solid precursor or the expandable material) and/or the expanded material comprises less than about 5.0 wt. %, for example, less than about 3.5 wt. %, of $B_2O_3$.

The mixture may comprise no less than about 0.01 wt. %, for example, no less than about 0.1 wt. %, or no less than about 1 wt. %, of a glass network intermediate element. The mixture may comprise no greater than about 20 wt. %, for example, no greater than about 15 wt. %, or no greater than about 10 wt. %, or no greater than about 5 wt. %, or no greater than about 3 wt. %, or no greater than about 1 wt. %, of a glass network intermediate element. The mixture may comprise from about 0.01 wt. % to about 10 wt. %, for example, from about 0.01 wt. % to about 5 wt. %, or from about 0.01 wt. % to about 3 wt. %, or from about 0.01 wt. % to about 1 wt. %, of a glass network intermediate element.

The mixture may comprise no less than about 0.01 wt. %, for example, no less than about 0.1 wt. %, or no less than about 1 wt. %, of a glass network-modifying element. The mixture may comprise no greater than about 20 wt. %, for example, no greater than about 15 wt. %, or no greater than about 10 wt. %, or no greater than about 5 wt. %, or no greater than about 3 wt. %, or no greater than about 1 wt. %, of a glass network-modifying element. The mixture may comprise from about 0.01 wt. % to about 10 wt. %, for example, from about 0.01 wt. % to about 5 wt. %, or from about 0.01 wt. % to about 3 wt. %, or from about 0.01 wt. % to about 1 wt. %, of a glass network-modifying element.

It may be that the ratio of the total wt. % of reactive silica in the mixture to the total wt. % of silicate glass in the mixture, i.e.:

$$\frac{\text{wt.\% reactive silica}}{\text{wt. \% silicate glass}}$$

is no less than about 1, or no less than about 1.5, or no less than about 2, or no less than about 2.5, or no less than about 3. It may be that the ratio of the total wt. % of reactive silica in the mixture to the total wt. % of silicate glass in the mixture is no greater than about 4, or no greater than about 3.5, or no greater than about 3. It may be that the ratio of the total wt. % of reactive silica in the mixture to the total wt. % of silicate glass in the mixture is from about 1 to about 4, or from about 1.5 to about 3.5, or from about 2 to about 3. It may be that the ratio of the total wt. % of reactive silica in the mixture to the total wt. % of silicate glass in the mixture is about 2. It may be that the ratio of the total wt. % of reactive silica in the mixture to the total wt. % of silicate glass in the mixture is about 3.

It may be that the ratio of the total wt. % of silica fume in the mixture to the total wt. % of borosilicate glass in the mixture, i.e.:

$$\frac{\text{wt.\% silica fume}}{\text{wt. \% borosilicate glass}}$$

is no less than about 1, or no less than about 1.5, or no less than about 2, or no less than about 2.5, or no less than about 3. It may be that the ratio of the total wt. % of silica fume in the mixture to the total wt. % of borosilicate glass in the mixture is no greater than about 4, or no greater than about 3.5, or no greater than about 3. It may be that the ratio of the total wt. % of silica fume in the mixture to the total wt. % of borosilicate glass in the mixture is from about 1 to about 4, or from about 1.5 to about 3.5, or from about 2 to about 3. It may be that the ratio of the total wt. % of silica fume in the mixture to the total wt. % of borosilicate glass in the mixture is about 2. It may be that the ratio of the total wt. % of silica fume in the mixture to the total wt. % of borosilicate glass in the mixture is about 3.

It may be that the ratio of the combined total wt. % of reactive silica and silicate mineral in the mixture to the total wt. % of silicate glass in the mixture, i.e.:

$$\frac{\text{wt.\% reactive silica} + \text{wt. \% silicate mineral}}{\text{wt. \% silicate glass}}$$

is no less than about 2, for example, no less than about 2.5, or no less than about 3. It may be that the ratio of the combined total wt. % of reactive silica and silicate mineral in the mixture to the total wt. % of silicate glass in the mixture is no greater than about 4, or no greater than about 3.5, or no greater than about 3. It may be that the ratio of the combined total wt. % of reactive silica and silicate mineral in the mixture to the total wt. % of silicate glass in the mixture is from about 2 to about 4, or from about 2.5 to about 3.5. It may be that the ratio of the combined total wt. % of reactive silica and silicate mineral in the mixture to the total wt. % of silicate glass in the mixture is about 3.

It may be that the ratio of the combined total wt. % of silica fume and perlitic material in the mixture to the total wt. % of borosilicate glass in the mixture, i.e.:

$$\frac{\text{wt.\% silica fume} + \text{wt. \% perlitic material}}{\text{wt. \% borosilicate glass}}$$

is no less than about 2, for example, no less than about 2.5, or no less than about 3. It may be that the ratio of the combined total wt. % of silica fume and perlitic material in the mixture to the total wt. % of borosilicate glass in the mixture is no greater than about 4, or no greater than about 3.5, or no greater than about 3. It may be that the ratio of the combined total wt. % of silica fume and perlitic material in the mixture to the total wt. % of borosilicate glass in the mixture is from about 2 to about 4, or from about 2.5 to about 3.5. It may be that the ratio of the combined total wt. % of silica fume and perlitic material in the mixture to the total wt. % of borosilicate glass in the mixture is about 3.

It may be that the ratio of the total wt. % of reactive silica in the mixture to the total wt. % of silicate mineral in the mixture is no less than about 0.1, or no less than about 0.2, or no less than about 0.3.

It may be that the ratio of the total wt. % of silicon in the mixture to the total wt. % of sodium in the mixture (i.e. the Si/Na ratio) is no less than about 1, or no less than about 1.2, or no less than about 1.4, or no less than about 1.5. It may be that the Si/Na ratio is no greater than about 4, or no greater than about 3.5, or no greater than about 3, or no greater than about 2.9. It may be that the Si/Na ratio is from about 1 to about 4, for example, from about 1.2 to about 3.5, or from about 1.4 to about 3, or from about 1.5 to about 2.9.

Expandable material

The cured mixture (i.e. the solid precursor or the expandable material) may comprise no less than about 0.01 wt. %, for example, no less than about 0.1 wt. %, or no less than about 0.2 wt. %, or no less than about 0.3 wt. %, or no less than about 0.4 wt. %, or no less than about 1 wt. %, or no less than about 1.5 wt. %, or no less than about 2 wt. %, or no less than about 3 wt. %, of $X_2O$, wherein X is an alkali metal such as Na or Li. The cured mixture (i.e. the solid precursor or the expandable material) may comprise no more than about 25 wt. %, for example, no more than about 20 wt. %, or no more than about 15 wt. %, or no more than about 10 wt. %, or no more than about 5 wt. %, or no more than about 3 wt. %, or no more than about 2 wt. %, or no more than about 1 wt. %, or no more than about 0.6 wt. %, of $X_2O$, wherein X is an alkali metal such as Na or Li. The cured mixture (i.e. the solid precursor or the expandable material) may comprise from about 0.01 wt. % to about 25 wt. %, for example, from about 0.01 wt. % to about 20 wt. %, or from about 0.01 wt. % to about 15 wt. %, or from about 0.01 wt. % to about 10 wt. %, or from about 0.1 wt. % to about 20 wt.

%, or from about 0.1 wt. % to about 15 wt. %, or from about 0.1 wt. % to about 10 wt. %, or from about 1 wt. % to about 20 wt. %, or from about 1 wt. % to about 15 wt. %, or from about 1 wt. % to about 10 wt. %, or from about 3 wt. % to about 20 wt. %, or from about 3 wt. % to about 15 wt. %, or from about 3 wt. % to about 10 wt. %, or from about 0.1 wt. % to about 5 wt. %, or from about 0.2 wt. % to about 5 wt. %, or from about 0.2 wt. % to about 1 wt. %, or from about 0.4 wt. % to about 1 wt. %, or from about 0.4 wt. % to about 0.6 wt. %, or from about 1 wt. % to about 3 wt. %, or from about 1 wt. % to about 2 wt. %, of $X_2O$, wherein X is an alkali metal such as Na or Li.

For example, the cured mixture (i.e. the solid precursor or the expandable material) may comprise no less than about 0.01 wt. %, for example, no less than about 0.1 wt. %, or no less than about 0.2 wt. %, or no less than about 0.3 wt. %, or no less than about 0.4 wt. %, or no less than about 1 wt. %, or no less than about 1.5 wt. %, or no less than about 2 wt. %, or no less than about 3 wt. %, of $Na_2O$. The cured mixture (i.e. the solid precursor or the expandable material) may comprise no more than about 25 wt. %, for example, no more than about 20 wt. %, or no more than about 15 wt. %, or no more than about 10 wt. %, or no more than about 5 wt. %, or no more than about 3 wt. %, or no more than about 2 wt. %, or no more than about 1 wt. %, or no more than about 0.6 wt. %, of $Na_2O$. The cured mixture (i.e. the solid precursor or the expandable material) may comprise from about 0.01 wt. % to about 25 wt. %, for example, from about 0.01 wt. % to about 20 wt. %, or from about 0.01 wt. % to about 15 wt. %, or from about 0.01 wt. % to about 10 wt. %, or from about 0.1 wt. % to about 20 wt. %, or from about 0.1 wt. % to about 15 wt. %, or from about 0.1 wt. % to about 10 wt. %, or from about 1 wt. % to about 20 wt. %, or from about 1 wt. % to about 15 wt. %, or from about 1 wt. % to about 10 wt. %, or from about 3 wt. % to about 20 wt. %, or from about 3 wt. % to about 15 wt. %, or from about 3 wt. % to about 10 wt. %, or from about 0.1 wt. % to about 5 wt. %, or from about 0.2 wt. % to about 5 wt. %, or from about 0.2 wt. % to about 1 wt. %, or from about 0.4 wt. % to about 1 wt. %, or from about 0.4 wt. % to about 0.6 wt. %, or from about 1 wt. % to about 3 wt. %, or from about 1 wt. % to about 2 wt. %, of $Na_2O$.

The cured mixture (i.e. the solid precursor or the expandable material) may comprise no less than about 0.01 wt. %, for example, no less than about 0.1 wt. %, or no less than about 0.2 wt. %, or no less than about 0.3 wt. %, or no less than about 0.4 wt. %, or no less than about 1 wt. %, or no less than about 1.5 wt. %, or no less than about 2 wt. %, or no less than about 3 wt.%, of $Li_2O$. The cured mixture (i.e. the solid precursor or the expandable material) may comprise no more than about 25 wt. %, for example, no more than about 20 wt. %, or no more than about 15 wt. %, or no more than about 10 wt. %, or no more than about 5 wt. %, or no more than about 3 wt. %, or no more than about 2 wt. %, or no more than about 1 wt. %, or no more than about 0.6 wt. %, of $Li_2O$. The cured mixture (i.e. the solid precursor or the expandable material) may comprise from about 0.01 wt. % to about 25 wt. %, for example, from about 0.01 wt. % to about 20 wt. %, or from about 0.01 wt. % to about 15 wt. %, or from about 0.01 wt. % to about 10 wt. %, or from about 0.1 wt. % to about 20 wt. %, or from about 0.1 wt. % to about 15 wt. %, or from about 0.1 wt. % to about 10 wt. %, or from about 1 wt. % to about 20 wt. %, or from about 1 wt. % to about 15 wt. %, or from about 1 wt. % to about 10 wt. %, or from about 3 wt. % to about 20 wt. %, or from about 3 wt. % to about 15 wt. %, or from about 3 wt. % to about 10 wt. %, or from about 0.1 wt. % to about 5 wt. %, or from about 0.2 wt. % to about 5 wt. %, or from about 0.2 wt. % to about 1 wt. %, or from about 0.4 wt. % to about 1 wt. %, or from about 0.4 wt. % to about 0.6 wt. %, or from about 1 wt. % to about 3 wt. %, or from about 1 wt. % to about 2 wt. %, of $Li_2O$.

The cured mixture (i.e. the solid precursor or the expandable material) may comprise no less than about 0.1 wt. %, for example, no less than about 0.2 wt. %, or no less than about 0.4 wt. %, or no less than about 1 wt. %, or no less than about 2 wt. %, or no less than about 3 wt. %, or no less than about 4 wt. %, of $Al_2O_3$. The cured mixture (i.e. the solid precursor or the expandable material) may comprise no more than about 30 wt. %, for example, no more than about 25 wt. %, or no more than about 20 wt. %, or no more than about 15 wt. %, or no more than about 10 wt. %, or no more than about 8 wt. %, or no more than about 6 wt. %, or no more than about 5 wt. %, or no more than about 4 wt. %, or no more than about 1 wt. %, or no more than about 0.8 wt. %, of $Al_2O_3$. The cured mixture (i.e. the solid precursor or the expandable material) may comprise from about 0.1 wt. % to about 30 wt. %, for example, from about 0.1 wt. % to about 25 wt. %, or from about 0.1 wt. % to about 20 wt. %, or from about 0.1 wt. % to about 15 wt. %, or from about 0.2 wt. % to about 10 wt. %, or from about 0.4 wt. % to about 1 wt. %, or from about 0.4 wt. % to about 0.8 wt. %, or from about 1 wt. % to about 5 wt. %, or from about 2 wt. % to about 5 wt. %, or from about 2 wt. % to about 4 wt. %, or from about 4 wt. % to about 5 wt. %, of $Al_2O_3$.

The cured mixture (i.e. the solid precursor or the expandable material) may comprise no less than about 30 wt. %, for example, no less than about 35 wt. %, or no less than about 40 wt. %, or no less than about 45 wt. %, of $SiO_2$. The cured mixture (i.e. the solid precursor or the expandable material) may comprise no more than about 80 wt. %, for example, no more than about 70 wt. %, or no more than about 60 wt. %, or no more than about 55 wt. %, or no more than about 50 wt. %, of $SiO_2$. The cured mixture (i.e. the solid precursor or the expandable material) may comprise from about 30 wt. % to about 80 wt. %, for example, from about 30 wt. % to about 70 wt. %, or from about 30 wt. % to about 60 wt. %, or from about 35 wt. % to about 55 wt. %, or from about 40 wt. % to about 50 w.t %, of $SiO_2$.

The cured mixture (i.e. the solid precursor or the expandable material) may comprise no less than about 0.001 wt. %, for example, no less than about 0.01 wt. %, or no less than about 0.05 wt. %, or no less than about 0.1 wt. %, or no less than about 0.2 wt. %, or no less than about 0.3 wt. %, of $Fe_2O_3$. The cured mixture (i.e. the solid precursor or the expandable material) may comprise no more than about 1 wt. %, or no more than about 0.5 wt. %, or no more than about 0.4 wt. %, or no more than about 0.1 wt. %, of $Fe_2O_3$. The cured mixture (i.e. the solid precursor or the expandable material) may comprise from about 0.001 wt. % to about 1 wt. %, for example, from about 0.01 wt. % to about 0.5 wt. %, or from about 0.05 wt. % to about 0.5 wt. %, or from about 0.05 wt. % to about 0.1 wt. %, or from about 0.3 wt. % to about 0.5 wt. %, or from about 0.3 wt. % to about 0.4 wt. %, of $Fe_2O_3$.

The cured mixture (i.e. the solid precursor or the expandable material) may comprise no less than about 0.01 wt. %, for example, no less than about 0.05 wt. %, or no less than about 0.1 wt. %, or no less than about 0.15 wt. %, or no less than about 0.2 wt. %, or no less than about 0.3 wt. %, or no less than about 0.4 wt. %, or no less than about 0.5 wt. %, of CaO. The cured mixture (i.e. the solid precursor or the expandable material) may comprise no more than about 2 wt. %, for example, no more than about 1 wt. %, or no more than about 0.8 wt. %, or no more than about 0.6 wt. %, or no more than about 0.5 wt. %, or no more than about 0.2 wt. %, of CaO. The cured mixture (i.e. the solid precursor or the expandable material) may comprise from about 0.01 wt. % to about 2 wt. %, for example, from about 0.05 wt. % to about 1 wt. %, or from about 0.1 wt. % to about 0.8 wt. %, or from about 0.15 wt. % to about 0.2 wt. %, or from about 0.3 wt. % to about 0.6 wt. %, or from about 0.3 wt. % to about 0.5 wt. %, or from about 0.5 wt. % to about 0.6 wt. %, of CaO.

The cured mixture (i.e. the solid precursor or the expandable material) may comprise no less than about 0.001 wt. %, for example, no less than about 0.005 wt. %, or no less than about 0.01 wt. %, or no less than about 0.05 wt. %, of MgO. The cured mixture (i.e. the solid precursor or the expandable material) may comprise no more than about 1 wt. %, or no more than about 0.5 wt. %, or no more than about 0.1 wt. %, of MgO. The cured mixture (i.e. the solid precursor or the expandable material) may comprise from about 0.001 wt. % to about 1 wt. %, for example, from about 0.005 wt. % to about 0.5 wt. %, or from about 0.01 wt. % to about 0.1 wt. %, or from about 0.05 wt. % to about 0.1 wt. %, of MgO.

The cured mixture (i.e. the solid precursor or the expandable material) may comprise no less than about 0.05 wt. %, for example, no less than about 0.1 wt. %, or no less than about 0.15 wt. %, or no less than about 0.2 wt. %, or less than about 0.5 wt. %, or no less than about 1 wt. %, or no less than about 1.2 wt. %, of $K_2O$. The cured mixture (i.e. the solid precursor or the expandable material) may comprise no more than about 5 wt. %, for example, no more than about 3 wt. %, or no more than about 2 wt. %, or no more than about 1.6 wt. %, or no more than about 1 wt. %, or no more than about 0.5 wt. %, of $K_2O$. The cured mixture (i.e. the solid precursor or the expandable material) may comprise from about 0.05 wt. % to about 5 wt. %, for example, from about 0.1 wt. % to about 3 wt. %, or from about 0.15 wt. % to about 2 wt. %, or from about 0.15 wt. % to about 1 wt. %, or from about 0.15 wt. % to about 0.5 wt. %, or from about 0.5 wt. % to about 3 wt. %, or from about 0.5 wt. % to about 2 wt. %, or from about 1 wt. % to about 2 wt. %, or from about 1.2 wt. % to about 1.6 wt. %, of $K_2O$.

The cured mixture (i.e. the solid precursor or the expandable material) may comprise no less than about 0.1 wt. %, for example, no less than about 0.5 wt. %, or no less than about 1 wt. %, or no less than about 1.5 wt. %, of $B_2O_3$. The cured mixture (i.e. the solid precursor or the expandable material) may comprise no more than about 5 wt. %, for example, no more than about 3.5 wt. %, or no more than about 3 wt. %, or no more than about 2.5 wt. %, of $B_2O_3$. The cured mixture (i.e. the solid precursor or the expandable material) may comprise from about 0.1 wt. % to about 5 wt. %, for example, from about 0.5 wt. % to about 3.5 wt. %, or from about 1 wt. % to about 2.5 wt. %, of $B_2O_3$.

The cured mixture (i.e. the solid precursor or the expandable material) may comprise no less than about 10 wt. %, for example, no less than about 15 wt. %, or no less than about 20 wt. %, or no less than about 25 wt. %, of water and/or volatile substances (i.e. substances which contribute to "loss on ignition" (LOI)). The cured mixture (i.e. the solid precursor or the expandable material) may comprise no more than about 50 wt. %, for example, no more than about 40 wt. %, or no more than about 30 wt. %, of water and/or volatile substances (i.e. substances which contribute to "loss on ignition" (LOI)). The cured mixture (i.e. the solid precursor or the expandable material) may comprise from about 10 wt. % to about 50 wt. %, for example, from about 15 wt. % to about 40 wt. %, or from about 20 wt. % to about 30 wt. %, or from about 25 wt. % to about 40 wt. %, or from about 25 wt. % to about 30 wt. %, of water and/or volatile substances (i.e. substances which contribute to "loss on ignition" (LOI)).

The cured mixture (i.e. the solid precursor or the expandable material) may comprise: from about 0.1 wt. % to about 25 wt. %, for example from about 0.2 wt. % to about 5 wt. %, of $X_2O$, wherein X is an alkali metal such as Na or Li; from about 0.1 wt. % to about 30 wt. %, for example from about 0.2 wt. % to about 20 wt. %, of $Al_2O_3$; from about 30 wt. % to about 80 wt. %, for example from about 40 wt. % to about 60 wt. %, of $SiO_2$; from about 10 wt. % to about 40 wt. %, for example from about 15 wt. % to about 30 wt. %, of $H_2O$; and optionally no more than about 5 wt. %, for example no more than about 3.5 wt. %, of $B_2O_3$.

The cured mixture (i.e. the solid precursor or the expandable material) may comprise: from about 0.1 wt. % to about 25 wt. %, for example from about 0.2 wt. % to about 5 wt. %, of $X_2O$, wherein X is an alkali metal such as Na or Li; from about 0.1 wt. % to about 30 wt. %, for example from about 0:2 wt. % to about 10 wt. %, of $Al_2O_3$; from about 30 wt. % to about 80 wt. %, for example from about 40 wt. % to about 60 wt. %, of $SiO_2$; from about 0.01 wt. % to about 2 wt. %, for example from about 0.05 wt. % to about 1 wt. %, of $Fe_2O_3$; from about 0.01 wt. % to about 1 wt. %, for example from about 0.05 wt. % to about 0.8 wt. % of CaO; no greater than about 1 wt. %, for example no greater than about 0.5 wt. % of MgO; from about 0.05 wt. % to about 3 wt. %, for example from about 0.1 wt. % to about 2 wt. %, of $K_2O$; from

about 10 wt. % to about 40 wt. %, for example from about 15 wt. % to about 30 wt. %, of $H_2O$; and optionally no more than about 5 wt. %, for example no more than about 3.5 wt. %, of $B_2O_3$.

The cured mixture (i.e. the solid precursor or the expandable material) may be amorphous (i.e. non-crystalline). The cured mixture (i.e. the solid precursor or the expandable material) may comprise (e.g. be formed from) an inorganic polymer network, i.e. an inorganic polymer network incorporating water, for example, in the form of hydroxyl groups. The cured mixture (i.e. the solid precursor or the expandable) may therefore be described as a synthetic perlitic material, e.g. a synthetic perlite.

Method

The method may comprise dissolving the alkali compound in the water to form an alkaline aqueous solution. Dissolution of the alkali compound in the water may be an exothermic process. The method may comprise adding the silicate material to the alkaline aqueous solution and stirring. Adding the silicate material to the alkaline aqueous solution may comprise adding any other input materials to the alkaline aqueous solution, including any silicate glasses, silicate minerals and/or reactive silica. The method may comprise stirring the mixture, typically for 1 to 10 minutes, to form a paste. The heat produced on dissolution of the alkali compound may assist in dissolution of the other input materials.

The method may comprise moulding the mixture prior to curing.

The mixture may be cured in an oven. The mixture may be cured at a temperature no greater than about 250°C, for example, from about 20°C to about 200°C, or from about 20°C to about 150°C, or from about 20°C to about 120°C, or from about 50°C to about 120°C, or from about 50°C to about 110°C, or from about 70°C to about 100°C. The mixture may be cured for no less than about an hour, for example, no less than about two hours, or no less than about four hours, or no less than about six hours, or no less than about eight hours, or no less than about ten hours, or no less than about twelve hours, or no less than about twenty-four hours. The mixture may be cured for no greater than about seventy-two hours, for example, no greater than about forty-eight hours, or no greater than about twenty-four hours. The mixture may be cured for from about an hour to about seventy-two hours, for example, from about two hours to about forty-eight hours, or from about four hours to about twenty-four hours, or from about four hours to about twelve hours, or from about twelve hours to about seventy-two hours, or from about twenty-four hours to about seventy-two hours.

During curing, the mixture may undergo polymerisation to form an inorganic polymer network. The polymerisation of the mixture may be similar to a geopolymerisation process. In geopolymerisation, aluminosilicate materials, upon alkali activation, polymerise to form a rigid three-dimensional framework of $SiO_4$ and $AlO_4$ tetrahedra linked by shared oxygens. The form of the framework created (i.e. poly(sialate), poly(sialate-siloxo) or poly(sialate-disiloxo) depends on the ratio of $SiO_2$ to $Al_2O_3$ in the initial mixture. However, the inorganic polymer network formed during curing of the mixture in the present invention is typically less rigid and more linear than a geopolymer and incorporates large amounts of water.

The solid precursor may be crushed following curing to form a granular material (i.e. a granular expandable material). The method may comprise sieving the solid precursor (i.e. the granular material) following crushing. The method may comprise crushing (and optionally sieving) the solid precursor to obtain a granular material (i.e. a granular expandable material) having a particle size (e.g. a $d_{50}$) no less than about 10 μm, for example, no less than about 50 μm, or no less than about 100 μm, or no less than about 250 μm, or no less than about 500 μm, or no less than about 750 μm, or no less than about 1 mm. The method may comprise crushing (and optionally sieving) the solid precursor to obtain a granular material (i.e. a granular expandable material) having a mean particle size (e.g. a $d_{50}$) no greater than about 10 mm, for example, no greater than about 8 mm, or no greater than about 6 mm, or no greater than about 4 mm, 2 mm, or no greater than about 1.5 mm, or no greater than about 1 mm. The method may comprise crushing (and optionally sieving) the solid precursor to obtain a granular material (i.e. a granular expandable material) having a mean particle size (e.g. a $d_{50}$) from about 10 μm to about 10 mm, or from about 10 μm to about 8 mm, or from about 10 μm to about 6 mm, or from about 10 μm to about 4 mm, or from about 10 μm to about 2 mm, or from about 100 μm to about 2 mm, or from about 500 μm to about 1 mm, or from about 250 μm to about 750 μm, or from about 500 μm to about 1.5 mm, or from about 750 μm to about 1.5 mm.

The method may comprise more than one crushing and/or sieving step. For example, the method may comprise: crushing the solid precursor in a first crushing step to form a granular material having a first particle size; determining the first particle size; and then crushing the granular material in a second crushing step to form a granular material having a second particle size, the second particle size being lower than the first particle size.

The method may comprise heating the granular material (i.e. the granular expandable material) to form an expanded granular material. The method may comprise heating the granular material (i.e. the granular expandable material) to a temperature no greater than about 1100°C, for example, no greater than about 1000°C, or no greater than about 900°C, or no greater than about 700°C, or no greater than about 600°C. The method may comprise heating the granular material (i.e. the granular expandable material) to a temperature no less than about 200°C, for example, no less than about 300°C, or no less than about 400°C. The method may comprise heating the granular material (i.e. the granular expandable material) to a temperature from about 200°C to about 1100°C, for example, from about 200°C to about 1000°C, or from about 200°C to about 900°C, or from about 300°C to about 700°C, or from about 300°C to about 700°C, or from about 400°C to about 600°C.

The method may comprise heating the granular material (i.e. the granular expandable material) in a furnace, for example in a furnace selected from: an infra-red (IR) furnace, an electrically heated furnace, a natural gas or LPG expansion furnace. The furnace may a horizontal furnace, a vertical furnace or an inclined furnace. The method may comprise heating the granular material (i.e. the granular expandable material) in a fluidized bed reactor.

The method may comprise crushing (and optionally sieving) the solid precursor to obtain a granular material (i.e. a granular expandable material) having a particle size (e.g. a $d_{50}$) no less than about 500 $\mu$m, for example no less than about 1 mm, or no less than about 2 mm, and heating the granular material (i.e. the granular expandable material) in an infra-red (IR) furnace to form an expanded granular material. An example infra-red (IR) furnace contains Elstein HTS (125x125 mm) ceramic infra-red panel radiators which operate at 64 kW/m with a maximum operating temperature of 860°C. The infra-red (IR) furnace may contain a steel vibrating plate for vibrating the granular material during heating. Example mechanical vibrating elements are available from Italvibras G. Silingardi S.p.A, for example model M3/45-S02, Series: AA, C.F.KN 0.44/0.64, RPM 3000/3800.

The method may comprise crushing (and optionally sieving) the solid precursor to obtain a granular material (i.e. a granular expandable material) having a particle size (e.g. a $d_{50}$) no greater than about 500 $\mu$m and heating the granular material (i.e. the granular expandable material) in an electrical furnace (for example, a vertical electrical furnace) to form an expanded granular material.

Properties

The expanded granular material may have a loose bulk density, measured according to PI 200-77, of no less than about 15 kg/m$^3$, for example, no less than about 20 kg/m$^3$, or no less than about 30 kg/m$^3$, or no less than about 40 kg/m$^3$, or no less than about 50 kg/m$^3$, or no less than about 55 kg/m$^3$, or no less than about 60 kg/m$^3$, or no less than about 65 kg/m$^3$, or no less than about 70 kg/m$^3$. The expanded granular material may have a loose bulk density, measured according to PI 200-77, of no greater than about 450 kg/m$^3$, for example, no greater than about 400 kg/m$^3$, or no greater than about 350 kg/m$^3$, or no greater than about 300 kg/m$^3$, or no greater than about 250 kg/m$^3$, or no greater than about 200 kg/m$^3$, or no greater than about 150 kg/m$^3$, or no greater than about 100 kg/m$^3$, or no greater than about 80 kg/m$^3$, or no greater than about 70 kg/m$^3$, or no greater than about 60 kg/m$^3$, or no greater than about 50 kg/m$^3$, or no greater than about 40 kg/m$^3$.

The expanded granular material may have a loose bulk density, measured according to PI 200-77, of from about 15 kg/m$^3$ to about 450 kg/m$^3$, for example, from about 15 kg/m$^3$ to about 400 kg/m$^3$, or from about 15 kg/m$^3$ to about 350 kg/m$^3$, or from about 15 kg/m$^3$ to about 300 kg/m$^3$, or from about 15 kg/m$^3$ to about 250 kg/m$^3$, or from about 15 kg/m$^3$ to about 200 kg/m$^3$, or from about 15 kg/m$^3$ to about 150 kg/m$^3$, or from about 15 kg/m$^3$ to about 100 kg/m$^3$, or from about 15 kg/m$^3$ to about 80 kg/m$^3$, or from about 15 kg/m$^3$ to about 70 kg/m$^3$, or from about 15 kg/m$^3$ to about 60 kg/m$^3$, or from about 15 kg/m$^3$ to about 50 kg/m$^3$, or from about 15 kg/m$^3$ to about 40 kg/m$^3$.

The expanded granular material may have a loose bulk density, measured according to PI 200-77, of from about 20 kg/m$^3$ to about 450 kg/m$^3$, for example, from about 20 kg/m$^3$ to about 400 kg/m$^3$, or from about 20 kg/m$^3$ to about 350 kg/m$^3$, or from about 20 kg/m$^3$ to about 300 kg/m$^3$, or from about 20 kg/m$^3$ to about 250 kg/m$^3$, or from about 20 kg/m$^3$ to about 200 kg/m$^3$, or from about 20 kg/m$^3$ to about 150 kg/m$^3$, or from about 20 kg/m$^3$ to about 100 kg/m$^3$, or from about 20 kg/m$^3$ to about 80 kg/m$^3$, or from about 20 kg/m$^3$ to about 70 kg/m$^3$, or from about 20 kg/m$^3$ to about 60 kg/m$^3$, or from about 20 kg/m$^3$ to about 50 kg/m$^3$, or from about 20 kg/m$^3$ to about 40 kg/m$^3$.

The expanded granular material may have a loose bulk density, measured according to PI 200-77, of from about 30 kg/m$^3$ to about 450 kg/m$^3$, for example, from about 30 kg/m$^3$ to about 400 kg/m$^3$, or from about 30 kg/m$^3$ to about 350 kg/m$^3$, or from about 30 kg/m$^3$ to about 300 kg/m$^3$, or from about 30 kg/m$^3$ to about 250 kg/m$^3$, or from about 30 kg/m$^3$ to about 200 kg/m$^3$, or from about 30 kg/m$^3$ to about 150 kg/m$^3$, or from about 30 kg/m$^3$ to about 100 kg/m$^3$, or from about 30 kg/m$^3$ to about 80 kg/m$^3$, or from about 30 kg/m$^3$ to about 70 kg/m$^3$, or from about 30 kg/m$^3$ to about 60 kg/m$^3$, or from about 30 kg/m$^3$ to about 50 kg/m$^3$, or from about 30 kg/m$^3$ to about 40 kg/m$^3$.

The expanded granular material may have a loose bulk density, measured according to PI 200-77, of from about 40 kg/m$^3$ to about 450 kg/m$^3$, for example, from about 40 kg/m$^3$ to about 400 kg/m$^3$, or from about 40 kg/m$^3$ to about 350 kg/m$^3$, or from about 40 kg/m$^3$ to about 300 kg/m$^3$, or from about 40 kg/m$^3$ to about 250 kg/m$^3$, or from about 40 kg/m$^3$ to about 200 kg/m$^3$, or from about 40 kg/m$^3$ to about 150 kg/m$^3$, or from about 40 kg/m$^3$ to about 100 kg/m$^3$, or from about 40 kg/m$^3$ to about 80 kg/m$^3$, or from about 40 kg/m$^3$ to about 70 kg/m$^3$, or from about 40 kg/m$^3$ to about 60 kg/m$^3$, or from about 40 kg/m3 to about 50 kg/m$^3$, or from about 40 kg/m$^3$ to about 40 kg/m$^3$.

The expanded granular material may have a loose bulk density, measured according to PI 200-77, of from about 50 kg/m$^3$ to about 450 kg/m$^3$, for example, from about 50 kg/m$^3$ to about 400 kg/m$^3$, or from about 50 kg/m$^3$ to about 350 kg/m$^3$, or from about 50 kg/m$^3$ to about 300 kg/m$^3$, or from about 50 kg/m$^3$ to about 250 kg/m$^3$, or from about

50 kg/m$^3$ to about 200 kg/m$^3$, or from about 50 kg/m$^3$ to about 150 kg/m$^3$, or from about 50 kg/m$^3$ to about 100 kg/m$^3$, or from about 50 kg/m$^3$ to about 80 kg/m$^3$, or from about 50 kg/m$^3$ to about 70 kg/m$^3$, or from about 50 kg/m$^3$ to about 60 kg/m$^3$, or from about 50 kg/m$^3$ to about 50 kg/m$^3$, or from about 50 kg/m$^3$ to about 40 kg/m$^3$.

The expanded granular material may have a loose bulk density, measured according to PI 200-77, of from about 55 kg/m$^3$ to about 450 kg/m$^3$, for example, from about 55 kg/m$^3$ to about 400 kg/m$^3$, or from about 55 kg/m$^3$ to about 350 kg/m$^3$, or from about 55 kg/m$^3$ to about 300 kg/m$^3$, or from about 55 kg/m$^3$ to about 250 kg/m$^3$, or from about 55 kg/m$^3$ to about 200 kg/m$^3$, or from about 55 kg/m$^3$ to about 150 kg/m$^3$, or from about 55 kg/m$^3$ to about 100 kg/m$^3$, or from about 55 kg/m$^3$ to about 80 kg/m$^3$, or from about 55 kg/m$^3$ to about 70 kg/m$^3$, or from about 55 kg/m$^3$ to about 60 kg/m$^3$, or from about 55 kg/m$^3$ to about 50 kg/m$^3$, or from about 55 kg/m$^3$ to about 40 kg/m$^3$.

The expanded granular material may have a loose bulk density, measured according to PI 200-77, of from about 60 kg/m$^3$ to about 450 kg/m$^3$, for example, from about 60 kg/m$^3$ to about 400 kg/m$^3$, or from about 60 kg/m$^3$ to about 350 kg/m$^3$, or from about 60 kg/m$^3$ to about 300 kg/m$^3$, or from about 60 kg/m$^3$ to about 250 kg/m$^3$, or from about 60 kg/m$^3$ to about 200 kg/m$^3$, or from about 60 kg/m$^3$ to about 150 kg/m$^3$, or from about 60 kg/m$^3$ to about 100 kg/m$^3$, or from about 60 kg/m$^3$ to about 80 kg/m$^3$, or from about 60 kg/m$^3$ to about 70 kg/m$^3$, or from about 60 kg/m$^3$ to about 60 kg/m$^3$, or from about 60 kg/m$^3$ to about 50 kg/m$^3$, or from about 60 kg/m$^3$ to about 40 kg/m$^3$.

The expanded granular material may have a loose bulk density, measured according to PI 200-77, of from about 65 kg/m$^3$ to about 450 kg/m$^3$, for example, from about 65 kg/m$^3$ to about 400 kg/m$^3$, or from about 65 kg/m$^3$ to about 350 kg/m$^3$, or from about 65 kg/m$^3$ to about 300 kg/m$^3$, or from about 65 kg/m$^3$ to about 250 kg/m$^3$, or from about 65 kg/m$^3$ to about 200 kg/m$^3$, or from about 65 kg/m$^3$ to about 150 kg/m$^3$, or from about 65 kg/m$^3$ to about 100 kg/m$^3$, or from about 65 kg/m$^3$ to about 80 kg/m$^3$, or from about 65 kg/m$^3$ to about 70 kg/m$^3$, or from about 65 kg/m$^3$ to about 60 kg/m$^3$, or from about 65 kg/m$^3$ to about 50 kg/m$^3$, or from about 65 kg/m$^3$ to about 40 kg/m$^3$.

The expanded granular material may have a loose bulk density, measured according to PI 200-77, of from about 70 kg/m$^3$ to about 450 kg/m$^3$, for example, from about 70 kg/m$^3$ to about 400 kg/m$^3$, or from about 70 kg/m$^3$ to about 350 kg/m$^3$, or from about 70 kg/m$^3$ to about 300 kg/m$^3$, or from about 70 kg/m$^3$ to about 250 kg/m$^3$, or from about 70 kg/m$^3$ to about 200 kg/m$^3$, or from about 70 kg/m$^3$ to about 150 kg/m$^3$, or from about 70 kg/m$^3$ to about 100 kg/m$^3$, or from about 70 kg/m$^3$ to about 80 kg/m$^3$, or from about 70 kg/m$^3$ to about 70 kg/m$^3$, or from about 70 kg/m$^3$ to about 60 kg/m$^3$, or from about 70 kg/m$^3$ to about 50 kg/m$^3$, or from about 70 kg/m$^3$ to about 40 kg/m$^3$.

The loose bulk density of a material may be measured by taking a sample of the material with a sampler (750-1000 mL), pouring the sample into a weighed cylinder, taking care not to disturb the sample causing settlement. The weight and volume of the sample is then recorded and the loose bulk density is calculated according to:

$$\text{Loose Bulk Density [kg/m}^3\text{]} = 1000 \times \text{Weight [g] / Volume [mL]}$$

In addition to, or in alternative to, any loose bulk density described above, the expanded granular material may have a compaction resistance, measured according to PI 306-80, of no less than about 3 PSI at 2", for example, no less than about 5 PSI at 2", or no less than about 10 PSI at 2", or no less than about 20 PSI at 2", or no less than about 30 PSI at 2", or no less than about 40 PSI at 2". The expanded granular material may have a compaction resistance, measured according to PI 306-80, of no greater than about 350 PSI at 2", for example, no greater than about 300 PSI at 2", or no greater than about 250 PSI at 2", or no greater than about 200 PSI at 2", or no greater than about 100 PSI at 2", or no greater than about 90 PSI at 2", or no greater than about 80 PSI at 2", or no greater than about 75 PSI at 2", or no greater than about 50 PSI at 2", or no greater than about 40 PSI at 2", or no greater than about 30 PSI at 2", or no greater than about 20 PSI at 2", or no greater than about 15 PSI at 2", or no greater than about 10 PSI at 2".

The expanded granular material may have a compaction resistance, measured according to PI 306-80, from about 3 PSI to about 350 PSI at 2", for example, from about 3 PSI to about 300 PSI at 2", or from about 3 PSI to about 250 PSI at 2", or from about 3 PSI to about 200 PSI at 2", or from about 3 PSI to about 100 PSI at 2", or from about 3 PSI to about 90 PSI at 2", or from about 3 PSI to about 80 PSI at 2", or from about 3 PSI to about 75 PSI at 2", or from about 3 PSI to about 50 PSI at 2", or from about 3 PSI to about 40 PSI at 2", or from about 3 PSI to about 30 PSI at 2", or from about 3 PSI to about 20 PSI at 2", or from about 3 PSI to about 15 PSI at 2", or from about 3 PSI to about 10 PSI at 2".

The expanded granular material may have a compaction resistance, measured according to PI 306-80, from about 5 PSI to about 350 PSI at 2", for example, from about 5 PSI to about 300 PSI at 2", or from about 5 PSI to about 250 PSI at 2", or from about 5 PSI to about 200 PSI at 2", or from about 5 PSI to about 100 PSI at 2", or from about 5 PSI to about 90 PSI at 2", or from about 5 PSI to about 80 PSI at 2", or from about 5 PSI to about 75 PSI at 2", or from about 5 PSI to about 50 PSI at 2", or from about 5 PSI to about 40 PSI at 2", or from about 5 PSI to about 30 PSI at 2", or from about 5 PSI to about 20 PSI at 2", or from about 5 PSI to about 15 PSI at 2", or from about 5 PSI to about 10 PSI at 2".

The expanded granular material may have a compaction resistance, measured according to PI 306-80, from about 10 PSI to about 350 PSI at 2", for example, from about 10 PSI to about 300 PSI at 2", or from about 10 PSI to about 250 PSI at 2", or from about 10 PSI to about 200 PSI at 2", or from about 10 PSI to about 100 PSI at 2", or from about 10 PSI to about 90 PSI at 2", or from about 10 PSI to about 80 PSI at 2", or from about 10 PSI to about 75 PSI at 2", or from about 10 PSI to about 50 PSI at 2", or from about 10 PSI to about 40 PSI at 2", or from about 10 PSI to about 30 PSI at 2", or from about 10 PSI to about 20 PSI at 2", or from about 10 PSI to about 15 PSI at 2", or from about 10 PSI to about 10 PSI at 2".

The expanded granular material may have a compaction resistance, measured according to PI 306-80, from about 20 PSI to about 350 PSI at 2", for example, from about 20 PSI to about 300 PSI at 2", or from about 20 PSI to about 250 PSI at 2", or from about 20 PSI to about 200 PSI at 2", or from about 20 PSI to about 100 PSI at 2", or from about 20 PSI to about 90 PSI at 2", or from about 20 PSI to about 80 PSI at 2", or from about 20 PSI to about 75 PSI at 2", or from about 20 PSI to about 50 PSI at 2", or from about 20 PSI to about 40 PSI at 2", or from about 20 PSI to about 30 PSI at 2", or from about 20 PSI to about 20 PSI at 2", or from about 20 PSI to about 15 PSI at 2", or from about 20 PSI to about 10 PSI at 2".

The expanded granular material may have a compaction resistance, measured according to PI 306-80, from about 30 PSI to about 350 PSI at 2", for example, from about 30 PSI to about 300 PSI at 2", or from about 30 PSI to about 250 PSI at 2", or from about 30 PSI to about 200 PSI at 2", or from about 30 PSI to about 100 PSI at 2", or from about 30 PSI to about 90 PSI at 2", or from about 30 PSI to about 80 PSI at 2", or from about 30 PSI to about 75 PSI at 2", or from about 30 PSI to about 50 PSI at 2", or from about 30 PSI to about 40 PSI at 2", or from about 30 PSI to about 30 PSI at 2", or from about 30 PSI to about 20 PSI at 2", or from about 30 PSI to about 15 PSI at 2", or from about 30 PSI to about 10 PSI at 2".

The expanded granular material may have a compaction resistance, measured according to PI 306-80, from about 40 PSI to about 3500 PSI at 2", for example, from about 40 PSI to about 300 PSI at 2", or from about 40 PSI to about 250 PSI at 2", or from about 40 PSI to about 200 PSI at 2", or from about 40 PSI to about 100 PSI at 2", or from about 40 PSI to about 90 PSI at 2", or from about 40 PSI to about 80 PSI at 2", or from about 40 PSI to about 75 PSI at 2", or from about 40 PSI to about 50 PSI at 2", or from about 40 PSI to about 40 PSI at 2", or from about 40 PSI to about 30 PSI at 2", or from about 40 PSI to about 20 PSI at 2", or from about 40 PSI to about 15 PSI at 2", or from about 40 PSI to about 10 PSI at 2".

Additionally or alternatively, the expanded granular material may have a compaction resistance, measured according to PI 306-80, of no less than about 0.5 PSI at 1", for example, no less than about 1 PSI at 1", or no less than about 2 PSI at 1", or no less than about 2.5 PSI at 1". The expanded granular material may have a compaction resistance, measured according to PI 306-80, of no greater than about 50 PSI at 1", for example, no greater than about 40 PSI at 1", or no greater than about 30 PSI at 1". The expanded granular material may have a compaction resistance, measured according to PI 306-80, from about 0.5 PSI to about 50 PSI at 1", for example, from about 1 PSI to about 40 PSI at 1", or from about 2 PSI to about 40 PSI at 1", or from about 2.5 PSI to about 30 PSI at 1".

Compaction resistance of a material may be measured by taking a representative sample of the material of about 500 mL volume with a sampler. The sample is put in a container of a computer-controlled hydraulic press. The container is shaken 25 times to settle the sample. Then another 250 mL of the material is added to the container. The sample is allowed to settle again by shaking another 25 times. The sample is then levelled on the top of the container. The sample is pressed under the automated hydraulic press at a speed of 20 mm/min and a maximum load of 6800 N (or 2800N for very lightweight samples). The computer continuously records the load and displacement of the sample and plots the data as a graph. Once the maximum load is reached, the instrument calculates the total displacement and the zero deformation point. The load/displacement data are exported, and the respective load values (B) for 1 inch (i.e. 1") and 2 inch (i.e. 2") displacement (adding the zero deformation point, i.e. 1 inch deformation distance (mm) = 25.4 + zero deformation point (mm)) are used to calculate the compaction resistance according to:

$$\text{Compaction Resistance [PSI]} = (\ B\ [N]\ /\ A\ [m^2]\ )\ *\ 0.000145037738007$$

where A is the cross-sectional area of the container.

In addition to, or in alternative to, the loose bulk density and/or compaction resistance described above, the expanded granular material may have a thermal conductivity (i.e. $\lambda$, lambda value), measured according to EN 12667, of no less than about 0.0300 W/mK, for example, no less than about 0.0310 W/mK, or no less than about 0.0320 W/mK, or no less than about 0.0330 W/mK, or no less than about 0.0340 W/mK, or no less than about 0.0350 W/mK, or no less than about 0.0360 W/mK. The expanded granular material may have a thermal conductivity, measured according to EN 12667, of no greater than about 0.0700 W/mK, for example, no greater than about 0.0600 W/mK, or no greater than about 0.0500 W/mK, or no greater than about 0.0490 W/mK, or no greater than about 0.0480 W/mK, or no greater than about 0.0470 W/mK, or no greater than about 0.0460 W/mK, or no greater than about 0.0450 W/mK, or no greater than about 0.0440 W/mK, or no greater than about 0.0430 W/mK, or no greater than about 0.0420 W/mK, or no greater than about 0.0410 W/mK, or no greater than about 0.0400 W/mK, or no greater than about 0.0390 W/mK, or no greater than about 0.0380 W/mK, or no greater than about 0.0370 W/mK, or no greater than about 0.0360 W/mK, or no greater than about 0.0350 W/mK, or no greater than about 0.0340 W/mK.

The expanded granular material may have a thermal conductivity (i.e. $\lambda$, lambda value), measured according to EN 12667, of from about 0.0300 W/mK to about 0.0700 W/mK, for example, or from about 0.0300 W/mK to about 0.0600 W/mK, or from about 0.0300 W/mK to about 0.0500 W/mK, from about 0.0300 W/mK to about 0.0490 W/mK, or from about 0.0300 W/mK to about 0.0480 W/mK, or from about 0.0300 W/mK to about 0.0470 W/mK, or from about 0.0300 W/mK to about 0.0460 W/mK, or from about 0.0300 W/mK to about 0.0450 W/mK, or from about 0.0300 W/mK to about 0.0440 W/mK, or from about 0.0300 W/mK to about 0.0430 W/mK, or from about 0.0300 W/mK to about 0.0420 W/mK, or from about 0.0300 W/mK to about 0.0410 W/mK, or from about 0.0300 W/mK to about 0.0400 W/mK, or from about 0.0300 W/mK to about 0.0390 W/mK, or from 0.0300 W/mK to about 0.0380 W/mK, or from about 0.0300 W/mK to about 0.0370 W/mK, or from 0.0300 W/mK to about 0.0380 W/mK, or from about 0.0300 W/mK to about 0.0360 W/mK, or from 0.0300 W/mK to about 0.0380 W/mK, or from about 0.0300 W/mK to about 0.0350 W/mK, or from 0.0300 W/mK to about 0.0380 W/mK, or from about 0.0300 W/mK to about 0.0340 W/mK.

The expanded granular material may have a thermal conductivity (i.e. $\lambda$, lambda value), measured according to EN 12667, of from about 0.0310 W/mK to about 0.0500 W/mK, for example, from about 0.0310 W/mK to about 0.0490 W/mK, or from about 0.0310 W/mK to about 0.0480 W/mK, or from about 0.0310 W/mK to about 0.0470 W/mK, or from about 0.0310 W/mK to about 0.0460 W/mK, or from about 0.0310 W/mK to about 0.0450 W/mK, or from about 0.0310 W/mK to about 0.0440 W/mK, or from about 0.0310 W/mK to about 0.0430 W/mK, or from about 0.0310 W/mK to about 0.0420 W/mK, or from about 0.0310 W/mK to about 0.0410 W/mK, or from about 0.0310 W/mK to about 0.0400 W/mK, or from about 0.0310 W/mK to about 0.0390 W/mK, or from 0.0310 W/mK to about 0.0380 W/mK, or from about 0.0310 W/mK to about 0.0370 W/mK, or from 0.0310 W/mK to about 0.0380 W/mK, or from about 0.0310 W/mK to about 0.0360 W/mK, or from 0.0310 W/mK to about 0.0380 W/mK, or from about 0.0310 W/mK to about 0.0350 W/mK, or from 0.0310 W/mK to about 0.0380 W/mK, or from about 0.0310 W/mK to about 0.0340 W/mK.

The expanded granular material may have a thermal conductivity (i.e. A, lambda value), measured according to EN 12667, of from about 0.0320 W/mK to about 0.0500 W/mK, for example, from about 0.0320 W/mK to about 0.0490 W/mK, or from about 0.0320 W/mK to about 0.0480 W/mK, or from about 0.0320 W/mK to about 0.0470 W/mK, or from about 0.0320 W/mK to about 0.0460 W/mK, or from about 0.0320 W/mK to about 0.0450 W/mK, or from about 0.0320 W/mK to about 0.0440 W/mK, or from about 0.0320 W/mK to about 0.0430 W/mK, or from about 0.0320 W/mK to about 0.0420 W/mK, or from about 0.0320 W/mK to about 0.0410 W/mK, or from about 0.0320 W/mK to about 0.0400 W/mK, or from about 0.0320 W/mK to about 0.0390 W/mK, or from 0.0320 W/mK to about 0.0380 W/mK, or from about 0.0320 W/mK to about 0.0370 W/mK, or from 0.0320 W/mK to about 0.0380 W/mK, or from about 0.0320 W/mK to about 0.0360 W/mK, or from 0.0320 W/mK to about 0.0380 W/mK, or from about 0.0320 W/mK to about 0.0350 W/mK, or from 0.0320 W/mK to about 0.0380 W/mK, or from about 0.0320 W/mK to about 0.0340 W/mK.

The expanded granular material may have a thermal conductivity (i.e. A, lambda value), measured according to EN 12667, of from about 0.0330 W/mK to about 0.0500 W/mK, for example, from about 0.0330 W/mK to about 0.0490 W/mK, or from about 0.0330 W/mK to about 0.0480 W/mK, or from about 0.0330 W/mK to about 0.0470 W/mK, or from about 0.0330 W/mK to about 0.0460 W/mK, or from about 0.0330 W/mK to about 0.0450 W/mK, or from about 0.0330 W/mK to about 0.0440 W/mK, or from about 0.0330 W/mK to about 0.0430 W/mK, or from about 0.0330 W/mK to about 0.0420 W/mK, or from about 0.0330 W/mK to about 0.0410 W/mK, or from about 0.0330 W/mK to about 0.0400 W/mK, or from about 0.0330 W/mK to about 0.0390 W/mK, or from 0.0330 W/mK to about 0.0380 W/mK, or from about 0.0330 W/mK to about 0.0370 W/mK, or from 0.0330 W/mK to about 0.0380 W/mK, or from about 0.0330 W/mK to about 0.0360 W/mK, or from 0.0330 W/mK to about 0.0380 W/mK, or from about 0.0330 W/mK to about 0.0350 W/mK, or from 0.0330 W/mK to about 0.0380 W/mK, or from about 0.0330 W/mK to about 0.0340 W/mK.

The expanded granular material may have a thermal conductivity (i.e. A, lambda value), measured according to EN 12667, of from about 0.0340 W/mK to about 0.0500 W/mK, for example, from about 0.0340 W/mK to about 0.0490 W/mK, or from about 0.0340 W/mK to about 0.0480 W/mK, or from about 0.0340 W/mK to about 0.0470 W/mK, or from about 0.0340 W/mK to about 0.0460 W/mK, or from about 0.0340 W/mK to about 0.0450 W/mK, or from about 0.0340 W/mK to about 0.0440 W/mK, or from about 0.0340 W/mK to about 0.0430 W/mK, or from about 0.0340 W/mK to about 0.0420 W/mK, or from about 0.0340 W/mK to about 0.0410 W/mK, or from about 0.0340 W/mK to about 0.0400 W/mK, or from about 0.0340 W/mK to about 0.0390 W/mK, or from 0.0340 W/mK to about 0.0380 W/mK, or from about 0.0340 W/mK to about 0.0370 W/mK, or from 0.0340 W/mK to about 0.0380 W/mK, or from about 0.0340 W/mK to about 0.0360 W/mK, or from 0.0340 W/mK to about 0.0380 W/mK, or from about 0.0340 W/mK to about 0.0350 W/mK, or from 0.0340 W/mK to about 0.0380 W/mK, or from about 0.0340 W/mK to about 0.0340 W/mK.

The expanded granular material may have a thermal conductivity (i.e. A, lambda value), measured according to EN 12667, of from about 0.0350 W/mK to about 0.0500 W/mK, for example, from about 0.0350 W/mK to about 0.0490 W/mK, or from about 0.0350 W/mK to about 0.0480 W/mK, or from about 0.0350 W/mK to about 0.0470 W/mK, or from about 0.0350 W/mK to about 0.0460 W/mK, or from about 0.0350 W/mK to about 0.0450 W/mK, or from about 0.0350 W/mK to about 0.0440 W/mK, or from about 0.0350 W/mK to about 0.0430 W/mK, or from about 0.0350 W/mK to about 0.0420 W/mK, or from about 0.0350 W/mK to about 0.0410 W/mK, or from about 0.0350 W/mK to about 0.0400 W/mK, or from about 0.0350 W/mK to about 0.0390 W/mK, or from 0.0350 W/mK to about 0.0380 W/mK, or from about 0.0350 W/mK to about 0.0370 W/mK, or from about 0.0350 W/mK to about 0.0380 W/mK, or from about 0.0350 W/mK to about 0.0360 W/mK, or from 0.0350 W/mK to about 0.0380 W/mK, or from about 0.0350 W/mK to about 0.0350 W/mK, or from 0.0350 W/mK to about 0.0380 W/mK, or from about 0.0350 W/mK to about 0.0340 W/mK.

The expanded granular material may have a thermal conductivity (i.e. A, lambda value), measured according to EN 12667, of from about 0.0360 W/mK to about 0.0500 W/mK, for example, from about 0.0360 W/mK to about 0.0490 W/mK, or from about 0.0360 W/mK to about 0.0480 W/mK, or from about 0.0360 W/mK to about 0.0470 W/mK, or from about 0.0360 W/mK to about 0.0460 W/mK, or from about 0.0360 W/mK to about 0.0450 W/mK, or from about 0.0360 W/mK to about 0.0440 W/mK, or from about 0.0360 W/mK to about 0.0430 W/mK, or from about 0.0360 W/mK to about 0.0420 W/mK, or from about 0.0360 W/mK to about 0.0410 W/mK, or from about 0.0360 W/mK to about 0.0400 W/mK, or from about 0.0360 W/mK to about 0.0390 W/mK, or from 0.0360 W/mK to about 0.0380 W/mK, or from about 0.0360 W/mK to about 0.0370 W/mK, or from 0.0360 W/mK to about 0.0380 W/mK, or from about 0.0360 W/mK to about 0.0360 W/mK, or from 0.0360 W/mK to about 0.0380 W/mK, or from about 0.0360 W/mK to about 0.0350 W/mK, or from 0.0360 W/mK to about 0.0380 W/mK, or from about 0.0360 W/mK to about 0.0340 W/mK.

The expanded granular material may have a thermal conductivity (i.e. A, lambda value), measured according to EN 12667, of from about 0.042 W/mK to about 0.055 W/mK, or from about 0.055 W/mK to about 0.070 W/mK.

For example, it may be that the expanded granular material has: a loose bulk density, measured according to PI 200-77, of from about 15 kg/m$^3$ to about 450 kg/m$^3$, for example from about 20 kg/m$^3$ to about 100 kg/m$^3$, or from about 20 kg/m$^3$ to about 30 kg/m$^3$, or from about 20 kg/m$^3$ to about 40 kg/m$^3$, or from about 55 kg/m$^3$ to about 100 kg/m$^3$, or from about 70 kg/m$^3$ to about 100 kg/m$^3$; a compaction resistance, measured according to PI 306-80, of from about 3 PSI to about 100 PSI at 2", for example from about 3 PSI to about 10 PSI at 2", or from about 30 PSI to about 80 PSI at 2", or from about 40 PSI to about 75 PSI at 2", or from about 5 PSI to about 20 PSI at 2"; and/or a thermal conductivity, measured according to EN 12667, of from about 0.0300 W/mK to about 0.0700 W/mk, for example from about 0.0320 W/mK to about 0.0420 W/mK, from about 0.0350 W/mK to about 0.0400 W/mK, or from about 0.0360 W/mK to about 0.0410 W/mK, or from about 0.0320 W/mK to about 0.0340 W/mK, or from about 0.042 W/mK to about 0.055 W/mK, or from about 0.055 W/mK to about 0.070 W/mK.

The thermal conductivity of a material can be measured using a NetzschHFM 436/3 Lambda Heat Flow meter. Samples of the material are held at standard laboratory conditions before the measurement is taken. Loose fill samples are placed in a custom frame constructed from a 30x30x2.5 cm XPS piece, with inner dimensions 15x15cm, with a thin plastic membrane on the bottom to hold the loose fill sample in place. The mean temperature and the temperature difference between the cold and hot plate are both set to 10°C.

It may be that the expanded granular material has:

(a) a loose bulk density, measured according to PI 200-77, of from about 18 kg/m$^3$ to about 30 kg/m$^3$;
(b) a compaction resistance, measured according to PI 306-80, of from about 4 PSI to about 8 PSI at 2"; and/or
(c) a thermal conductivity, measured according to EN 12667, of from about 0.0300 W/mK to about 0.0400 W/mk.

It may be that the expanded granular material has:

(a) a loose bulk density, measured according to PI 200-77, of from about 50 kg/m$^3$ to about 100 kg/m$^3$;
(b) a compaction resistance, measured according to PI 306-80, of from about 30 PSI to about 80 PSI at 2"; and/or
(c) a thermal conductivity, measured according to EN 12667, of from about 0.0350 W/mK to about 0.0450 W/mk.

It may be that the expanded granular material has:

(a) a loose bulk density, measured according to PI 200-77, of from about 70 kg/m$^3$ to about 105 kg/m$^3$;
(b) a compaction resistance, measured according to PI 306-80, of from about 40 PSI to about 75 PSI at 2"; and/or
(c) a thermal conductivity, measured according to EN 12667, of from about 0.0350 W/mK to about 0.0450 W/mk.

It may be that the expanded granular material has:

(a) a loose bulk density, measured according to PI 200-77, of from about 20 kg/m$^3$ to about 40 kg/m$^3$;
(b) a compaction resistance, measured according to PI 306-80, of from about 5 PSI to about 15 PSI at 2"; and/or
(c) a thermal conductivity, measured according to EN 12667, of from about 0.0310 W/mK to about 0.0350 W/mk.

It may be that the expanded granular material is formed from a mixture comprising:

one or more silicate materials and/or reactive silica comprising: from about 44 wt. % to about 54 wt. % of SiO$_2$; from

about 0.1 wt. % to about 1 wt. % $Na_2O$; from about 0.1 wt. % to about 1 wt. % $Al_2O_3$; less than about 0.2 wt. % $Fe_2O_3$; from about 0.05 wt. % to about 0.5 wt.% CaO; less than about 0.1 wt. % MgO; from about 0.05 wt. % to about 0.5 wt. % $K_2O$; from about 1 wt. % to about 3 wt. % $B_2O_3$; and from about 0.1 to about 1 wt. % of water and/or volatile substances (i.e. substances which contribute to "loss on ignition" (LOI));
an alkali compound; and
water;

and the expanded granular material has:

(a) a loose bulk density, measured according to PI 200-77, of from about 18 $kg/m^3$ to about 30 $kg/m^3$;
(b) a compaction resistance, measured according to PI 306-80, of from about 4 PSI to about 8 PSI at 2"; and/or
(c) a thermal conductivity, measured according to EN 12667, of from about 0.0300 W/mK to about 0.0400 W/mk.

It may be that the expanded granular material is formed from a mixture comprising:

one or more silicate materials and/or reactive silica comprising: from about 42 wt. % to about 52 wt. % of $SiO_2$; from about 1.2 wt. % to about 2.4 wt. % $Na_2O$; from about 3 wt. % to about 6 wt. % $Al_2O_3$; from about 0.1 wt. % to about 1 wt. % $Fe_2O_3$; from about 0.1 wt. % to about 1 wt.% CaO; less than about 0.2 wt. % MgO; from about 1 wt. % to about 2 wt. % $K_2O$; from about 1 wt. % to about 3 wt. % $B_2O_3$; and from about 0.5 to about 1.5 wt. % of water and/or volatile substances (i.e. substances which contribute to "loss on ignition" (LOI));
an alkali compound; and
water;

and the expanded granular material has:

(a) a loose bulk density, measured according to PI 200-77, of from about 50 $kg/m^3$ to about 100 $kg/m^3$;
(b) a compaction resistance, measured according to PI 306-80, of from about 30 PSI to about 80 PSI at 2"; and/or
(c) a thermal conductivity, measured according to EN 12667, of from about 0.0350 W/mK to about 0.0450 W/mk.

It may be that the expanded granular material is formed from a mixture comprising:

one or more silicate materials and/or reactive silica comprising: from about 42 wt. % to about 52 wt. % of $SiO_2$; from about 1.2 wt. % to about 2.4 wt. % $Na_2O$; from about 3 wt. % to about 6 wt. % $Al_2O_3$; from about 0.1 wt. % to about 1 wt. % $Fe_2O_3$; from about 0.1 wt. % to about 1 wt.% CaO; less than about 0.2 wt. % MgO; from about 1 wt. % to about 2 wt. % $K_2O$; from about 1 wt. % to about 3 wt. % $B_2O_3$; and from about 0.5 to about 1.5 wt. % of water and/or volatile substances (i.e. substances which contribute to "loss on ignition" (LOI));
an alkali compound; and
water;

and the expanded granular material has:

(a) a loose bulk density, measured according to PI 200-77, of from about 70 $kg/m^3$ to about 105 $kg/m^3$;
(b) a compaction resistance, measured according to PI 306-80, of from about 40 PSI to about 75 PSI at 2"; and/or
(c) a thermal conductivity, measured according to EN 12667, of from about 0.0350 W/mK to about 0.0450 W/mk.

It may be that the expanded granular material is formed from a mixture comprising:

one or more silicate materials and/or reactive silica comprising: from about 42 wt. % to about 52 wt. % of $SiO_2$; from about 1.2 wt. % to about 2.4 wt. % $Na_2O$; from about 2.5 wt. % to about 4.5 wt. % $Al_2O_3$; from about 0.1 wt. % to about 1 wt. % $Fe_2O_3$; from about 0.1 wt. % to about 1 wt.% CaO; less than about 0.2 wt. % MgO; from about 1 wt. % to about 2 wt. % $K_2O$; from about 1 wt. % to about 3 wt. % $B_2O_3$; and from about 0.5 to about 1.5 wt. % of water and/or volatile substances (i.e. substances which contribute to "loss on ignition" (LOI));
an alkali compound; and
water;

and the expanded granular material has:

(a) a loose bulk density, measured according to PI 200-77, of from about 20 $kg/m^3$ to about 40 $kg/m^3$;

(b) a compaction resistance, measured according to PI 306-80, of from about 5 PSI to about 15 PSI at 2"; and/or
(c) a thermal conductivity, measured according to EN 12667, of from about 0.0310 W/mK to about 0.0350 W/mk.

It may be that the expanded granular material is formed from a mixture comprising: from about 10 wt. % to about 15 wt. % of borosilicate glass; from about 35 wt. % to about 45 wt. % of silica fume; from about 15 wt. % to about 20 wt. % of sodium hydroxide; and from about 25 wt. % to about 32 wt. % of water; and the expanded granular material has:

(a) a loose bulk density, measured according to PI 200-77, of from about 18 kg/m$^3$ to about 30 kg/m$^3$;
(b) a compaction resistance, measured according to PI 306-80, of from about 4 PSI to about 8 PSI at 2"; and/or
(c) a thermal conductivity, measured according to EN 12667, of from about 0.0300 W/mK to about 0.0400 W/mk.

It may be that the expanded granular material is formed from a mixture comprising: from about 12 wt. % to about 18 wt. % of borosilicate glass; from about 5 wt. % to about 15 wt. % of silica fume; from about 10 wt. % to about 15 wt. % of sodium hydroxide; and from about 20 wt. % to about 30 wt. % of water; and the expanded granular material has:

(a) a loose bulk density, measured according to PI 200-77, of from about 50 kg/m$^3$ to about 100 kg/m$^3$;
(b) a compaction resistance, measured according to PI 306-80, of from about 30 PSI to about 80 PSI at 2"; and/or
(c) a thermal conductivity, measured according to EN 12667, of from about 0.0350 W/mK to about 0.0450 W/mk.

It may be that the expanded granular material is formed from a mixture comprising: from about 12 wt. % to about 18 wt. % of borosilicate glass; from about 5 wt. % to about 10 wt. % of silica fume; from about 8 wt. % to about 16 wt. % of sodium hydroxide; and from about 20 wt. % to about 32 wt. % of water; and the expanded granular material has:

(a) a loose bulk density, measured according to PI 200-77, of from about 70 kg/m$^3$ to about 105 kg/m$^3$;
(b) a compaction resistance, measured according to PI 306-80, of from about 40 PSI to about 75 PSI at 2"; and/or
(c) a thermal conductivity, measured according to EN 12667, of from about 0.0350 W/mK to about 0.0450 W/mk.

It may be that the expanded granular material is formed from a mixture comprising: from about 10 wt. % to about 20 wt. % of borosilicate glass; from about 10 wt. % to about 20 wt. % of silica fume; from about 10 wt. % to about 20 wt. % of sodium hydroxide; and from about 20 wt. % to about 30 wt. % of water; and the expanded granular material has:

(a) a loose bulk density, measured according to PI 200-77, of from about 20 kg/m$^3$ to about 40 kg/m$^3$;
(b) a compaction resistance, measured according to PI 306-80, of from about 5 PSI to about 15 PSI at 2"; and/or
(c) a thermal conductivity, measured according to EN 12667, of from about 0.0310 W/mK to about 0.0350 W/mk.

It may be that the expanded granular material is formed by heating an expandable granular material having a particle size (determined by granulometry by sieving) from about 0.125 mm to about 1 mm, the expandable granular material having been formed from a mixture comprising:

one or more silicate materials and/or reactive silica comprising: from about 44 wt. % to about 54 wt. % of SiO$_2$; from about 0.1 wt. % to about 1 wt. % Na$_2$O; from about 0.1 wt. % to about 1 wt. % Al$_2$O$_3$; less than about 0.2 wt. % Fe$_2$O$_3$; from about 0.05 wt. % to about 0.5 wt.% CaO; less than about 0.1 wt. % MgO; from about 0.05 wt. % to about 0.5 wt. % K$_2$O; from about 1 wt. % to about 3 wt. % B$_2$O$_3$; and from about 0.1 to about 1 wt. % of water and/or volatile substances (i.e. substances which contribute to "loss on ignition" (LOI));
an alkali compound; and
water;

wherein the expanded granular material has:

(a) a loose bulk density, measured according to PI 200-77, of from about 18 kg/m$^3$ to about 30 kg/m$^3$;
(b) a compaction resistance, measured according to PI 306-80, of from about 4 PSI to about 8 PSI at 2"; and/or
(c) a thermal conductivity, measured according to EN 12667, of from about 0.0300 W/mK to about 0.0400 W/mk.

It may be that the expanded granular material is formed by heating an expandable granular material having a particle size (determined by granulometry by sieving) less than or equal to about 2 mm, the expandable granular material having been formed from a mixture comprising:

one or more silicate materials and/or reactive silica comprising: from about 42 wt. % to about 52 wt. % of SiO$_2$; from

about 1.2 wt. % to about 2.4 wt. % $Na_2O$; from about 3 wt. % to about 6 wt. % $Al_2O_3$; from about 0.1 wt. % to about 1 wt. % $Fe_2O_3$; from about 0.1 wt. % to about 1 wt.% CaO; less than about 0.2 wt. % MgO; from about 1 wt. % to about 2 wt. % $K_2O$; from about 1 wt. % to about 3 wt. % $B_2O_3$; and from about 0.5 to about 1.5 wt. % of water and/or volatile substances (i.e. substances which contribute to "loss on ignition" (LOI));

an alkali compound; and

water;

wherein the expanded granular material has:

(a) a loose bulk density, measured according to PI 200-77, of from about 50 $kg/m^3$ to about 100 $kg/m^3$;
(b) a compaction resistance, measured according to PI 306-80, of from about 30 PSI to about 80 PSI at 2"; and/or
(c) a thermal conductivity, measured according to EN 12667, of from about 0.0350 W/mK to about 0.0450 W/mk.

It may be that the expanded granular material is formed by heating an expandable granular material having a particle size (determined by granulometry by sieving) from about 0.1 mm to about 1 mm, the expandable granular material having been formed from a mixture comprising:

one or more silicate materials and/or reactive silica comprising: from about 42 wt. % to about 52 wt. % of $SiO_2$; from about 1.2 wt. % to about 2.4 wt. % $Na_2O$; from about 3 wt. % to about 6 wt. % $Al_2O_3$; from about 0.1 wt. % to about 1 wt. % $Fe_2O_3$; from about 0.1 wt. % to about 1 wt.% CaO; less than about 0.2 wt. % MgO; from about 1 wt. % to about 2 wt. % $K_2O$; from about 1 wt. % to about 3 wt. % $B_2O_3$; and from about 0.5 to about 1.5 wt. % of water and/or volatile substances (i.e. substances which contribute to "loss on ignition" (LOI));

an alkali compound; and

water;

wherein the expanded granular material has:

(a) a loose bulk density, measured according to PI 200-77, of from about 70 $kg/m^3$ to about 105 $kg/m^3$;
(b) a compaction resistance, measured according to PI 306-80, of from about 40 PSI to about 75 PSI at 2"; and/or
(c) a thermal conductivity, measured according to EN 12667, of from about 0.0350 W/mK to about 0.0450 W/mk.

It may be that the expanded granular material is formed by heating an expandable granular material having a particle size (determined by granulometry by sieving) less than about 1 mm, the expandable granular material having been formed from a mixture comprising:

one or more silicate materials and/or reactive silica comprising: from about 42 wt. % to about 52 wt. % of $SiO_2$; from about 1.2 wt. % to about 2.4 wt. % $Na_2O$; from about 2.5 wt. % to about 4.5 wt. % $Al_2O_3$; from about 0.1 wt. % to about 1 wt. % $Fe_2O_3$; from about 0.1 wt. % to about 1 wt.% CaO; less than about 0.2 wt. % MgO; from about 1 wt. % to about 2 wt. % $K_2O$; from about 1 wt. % to about 3 wt. % $B_2O_3$; and from about 0.5 to about 1.5 wt. % of water and/or volatile substances (i.e. substances which contribute to "loss on ignition" (LOI));

an alkali salt; and

water;

wherein the expanded granular material has:

(a) a loose bulk density, measured according to PI 200-77, of from about 20 $kg/m^3$ to about 40 $kg/m^3$;
(b) a compaction resistance, measured according to PI 306-80, of from about 5 PSI to about 15 PSI at 2"; and/or
(c) a thermal conductivity, measured according to EN 12667, of from about 0.0310 W/mK to about 0.0350 W/mk.

It may be that the expanded granular material is formed by heating an expandable granular material having a particle size (determined by granulometry by sieving) from about 0.5 mm to about 1 mm, the expandable granular material having been formed from a mixture comprising:

one or more silicate materials and/or reactive silica comprising: from about 44 wt. % to about 54 wt. % of $SiO_2$; from about 0.1 wt. % to about 1 wt. % $Na_2O$; from about 0.1 wt. % to about 1 wt. % $Al_2O_3$; less than about 0.2 wt. % $Fe_2O_3$; from about 0.05 wt. % to about 0.5 wt.% CaO; less than about 0.1 wt. % MgO; from about 0.05 wt. % to about 0.5 wt. % $K_2O$; from about 1 wt. % to about 3 wt. % $B_2O_3$; and from about 0.1 to about 1 wt. % of water and/or volatile substances (i.e. substances which contribute to "loss on ignition" (LOI));

an alkali compound; and
water;

wherein the expanded granular material has:

(a) a loose bulk density, measured according to PI 200-77, of from about 18 kg/m$^3$ to about 25 kg/m$^3$;
(b) a compaction resistance, measured according to PI 306-80, of from about 4 PSI to about 8 PSI at 2"; and/or
(c) a thermal conductivity, measured according to EN 12667, of from about 0.0320 W/mK to about 0.0360 W/mk.

It may be that the expanded granular material is formed by heating an expandable granular material having a particle size (determined by granulometry by sieving) from about 0.125 mm to about 0.5 mm, the expandable granular material having been formed from a mixture comprising:

one or more silicate materials and/or reactive silica comprising: from about 44 wt. % to about 54 wt. % of SiO$_2$; from about 0.1 wt. % to about 1 wt. % Na$_2$O; from about 0.1 wt. % to about 1 wt. % Al$_2$O$_3$; less than about 0.2 wt. % Fe$_2$O$_3$; from about 0.05 wt. % to about 0.5 wt.% CaO; less than about 0.1 wt. % MgO; from about 0.05 wt. % to about 0.5 wt. % K$_2$O; from about 1 wt. % to about 3 wt. % B$_2$O$_3$; and from about 0.1 to about 1 wt. % of water and/or volatile substances (i.e. substances which contribute to "loss on ignition" (LOI));
an alkali compound; and
water;

wherein the expanded granular material has:

(a) a loose bulk density, measured according to PI 200-77, of from about 25 kg/m$^3$ to about 30 kg/m$^3$;
(b) a compaction resistance, measured according to PI 306-80, of from about 4 PSI to about 8 PSI at 2"; and/or
(c) a thermal conductivity, measured according to EN 12667, of from about 0.0310 W/mK to about 0.0350 W/mk.

It may be that the expanded granular material is formed by heating an expandable granular material having a particle size (determined by granulometry by sieving) from about 0.3 mm to about 2 mm, the expandable granular material having been formed from a mixture comprising:

one or more silicate materials and/or reactive silica comprising: from about 42 wt. % to about 52 wt. % of SiO$_2$; from about 1.2 wt. % to about 2.4 wt. % Na$_2$O; from about 3 wt. % to about 6 wt. % Al$_2$O$_3$; from about 0.1 wt. % to about 1 wt. % Fe$_2$O$_3$; from about 0.1 wt. % to about 1 wt.% CaO; less than about 0.2 wt. % MgO; from about 1 wt. % to about 2 wt. % K$_2$O; from about 1 wt. % to about 3 wt. % B$_2$O$_3$; and from about 0.5 to about 1.5 wt. % of water and/or volatile substances (i.e. substances which contribute to "loss on ignition" (LOI));
an alkali compound; and
water;

wherein the expanded granular material has:

(a) a loose bulk density, measured according to PI 200-77, of from about 55 kg/m$^3$ to about 65 kg/m$^3$;
(b) a compaction resistance, measured according to PI 306-80, of from about 35 PSI to about 40 PSI at 2"; and/or
(c) a thermal conductivity, measured according to EN 12667, of from about 0.0360 W/mK to about 0.0400 W/mk.

It may be that the expanded granular material is formed by heating an expandable granular material having a particle size (determined by granulometry by sieving) less than about 0.3 mm, the expandable granular material having been formed from a mixture comprising:

one or more silicate materials and/or reactive silica comprising: from about 42 wt. % to about 52 wt. % of SiO$_2$; from about 1.2 wt. % to about 2.4 wt. % Na$_2$O; from about 3 wt. % to about 6 wt. % Al$_2$O$_3$; from about 0.1 wt. % to about 1 wt. % Fe$_2$O$_3$; from about 0.1 wt. % to about 1 wt.% CaO; less than about 0.2 wt. % MgO; from about 1 wt. % to about 2 wt. % K$_2$O; from about 1 wt. % to about 3 wt. % B$_2$O$_3$; and from about 0.5 to about 1.5 wt. % of water and/or volatile substances (i.e. substances which contribute to "loss on ignition" (LOI));
an alkali compound; and
water;

wherein the expanded granular material has:

(a) a loose bulk density, measured according to PI 200-77, of from about 90 kg/m$^3$ to about 100 kg/m$^3$;
(b) a compaction resistance, measured according to PI 306-80, of from about 70 PSI to about 80 PSI at 2"; and/or
(c) a thermal conductivity, measured according to EN 12667, of from about 0.0370 W/mK to about 0.0420 W/mk.

It may be that the expanded granular material is formed by heating an expandable granular material having a particle size (determined by granulometry by sieving) from about 0.5 mm to about 1 mm, the expandable granular material having been formed from a mixture comprising:

one or more silicate materials and/or reactive silica comprising: from about 42 wt. % to about 52 wt. % of SiO$_2$; from about 1.2 wt. % to about 2.4 wt. % Na$_2$O; from about 3 wt. % to about 6 wt. % Al$_2$O$_3$; from about 0.1 wt. % to about 1 wt. % Fe$_2$O$_3$; from about 0.1 wt. % to about 1 wt.% CaO; less than about 0.2 wt. % MgO; from about 1 wt. % to about 2 wt. % K$_2$O; from about 1 wt. % to about 3 wt. % B$_2$O$_3$; and from about 0.5 to about 1.5 wt. % of water and/or volatile substances (i.e. substances which contribute to "loss on ignition" (LOI));
an alkali compound; and
water;

wherein the expanded granular material has:

(a) a loose bulk density, measured according to PI 200-77, of from about 75 kg/m$^3$ to about 85 kg/m$^3$;
(b) a compaction resistance, measured according to PI 306-80, of from about 40 PSI to about 50 PSI at 2"; and/or
(c) a thermal conductivity, measured according to EN 12667, of from about 0.0370 W/mK to about 0.0410 W/mk.

It may be that the expanded granular material is formed by heating an expandable granular material having a particle size (determined by granulometry by sieving) from about 0.125 mm to about 0.5 mm, the expandable granular material having been formed from a mixture comprising:

one or more silicate materials and/or reactive silica comprising: from about 42 wt. % to about 52 wt. % of SiO$_2$; from about 1.2 wt. % to about 2.4 wt. % Na$_2$O; from about 3 wt. % to about 6 wt. % Al$_2$O$_3$; from about 0.1 wt. % to about 1 wt. % Fe$_2$O$_3$; from about 0.1 wt. % to about 1 wt.% CaO; less than about 0.2 wt. % MgO; from about 1 wt. % to about 2 wt. % K$_2$O; from about 1 wt. % to about 3 wt. % B$_2$O$_3$; and from about 0.5 to about 1.5 wt. % of water and/or volatile substances (i.e. substances which contribute to "loss on ignition" (LOI));
an alkali compound; and
water;

wherein the expanded granular material has:

(a) a loose bulk density, measured according to PI 200-77, of from about 78 kg/m$^3$ to about 86 kg/m$^3$;
(b) a compaction resistance, measured according to PI 306-80, of from about 60 PSI to about 74 PSI at 2"; and/or
(c) a thermal conductivity, measured according to EN 12667, of from about 0.0360 W/mK to about 0.0420 W/mk.

It may be that the expanded granular material is formed by heating an expandable granular material having a particle size (determined by granulometry by sieving) from about 0.1 mm to about 1 mm, the expandable granular material having been formed from a mixture comprising:

one or more silicate materials and/or reactive silica comprising: from about 42 wt. % to about 52 wt. % of SiO$_2$; from about 1.2 wt. % to about 2.4 wt. % Na$_2$O; from about 3 wt. % to about 6 wt. % Al$_2$O$_3$; from about 0.1 wt. % to about 1 wt. % Fe$_2$O$_3$; from about 0.1 wt. % to about 1 wt.% CaO; less than about 0.2 wt. % MgO; from about 1 wt. % to about 2 wt. % K$_2$O; from about 1 wt. % to about 3 wt. % B$_2$O$_3$; and from about 0.5 to about 1.5 wt. % of water and/or volatile substances (i.e. substances which contribute to "loss on ignition" (LOI));
an alkali compound; and
water;

wherein the expanded granular material has:

(a) a loose bulk density, measured according to PI 200-77, of from about 70 kg/m$^3$ to about 105 kg/m$^3$;
(b) a compaction resistance, measured according to PI 306-80, of from about 60 PSI to about 75 PSI at 2"; and/or
(c) a thermal conductivity, measured according to EN 12667, of from about 0.0360 W/mK to about 0.0430 W/mk.

It may be that the expanded granular material is formed by heating an expandable granular material having a particle size (determined by granulometry by sieving) from about 0.5 mm to about 1 mm, the expandable granular material having been formed from a mixture comprising:

one or more silicate materials and/or reactive silica comprising: from about 42 wt. % to about 52 wt. % of $SiO_2$; from about 1.2 wt. % to about 2.4 wt. % $Na_2O$; from about 2.5 wt. % to about 4.5 wt. % $Al_2O_3$; from about 0.1 wt. % to about 1 wt. % $Fe_2O_3$; from about 0.1 wt. % to about 1 wt.% CaO; less than about 0.2 wt. % MgO; from about 1 wt. % to about 2 wt. % $K_2O$; from about 1 wt. % to about 3 wt. % $B_2O_3$; and from about 0.5 to about 1.5 wt. % of water and/or volatile substances (i.e. substances which contribute to "loss on ignition" (LOI));
an alkali compound; and
water;

wherein the expanded granular material has:

(a) a loose bulk density, measured according to PI 200-77, of from about 20 $kg/m^3$ to about 30 $kg/m^3$;
(b) a compaction resistance, measured according to PI 306-80, of from about 5 PSI to about 10 PSI at 2"; and/or
(c) a thermal conductivity, measured according to EN 12667, of from about 0.0310 W/mK to about 0.0360 W/mk.

It may be that the expanded granular material is formed by heating an expandable granular material having a particle size (determined by granulometry by sieving) from about 0.125 mm to about 0.5 mm, the expandable granular material having been formed from a mixture comprising:

one or more silicate materials and/or reactive silica comprising: from about 42 wt. % to about 52 wt. % of $SiO_2$; from about 1.2 wt. % to about 2.4 wt. % $Na_2O$; from about 2.5 wt. % to about 4.5 wt. % $Al_2O_3$; from about 0.1 wt. % to about 1 wt. % $Fe_2O_3$; from about 0.1 wt. % to about 1 wt.% CaO; less than about 0.2 wt. % MgO; from about 1 wt. % to about 2 wt. % $K_2O$; from about 1 wt. % to about 3 wt. % $B_2O_3$; and from about 0.5 to about 1.5 wt. % of water and/or volatile substances (i.e. substances which contribute to "loss on ignition" (LOI));
an alkali compound; and
water;

wherein the expanded granular material has:

(a) a loose bulk density, measured according to PI 200-77, of from about 25 $kg/m^3$ to about 35 $kg/m^3$;
(b) a compaction resistance, measured according to PI 306-80, of from about 5 PSI to about 15 PSI at 2"; and/or
(c) a thermal conductivity, measured according to EN 12667, of from about 0.0310 W/mK to about 0.0350 W/mk.

It may be that the expanded granular material is formed by heating an expandable granular material having a particle size (determined by granulometry by sieving) less than about 0.3 mm, the expandable granular material having been formed from a mixture comprising:

one or more silicate materials and/or reactive silica comprising: from about 42 wt. % to about 52 wt. % of $SiO_2$; from about 1.2 wt. % to about 2.4 wt. % $Na_2O$; from about 2.5 wt. % to about 4.5 wt. % $Al_2O_3$; from about 0.1 wt. % to about 1 wt. % $Fe_2O_3$; from about 0.1 wt. % to about 1 wt.% CaO; less than about 0.2 wt. % MgO; from about 1 wt. % to about 2 wt. % $K_2O$; from about 1 wt. % to about 3 wt. % $B_2O_3$; and from about 0.5 to about 1.5 wt. % of water and/or volatile substances (i.e. substances which contribute to "loss on ignition" (LOI));
an alkali salt; and
water;

wherein the expanded granular material has:

(a) a loose bulk density, measured according to PI 200-77, of from about 30 $kg/m^3$ to about 40 $kg/m^3$;
(b) a compaction resistance, measured according to PI 306-80, of from about 8 PSI to about 16 PSI at 2"; and/or
(c) a thermal conductivity, measured according to EN 12667, of from about 0.0300 W/mK to about 0.0350 W/mk.

It may be that the expanded granular material is formed by heating an expandable granular material having a particle size (determined by granulometry by sieving) from about 0.5 mm to about 1 mm, the expandable granular material having been formed from a mixture comprising: from about 10 wt. % to about 15 wt. % of borosilicate glass; from about 35 wt. % to about 45 wt. % of silica fume; from about 15 wt. % to about 20 wt. % of sodium hydroxide; and from about 25 wt. % to about 32 wt. % of water; and wherein the expanded granular material has:

    (a) a loose bulk density, measured according to PI 200-77, of from about 18 kg/m$^3$ to about 25 kg/m$^3$;
    (b) a compaction resistance, measured according to PI 306-80, of from about 4 PSI to about 8 PSI at 2"; and/or
    (c) a thermal conductivity, measured according to EN 12667, of from about 0.0320 W/mK to about 0.0360 W/mk.

It may be that the expanded granular material is formed by heating an expandable granular material having a particle size (determined by granulometry by sieving) from about 0.125 mm to about 0.5 mm, the expandable granular material having been formed from a mixture comprising: from about 10 wt. % to about 15 wt. % of borosilicate glass; from about 35 wt. % to about 45 wt. % of silica fume; from about 15 wt. % to about 20 wt. % of sodium hydroxide; and from about 25 wt. % to about 32 wt. % of water; and wherein the expanded granular material has:

    (a) a loose bulk density, measured according to PI 200-77, of from about 25 kg/m$^3$ to about 30 kg/m$^3$;
    (b) a compaction resistance, measured according to PI 306-80, of from about 4 PSI to about 8 PSI at 2"; and/or
    (c) a thermal conductivity, measured according to EN 12667, of from about 0.0310 W/mK to about 0.0350 W/mk.

It may be that the expanded granular material is formed by heating an expandable granular material having a particle size (determined by granulometry by sieving) from about 0.3 mm to about 2 mm, the expandable granular material having been formed from a mixture comprising: from about 12 wt. % to about 18 wt. % of borosilicate glass; from about 5 wt. % to about 15 wt. % of silica fume; from about 10 wt. % to about 15 wt. % of sodium hydroxide; and from about 20 wt. % to about 30 wt. % of water; and the expanded granular material has:

    (a) a loose bulk density, measured according to PI 200-77, of from about 55 kg/m$^3$ to about 65 kg/m$^3$;
    (b) a compaction resistance, measured according to PI 306-80, of from about 35 PSI to about 40 PSI at 2"; and/or
    (c) a thermal conductivity, measured according to EN 12667, of from about 0.0360 W/mK to about 0.0400 W/mk.

It may be that the expanded granular material is formed by heating an expandable granular material having a particle size (determined by granulometry by sieving) less than about 0.3 mm, the expandable granular material having been formed from a mixture comprising: from about 12 wt. % to about 18 wt. % of borosilicate glass; from about 5 wt. % to about 15 wt. % of silica fume; from about 10 wt. % to about 15 wt. % of sodium hydroxide; and from about 20 wt. % to about 30 wt. % of water; and the expanded granular material has:

    (a) a loose bulk density, measured according to PI 200-77, of from about 90 kg/m$^3$ to about 100 kg/m$^3$;
    (b) a compaction resistance, measured according to PI 306-80, of from about 70 PSI to about 80 PSI at 2"; and/or
    (c) a thermal conductivity, measured according to EN 12667, of from about 0.0370 W/mK to about 0.0420 W/mk.

It may be that the expanded granular material is formed by heating an expandable granular material having a particle size (determined by granulometry by sieving) from about 0.5 mm to about 1 mm, the expandable granular material having been formed from a mixture comprising: from about 12 wt. % to about 18 wt. % of borosilicate glass; from about 5 wt. % to about 10 wt. % of silica fume; from about 8 wt. % to about 16 wt. % of sodium hydroxide; and from about 20 wt. % to about 32 wt. % of water; wherein the expanded granular material has:

    (a) a loose bulk density, measured according to PI 200-77, of from about 75 kg/m$^3$ to about 85 kg/m$^3$;
    (b) a compaction resistance, measured according to PI 306-80, of from about 40 PSI to about 50 PSI at 2"; and/or
    (c) a thermal conductivity, measured according to EN 12667, of from about 0.0370 W/mK to about 0.0410 W/mk.

It may be that the expanded granular material is formed by heating an expandable granular material having a particle size (determined by granulometry by sieving) from about 0.125 mm to about 0.5 mm, the expandable granular material having been formed from a mixture comprising: from about 12 wt. % to about 18 wt. % of borosilicate glass; from about 5 wt. % to about 10 wt. % of silica fume; from about 8 wt. % to about 16 wt. % of sodium hydroxide; and from about 20 wt. % to about 32 wt. % of water; wherein the expanded granular material has:

    (a) a loose bulk density, measured according to PI 200-77, of from about 78 kg/m$^3$ to about 86 kg/m$^3$;
    (b) a compaction resistance, measured according to PI 306-80, of from about 60 PSI to about 74 PSI at 2"; and/or
    (c) a thermal conductivity, measured according to EN 12667, of from about 0.0360 W/mK to about 0.0420 W/mk.

It may be that the expanded granular material is formed by heating an expandable granular material having a particle size (determined by granulometry by sieving) from about 0.1 mm to about 1 mm, the expandable granular material having been formed from a mixture comprising: from about 12 wt. % to about 18 wt. % of borosilicate glass; from about 5 wt. % to about 10 wt. % of silica fume; from about 8 wt. % to about 16 wt. % of sodium hydroxide; and from about 20 wt. % to about 32 wt. % of water; wherein the expanded granular material has:

    (a) a loose bulk density, measured according to PI 200-77, of from about 70 kg/m$^3$ to about 105 kg/m$^3$;
    (b) a compaction resistance, measured according to PI 306-80, of from about 60 PSI to about 75 PSI at 2"; and/or
    (c) a thermal conductivity, measured according to EN 12667, of from about 0.0360 W/mK to about 0.0430 W/mk.

It may be that the expanded granular material is formed by heating an expandable granular material having a particle size (determined by granulometry by sieving) from about 0.5 mm to about 1 mm, the expandable granular material having been formed from a mixture comprising: from about 10 wt. % to about 20 wt. % of borosilicate glass; from about 10 wt. % to about 20 wt. % of silica fume; from about 10 wt. % to about 20 wt. % of sodium hydroxide; and from about 20 wt. % to about 30 wt. % of water; wherein the expanded granular material has:

    (a) a loose bulk density, measured according to PI 200-77, of from about 20 kg/m$^3$ to about 30 kg/m$^3$;
    (b) a compaction resistance, measured according to PI 306-80, of from about 5 PSI to about 10 PSI at 2"; and/or
    (c) a thermal conductivity, measured according to EN 12667, of from about 0.0310 W/mK to about 0.0360 W/mk.

It may be that the expanded granular material is formed by heating an expandable granular material having a particle size (determined by granulometry by sieving) from about 0.125 mm to about 0.5 mm, the expandable granular material having been formed from a mixture comprising: from about 10 wt. % to about 20 wt. % of borosilicate glass; from about 10 wt. % to about 20 wt. % of silica fume; from about 10 wt. % to about 20 wt. % of sodium hydroxide; and from about 20 wt. % to about 30 wt. % of water; wherein the expanded granular material has:

    (a) a loose bulk density, measured according to PI 200-77, of from about 25 kg/m$^3$ to about 35 kg/m$^3$;
    (b) a compaction resistance, measured according to PI 306-80, of from about 5 PSI to about 15 PSI at 2"; and/or
    (c) a thermal conductivity, measured according to EN 12667, of from about 0.0310 W/mK to about 0.0350 W/mk.

It may be that the expanded granular material is formed by heating an expandable granular material having a particle size (determined by granulometry by sieving) less than about 0.3 mm, the expandable granular material having been formed from a mixture comprising: from about 10 wt. % to about 20 wt. % of borosilicate glass; from about 10 wt. % to about 20 wt. % of silica fume; from about 10 wt. % to about 20 wt. % of sodium hydroxide; and from about 20 wt. % to about 30 wt. % of water; wherein the expanded granular material has:

    (a) a loose bulk density, measured according to PI 200-77, of from about 30 kg/m$^3$ to about 40 kg/m$^3$;
    (b) a compaction resistance, measured according to PI 306-80, of from about 8 PSI to about 16 PSI at 2"; and/or
    (c) a thermal conductivity, measured according to EN 12667, of from about 0.0300 W/mK to about 0.0350 W/mk.

It may be that the expanded granular material has a water absorption (in grams of water absorbed per gram of expanded granular material) of no less than about 0.1 g/g, for example, no less than about 0.2 g/g, or no less than about 0.5 g/g, or no less than about 1 g/g. It may be that the expanded granular material has a water absorption (in grams of water absorbed per gram of expanded granular material) of no greater than about 15 g/g, for example, no greater than about 10 g/g. It may be that the expanded granular material has a water absorption (in grams of water absorbed per gram of expanded granular material) from about 0.1 g/g to about 15 g/g, for example, from about 0.2 g/g to about 15 g/g, or from about 0.5 g/g to about 10 g/g, or from about 1 g/g to about 10 g/g.

Water absorption of a granular material may be measured by first measuring exactly 500 ml of the granular material and recording the weight of the sample. The 500 ml sample is transferred to a 500ml cylinder with a very fine sieve at the bottom sufficient to retain the granular material within the cylinder but also to allow water to pass therethrough. The cylinder is tapped 10 times to settle the material. 250 g of water is weighed and poured into the cylinder with the granular material. A timer is started and the mass of water which passes through the material and out of the cylinder is measured after 3, 5, 7, 10 and 30 minutes. The water absorption of the granular material is then the mass of water which has not passed out of the cylinder (i.e. the mass of water which has been absorbed) per mass of granular material in the cylinder (expressed in g/g).

It may be that the expanded granular material has a water repellency of no less than about 40 %, for example, no less than about 50 %, or no less than about 60 %, or no less than about 65 %. It may be that the expanded granular material has a water repellency of no greater than about 95 %, for example, no greater than about 90 %. It may be that the expanded granular material has a water repellency of from about 40 % to about 95 %, for example, from about 50 % to about 95 %, or from about 60 % to about 95 %, or from about 65 % to about 90 %.

Water repellency of a material may be determined by taking a representative sample of the material with a sampler (500 mL) and weighing the sample. The sample is transferred to a graduated cylinder with the perforated base using a funnel. The cylinder is allowed to fall from a height of about 7.5 cm ten times in order for the sample to settle. 250g of deionized water is poured into the cylinder with the sample slowly to avoid water losses or cavitation in the sample. Water passing through the sample is collected in a weighed glass beaker below the cylinder every 3 minutes, 5 minutes, 7 minutes, 10 minutes and 30 minutes and the water in the glass beaker is weighed. When the 30 minutes are over, the cylinder is tilted through 45° to allow any remaining water to drip out of the cylinder. The water absorption for 30 min is then calculated according to the following equation:

$$w.a. = \frac{250 - W_{H_2O,30\text{min}}}{A(g)}$$

Where $W_{H2O,30\text{min}}$ is the mass of water collected after 30 minutes and A(g) is the mass of 500 ml of the granular material.

It may be that the expanded granular material contains no less than about 95 %, for example, no less than about 97 %, or no less than about 99 %, of floaters. It may be that the expanded granular material contains up to 100 % floaters. It may be that the expanded granular material contains from about 95 % to about 100 %, for example, from about 97 % to about 100 %, or from about 99 % to about 100 %, of floaters.

The number of floaters in a sample of material is determined using an Imhoff cone. In particular, 600 mL deionized water is poured into the Imhoff cone which is fixed vertically in a rack. An additional 50 mL of deionized water containing 20 drops of bromothymol blue or methylene blue indicator are added to the cone. The indicator is used to facilitate reading of the cone with the colour it gives to the water. A representative sample of 300mL of the material to be investigated is taken with a sampler. The exact volume (A mL) and the weight (B g) of the sample are recorded, and the sample is added to the cone. An additional 300 mL deionized water is added over the sample into the cone so that a total of 950 mL water is in the Imhoff cone. The sample and the water are stirred with a rod 20 times. The walls at the top of the cone and the rod are rinsed with 50 mL deionized water (so that a total of 1000 mL water is present in the cone) so as to flush any grains that are stuck on to them into the cone. The cone and its contents are allowed to stand for 45 minutes. After this time, the volume (C mL) of the cone which corresponds to the level of dark particles (i.e. "sinks") in the bottom of the cone (C mL) is recorded. The volume (D mL) of the cone which corresponds to the level of total sediment at the bottom of the cone is also recorded. The percentage of "sink", "shattered" and "floaters" is then determined according to the following equations:

$$\text{sinks}(\%v/v) = 100 * \frac{C(mL)}{A(mL)}$$

$$\text{shattered}(\%v/v) = 100 * \frac{D(mL) - C(mL)}{A(mL)}$$

$$\text{floaters}(\%v/v) = 100 * \frac{A(mL) - D(mL)}{A(mL)}$$

It may be that the expanded granular material has a pH, measured according to PI 202-77, of no less than about 8, for example, no less than about 9, or no less than about 9.5. It may be that the expanded granular material has a pH, measured according to PI 202-77, of no greater than about 12, for example, no greater than about 11. It may be that the expanded granular material has a pH, measured according to PI 202-77, of from about 8 to about 12, for example, from about 9 to about 11, or from about 9.5 to about 11. The pH of an expanded granular material may be determined by mixing 0.5g of the granular material with 50mL deionized water and stirring for 30 min at room temperature. During the last 2 minutes of stirring the pH value is measured (for example, using a pH probe) and recorded.

It may be that the expanded granular material has a skeletal density of no less than about 0.4 g/cm³, for example, no less than about 0.5 g/cm³, or no less than about 0.6 g/cm³. It may be that the expanded granular material has a skeletal density of no greater than about 2 g/cm³, for example, no greater than about 1.8 g/cm³, or no greater than about 1.6 g/cm³. It may be that the expanded granular material has a skeletal density from about 0.4 g/cm³ to about 2 g/cm³, for example, from about 0.5 g/cm³ to about 1.8 g/cm³, or from about 0.6 g/cm³ to about 1.6 g/cm³. The skeletal density of a porous material (i.e. the absolute density of the porous material determined using a volume which excludes both the volume of any pores in the porous material and the volume of any void spaces between particles) may be measured using a stereopycnometer, for example as available from Quantachrome.

Applications

The expanded granular material may be used as or in a thermally insulating product. The thermally insulating product may be cavity wall insulation material, for example cavity wall bulk granular insulation material. The thermally insulating product may be thermal insulation board or a filler for thermal insulation board. The thermally insulating product may be an acoustic ceiling tile or filler for acoustic ceiling tiles. The thermally insulating product may be a thermally insulated vessel such as a cryogenic or low-temperature vessel or a granular material for thermal insulation of an insulated vessel such as a cryogenic or low-temperature vessel. Expanded granular materials having (a) average particle sizes (e.g. $d_{50}$) less than about 1.25 mm, and/or (b) loose bulk densities of from about 30 kg/m$^3$ to about 100 kg/m$^3$, are particularly suitable for such applications.

The expanded granular material may be used as or in a construction material. The construction material may be a fibre cement sheet. The construction material may be concrete. For example, the expanded granular material may be used as a lightweight aggregate material in concrete. Expanded granular materials having (a) average particle sizes (e.g. $d_{50}$) greater than or equal to about 500 $\mu$m, for example from about 500 $\mu$m to about 6 mm, for example from about 2 mm to about 6 mm, and/or (b) loose bulk densities of from about 10 kg/m$^3$ to about 100 kg/m$^3$, are particularly suitable for such applications.

The construction material may be a mortar or plaster, for example a cementitious, gypsum-based and/or acrylic-based mortar or plaster. Expanded granular materials having (a) average particle sizes (e.g. $d_{50}$) less than about 0.5 mm, for example, less than about 0.2 mm, and/or (b) loose bulk densities of from about 80 kg/m$^3$ to about 450 kg/m$^3$, for example from about 80 kg/m$^3$ to about 350 kg/m$^3$, are particularly suitable for such applications.

The expanded granular material may be used in coatings such as paints. Expanded granular materials having (a) average particle sizes (e.g. $d_{50}$) less than about 0.5 mm, for example, less than about 0.2 mm, and/or (b) loose bulk densities of from about 80 kg/m$^3$ to about 450 kg/m$^3$, for example from about 80 kg/m$^3$ to about 350 kg/m$^3$, are particularly suitable for such applications.

The expanded granular material may be used as or in a horticultural or agricultural substrate. The horticultural or agricultural substrate may comprise predominantly the expanded granular material. For example, the horticultural or agricultural substrate may consist of the expanded granular material. Alternatively, the horticultural or agricultural substrate may comprise the expanded granular material and one or more other materials, for example organic matter or soil.

The expandable granular material may be used as or in a flame retardant functional material. The flame retardant functional material may be a flame retardant filler material.

Numbered Paragraphs

[0279]   For the avoidance of doubt, the present application is directed to the subject-matter described in the following numbered paragraphs:

1. A method of manufacturing an expanded granular material, the method comprising: forming a mixture comprising: a silicate material, an alkali compound, and water; curing the mixture to form a solid precursor; crushing and/or milling the solid precursor to form an expandable granular material; and heating the expandable granular material to form an expanded granular material.

2. The method according to numbered paragraph 1, wherein the mixture comprises a glass network-forming element other than silicon, a glass network intermediate element and/or a glass network-modifying element, and optionally wherein: the glass network-forming element other than silicon is selected from: boron, germanium, and phosphorous; the glass network intermediate element is selected from: titanium, aluminium, zirconium, beryllium, magnesium and zinc; and/or the glass network-modifying element is selected from: calcium, lead, lithium, sodium and potassium.

3. The method according to numbered paragraph 1 or numbered paragraph 2, wherein the mixture further comprises reactive silica, for example silica fume and/or fumed silica.

4. The method according to any preceding numbered paragraph, wherein the mixture comprises two different silicate materials, for example, wherein the mixture comprises: a silicate glass, such as an aluminosilicate glass, and a silicate mineral, for example an aluminosilicate mineral; or wherein the mixture comprises: a first silicate glass, such as a first aluminosilicate glass; and a second silicate glass, such as a second aluminosilicate glass.

5. The method according to numbered paragraph 4, wherein one of the two different silicate materials is selected from: a volcanic glass, such as a perlitic material, for example unexpanded natural perlite ore having a water content of greater than about 2 wt. %; a phyllosilicate mineral, for example bentonite, kaolin or calcined kaolin; diatomaceous earth; or combinations thereof.

6. The method according to numbered paragraph 4 or numbered paragraph 5, wherein one of the two different silicate materials is a silicate glass selected from: fused silica glass, soda-lime glass, borosilicate glass, lead-oxide glass, aluminosilicate glass, silica-germania glass.

7. The method according to numbered paragraph 6, wherein the silicate glass is a recycled glass, for example in the form of recycled glass cullet.

8. The method according to any preceding numbered paragraph, wherein the alkali compound is an alkali salt, for example: an alkali hydroxide, for example sodium hydroxide, lithium hydroxide or potassium hydroxide; an alkali carbonate, for example sodium carbonate, lithium carbonate or potassium carbonate; or an alkali silicate, for example sodium silicate, lithium silicate or potassium silicate; or a mixed alkali salt, for example sodium/lithium silicate or sodium/potassium silicate.

9. The method according to any preceding numbered paragraph, wherein the mixture comprises: from about 10 wt. % to about 90 wt. %, for example, from about 15 wt. % to about 80 wt. %, or from about 20 wt. % to about 70 wt. %, of silicate material; from about 5 wt. % to about 25 wt. %, from about 10 wt. % to about 20 wt. %, of alkali compound; and from about 15 wt. % to about 50 wt. %, for example from about 20 wt. % to about 40 wt. %, of water.

10. The method according to numbered paragraph 9, wherein the mixture comprises from about 5 wt. % to about 75 wt. %, for example from about 5 wt. % to about 50 wt. %, or from about 5 wt. % to about 40 wt. %, of reactive silica.

11. The method according to numbered paragraph 9 or numbered paragraph 10, wherein the mixture comprises: from about 5 wt. % to about 50 wt. %, for example, from about 10 wt. % to about 40 wt. %, of a first silicate material; and from about 5 wt. % to about 50 wt. %, for example, from about 10 wt. % to about 40 wt. %, of a second silicate material.

12. The method according to numbered paragraph 11, wherein: the first silicate material is a silicate glass, for example an aluminosilicate glass, and the second silicate material a silicate mineral, for example an aluminosilicate mineral; or the first silicate material is a first silicate glass, for example a first aluminosilicate glass, and the second silicate material is a second silicate glass, for example a second aluminosilicate glass.

13. The method according to numbered paragraph 9, wherein the silicate material comprises: from about 50 wt. % to about 95 wt. %, for example, from about 60 wt. % to about 85 wt. %, of $SiO_2$; from about 1 wt. % to about 30 wt. %, for example, from about 2 wt. % to about 15 wt. %, of $Na_2O$; from about 0 wt. % to about 15 wt. %, for example, from about 0.01 wt. % to about 6 wt. %, of $K_2O$; from about 0 wt. % to about 20 wt. %, for example, from about 0.05 wt. % to about 15 wt. %, of $CaO$; from about 0 wt. % to about 20 wt. %, for example, from about 0.1 wt. % to about 15 wt. %, of $Al_2O_3$; no greater than about 20 wt. %, for example, less than about 15 wt. %, of $B_2O_3$; no greater than about 20 wt. %, for example, less than about 15 wt. %, of $PbO$; no greater than about 10 wt. %, for example, less than about 5 wt. %, of $MgO$; and no greater than about 10 wt. %, for example, less than about 5 wt. %, of $BaO$.

14. The method according to any preceding numbered paragraph, wherein the mixture contains boron in an amount such that the expanded granular material comprises less than about 5.0 wt. %, for example less than about 3.5 wt. %, of $B_2O_3$.

15. The method according to any preceding numbered paragraph, wherein curing the mixture to form the solid precursor comprises curing the mixture at a temperature no greater than about 250°C, for example no greater than about 120°C, or from about 20°C to about 250°C, or from about 20°C to about 120°C, or from about 50°C to about 110°C, or from about 70°C to about 100°C.

16. The method according to any preceding numbered paragraph, wherein heating the granular material to form the expanded granular material comprises heating the granular material to a temperature no greater than about 1100°C, for example no greater than about 700°C, or from about 300°C to about 900°C, or from about 300°C to about 700°C, or from about 400°C to about 600°C.

17. The method according to any preceding numbered paragraph, wherein heating the granular material to form the expanded granular material comprises heating the granular material in an infra-red furnace, an electrically heated furnace, or a natural gas or LPG expansion furnace.

18. The method according to any preceding numbered paragraph, wherein the expanded granular material has: a loose bulk density, measured according to PI 200-77, of from about 15 $kg/m^3$ to about 450 $kg/m^3$, for example from about 20 $kg/m^3$ to about 100 $kg/m^3$, or from about 20 $kg/m^3$ to about 30 $kg/m^3$, or from about 20 $kg/m^3$ to about 40 $kg/m^3$, or from about 55 $kg/m^3$ to about 100 $kg/m^3$, or from about 70 $kg/m^3$ to about 100 $kg/m^3$; a compaction resistance, measured according to PI 306-80, of from about 3 PSI to about 350 PSI at 2", for example from about 3 PSI to about 200 PSI at 2", or from about 3 PSI to about 100 PSI at 2", or from about 3 PSI to about 10 PSI at 2", or from about 30 PSI to about 80 PSI at 2", or from about 40 PSI to about 75 PSI at 2", or from about 5 PSI to about 20 PSI at 2"; and/or a thermal conductivity (A, lambda value), measured according to EN 12667, of from about 0.0300 W/mK to about 0.0700 W/mk, for example from about 0.0320 W/mK to about 0.0420 W/mK, from about 0.0350 W/mK to about 0.0400 W/mK, or from about 0.0360 W/mK to about 0.0410 W/mK, or from about 0.0320 W/mK to about 0.0340 W/mK, or from about 0.042 W/mK to about 0.05.5 W/mK, or from about 0.055 W/mK to about 0.070 W/mK.

19. An expanded granular material manufactured by the method according to any preceding numbered paragraph.

20. An expanded granular material having: a loose bulk density, measured according to PI 200-77, of from about 15 $kg/m^3$ to about 450 $kg/m^3$, for example from about 20 $kg/m^3$ to about 100 $kg/m^3$, or from about 20 $kg/m^3$ to about 30 $kg/m^3$, or from about 20 $kg/m^3$ to about 40 $kg/m^3$, or from about 55 $kg/m^3$ to about 100 $kg/m^3$, or from about 70 $kg/m^3$ to about 100 $kg/m^3$; a compaction resistance, measured according to PI 306-80, of from about 3 PSI to about 350 PSI at 2", for example from about 3 PSI to about 200 PSI at 2", or from about 3 PSI to about 100 PSI at 2", or from about 3 PSI to about 10 PSI at 2", or from about 30 PSI to about 80 PSI at 2", or from about 40 PSI to about 75 PSI at 2", or from about 5 PSI to about 20 PSI at 2"; and/or a thermal conductivity, measured according to EN 12667, of from about 0.0300 W/mK to about 0.0700 W/mk, for example from about 0.0320 W/mK to about 0.0420 W/mK, from about 0.0350 W/mK to about 0.0400 W/mK, or from about 0.0360 W/mK to about 0.0410 W/mK, or from about 0.0320 W/mK to about 0.0340 W/mK, or from about 0.042 W/mK to about 0.055 W/mK, or from about 0.055 W/mK to about 0.070 W/mK.

21. The expanded granular material according to numbered paragraph 20, wherein the expanded granular material comprises: from about 8 wt. % to about 30 wt. %, for example from about 13 wt. % to about 22 wt. %, of $X_2O$, X being an alkali metal such as Na or Li; from about 0 wt. % to about 15 wt. %, for example from about 5 wt. % to about 9 wt. %, of $Al_2O_3$; and from about 50 wt. % to about 80 wt. %, for example from about 60 wt. % to about 75 wt. %, of $SiO_2$; and optionally from about 0 wt.% to about 10 wt. %, for example from about 0.5 wt. % to about 5 wt. %, of $H_2O$.

22. The expanded granular material according to numbered paragraph 21, wherein the expanded granular material comprises less than about 5 wt. %, for example less than about 3.5 wt. %, of $B_2O_3$.

23. The expanded granular material according to any of numbered paragraphs 20 to 22, wherein the expanded granular material is formed by expanding a precursor obtained by curing a mixture comprising: a silicate material, an alkali compound, and water; optionally wherein: (a) the mixture comprises a glass network-forming element other than silicon, a glass network intermediate element and/or a glass network-modifying element; (b) the mixture further comprises reactive silica; and/or (c) the mixture comprises two different silicate materials.

24. The expanded granular material according to numbered paragraph 23 part (c), wherein: (i) one of the two different silicate materials is selected from: a volcanic glass such as a perlitic material, for example unexpanded natural perlite ore having a water content of greater than about 2 wt. %; a phyllosilicate mineral, for example bentonite, kaolin or calcined kaolin; diatomaceous earth; or any combination thereof; and/or (ii) one of the two different silicate materials is a silicate glass selected from: fused silica glass, soda-lime glass, borosilicate glass, lead-oxide glass, aluminosilicate glass, silica-germania glass.

25. An expandable material comprising: from about 0.1 wt. % to about 25 wt. %, for example from about 0.2 wt. % to about 5 wt. %, of $X_2O$, wherein X is an alkali metal such as Na or Li; from about 0.1 wt. % to about 30 wt. %, for example from about 0.2 wt. % to about 20 wt. %, of $Al_2O_3$; from about 30 wt. % to about 80 wt. %, for example from about 40 wt. % to about 60 wt. %, of $SiO_2$; and from about 10 wt. % to about 30 wt. %, for example from about 15 wt. % to about 30 wt. %, of $H_2O$; wherein the expandable material optionally comprises less than about 5 wt. %, for example less than about 3.5 wt. %, of $B_2O_3$.

26. The expandable material according to numbered paragraph 25, wherein the expandable material is substantially amorphous.

27. The expandable material according to numbered paragraph 25 or numbered paragraph 26, wherein the expandable material is granular and optionally has a particle size from about 10 $\mu$m to about 2 cm.

28. A method of manufacturing an expandable material, the method comprising: (a) forming a mixture comprising: a silicate material, an alkali compound, and water; wherein optionally: (i) the mixture comprises a glass network-forming element other than silicon, a glass network intermediate element and/or a glass network-modifying element; (ii) the mixture further comprises reactive silica; and/or (iii) the mixture comprises two different silicate materials; and (b) curing the mixture to form the expandable material.

29. The method according to numbered paragraph 28 further comprising crushing the expandable material.

30. An expandable material manufactured according to the method of numbered paragraph 28 or numbered paragraph 29.

31. A thermally insulating product, for example a bulk material for insulating cavity walls, a filler for insulation board, insulation board, a filler for ceiling tiles such as acoustic ceiling tiles, ceiling tiles such as acoustic ceiling tiles, a granular material for thermally insulating a cryogenic or low-temperature vessel, or a thermally insulated cryogenic or low-temperature vessel, comprising the expanded granular material of any of numbered paragraphs 19 to 24 or the expanded granular material formed by expanding the expandable material of any of numbered paragraphs 25 to 27 or 30.

30. A construction material, for example a sheet such as a fibre cement sheet, a mortar or plaster such as cementitious, gypsum-based and/or acrylic-based mortar or plaster, or concrete, comprising the expanded granular material of any of numbered paragraphs 19 to 24 or the expanded granular material formed by expanding the expandable material of any of numbered paragraphs 25 to 27 or 30.

31. A horticultural or agricultural substrate or substrate component comprising the expanded granular material of any of numbered paragraphs 19 to 24 or the expanded granular material formed by expanding the expandable material of any of numbered paragraphs 25 to 27 or 30.

32. A flame retardant functional material comprising the expandable granular material of any of numbered paragraphs 25 to 27 or the expandable granular material manufactured according to the method of any of numbered paragraphs 28 to 30.

33. Use of the expanded granular material of any of numbered paragraphs 19 to 24, or of the expanded granular material formed by expanding the expandable material of any of numbered paragraphs 25 to 27 or 30, in a thermally insulating product, for example a bulk material for insulating cavity walls, a filler for thermal insulation board, a filler for acoustic ceiling tiles, a granular material for thermally insulating a cryogenic or low-temperature vessel, or a construction material, for example a sheet such as a fibre cement sheet, a mortar or plaster such as cementitious, gypsum-based and/or acrylic-based mortar or plaster, or concrete, or a horticultural or agricultural substrate or substrate component.

## EXAMPLES

In the following examples, expandable and expanded materials were prepared using the silicate raw materials whose chemical composition, expressed in wt. % in terms of equivalent oxide content, is presented in Table 1. Particle sizes in terms of $d_{50}$ in $\mu$m are also provided for each of the silicate raw materials.

Table 1.

|  | Perlite tailings | Soda-lime Glass | Borosilicate Glass | Silica Fume |
|---|---|---|---|---|
| $SiO_2$* | 75.33 | 71.57 | 79.11 | 96 |

(continued)

| | Perlite tailings | Soda-lime Glass | Borosilicate Glass | Silica Fume |
|---|---|---|---|---|
| $Al_2O_3$* | 10.51 | 0.35 | 3.47 | 0.25 |
| $Fe_2O_3$* | 1.17 | 0.06 | 0.08 | 0.15 |
| CaO* | 1.38 | 12.05 | 0.15 | 0.35 |
| MgO* | 0.27 | 2.88 | 0 | - |
| $K_2O$* | 4.31 | 0.05 | 0.45 | 0.35 |
| $Na_2O$* | 3.99 | 12.82 | 3 | 0.15 |
| $B_2O_3$* | | - | 13.65 | - |
| L.O.I. * | 2.83 | 0.19 | 0.1 | 1.5 |
| $d_{50}$** | 30.23 | 28.58 | 27.42 | <1 |
| *values expressed as wt. %  **values expressed in $\mu$m | | | | |

In general, expandable materials were prepared by inorganic polymerisation of the silicate raw materials in an aqueous alkali solution. Pellets of an alkali salt (such as sodium hydroxide or lithium hydroxide) were dissolved in water. The solid silicate raw materials were immediately added to the resultant solution such that heat produced on dissolution of the alkali salt could assist in dissolution of the silicate materials. The mixture was stirred for several minutes to form a paste. Following stirring, the paste was cured in an oven at a temperature between 70°C and 100°C for between a few hours and a few days to form an expandable precursor material. The precursor was crushed and sieved to a desired granulometry.

Expanded materials were produced by expanding the crushed precursor material. Crushed percursor having a particle size above 500 $\mu$m was expanded by heating in an infra-red (IR) expansion furnace equipped with a stainless-steel vibrating table, eight Elstein HTS ceramic infra-red panel radiators (having dimensions of 125x125mm, a power output of 64 kW/m and a maximum operating temperature of 860°C), and an Italvibras G. Silingardi vibrating element (Type: M3/45-S02, Series: AA, C.F.KN 0.44/0.64, RPM 3000/3800). The feed into the furnace was adjusted using an electromagnetic automatic feeder. The infra-red lamps were operated at a temperature between 500°C and 750°C such that the temperature of granular precursor reached about 300°C to about 350°C. Crushed precursor having a particle size below 500 $\mu$m was expanded by heating in a vertical electrical furnace.

Example 1

Four different expanded materials were formed using borosilicate glass, sodium hydroxide and water as starting materials. Table 2 shows the composition of the four different starting mixtures, the concentration of sodium hydroxide in the initial alkaline solution, the ratio of silicon to sodium in the mixtures, the measured "loss on ignition" for the materials prior to expansion, and the measured loose bulk density of the materials following expansion at 700°C.

Table 2.

| Mixture | A1 | A2 | A3 | A4 |
|---|---|---|---|---|
| Borosilicate glass (w.t %) | 62.5 | 59.8 | 57.8 | 57.7 |
| NaOH (wt. %) | 6.3 | 12.1 | 17.5 | 18.6 |
| Water (wt. %) | 31.2 | 28.1 | 24.7 | 23.7 |
| NaOH concentration (M) | 5 | 10 | 15 | 16.1 |
| Si/Na ratio | 5.2 | 2.6 | 1.7 | 1.6 |
| LOI unexpanded (wt. %) | 6.41% | 15.09% | 19.08% | 17.00% |
| LBD (kg/m$^3$) | 357 | 114 | 58 | 45 |

Example 2

Six different expanded materials were formed using borosilicate glass, soda-lime glass, sodium hydroxide and water as starting materials. Table 3 shows the composition of the six different starting mixtures, the ratio of borosilicate glass to soda-lime glass (the "B/S" ratio) in the mixture, the concentration of sodium hydroxide in the initial alkaline solution, the ratio of silicon to sodium in the mixtures, the measured "loss on ignition" for the materials prior to expansion, and the measured loose bulk density of the materials following expansion at 600°C, 650°C or 750°C. Mixtures B4, B5 and B6 did not result in expandable materials.

Table 3.

| Mixture | B1 | B2 | B3 | B4 | B5 | B6 |
|---|---|---|---|---|---|---|
| Borosilicate glass (wt. %) | 66.67 | 33.33 | 13.33 | 6.67 | 2 | 0 |
| Soda-lime glass (wt. %) | 0 | 33.33 | 53.33 | 60 | 64.67 | 66.67 |
| NaOH (wt.%) | 5.62 | 5.62 | 5.62 | 5.62 | 5.62 | 5.62 |
| Water (wt. %) | 27.72 | 27.72 | 27.72 | 27.72 | 27.72 | 27.72 |
| B/S ratio | oo | 1 | 0.25 | 0.11 | 0.03 | 0 |
| NaOH concentration (M) | 5 | 5 | 5 | 5 | 5 | 5 |
| Si/Na ratio | 6.2 | 5.9 | 5.8 | 5.7 | 5.7 | 5.7 |
| LOI unexpanded (wt. %) | 6.46% | 8.44% | 7.85% | 7.55% | 7.20% | 6.95% |
| Expansion temperature (°C) | 600 | 650 | 750 | - | - | - |
| Loose bulk density (kg/m$^3$) | 162 | 320 | 572 | - | - | - |

Example 3

An expandable material was formed using 13.5 wt. % borosilicate glass, 40.5 wt. % silica fume, 18 wt. % sodium hydroxide and 27.9 wt. % water as starting materials. The expandable material was crushed to two different particle size ranges prior to expansion. The measured loose bulk density, compaction resistance and thermal conductivity for the two different expanded materials is presented in Table 4.

Table 4.

| Precursor particle size range | Loose bulk density (kg/m$^3$) | Compaction resistance (PSI at 2") | Thermal conductivity (W/mK) |
|---|---|---|---|
| 0.5 - 1 mm | 21.6 | 6.3 | 0.034 |
| 0.125 - 0.5 mm | 27.0 | 6.3 | 0.033 |

Example 4

An expandable material was formed using 15 wt. % borosilicate glass, 45 wt. % perlite tailings, 10 wt. % sodium hydroxide and 30 wt. % water as starting materials. The expandable material was crushed to a particle size range of 0.5 mm to 1 mm prior to expansion. The measured loose bulk density and thermal conductivity for the expanded material is presented in Table 5.

Table 5.

| Loose bulk density (kg/m$^3$) | Thermal conductivity (W/mK) |
|---|---|
| 172.2 | 0.04639 |

Example 5

Forty different expanded materials were formed using different combinations of borosilicate glass, silica fume, perlite tailings, sodium hydroxide, lithium hydroxide, water and water repellent as starting materials. Tables 6 to 13 show the composition of the forty starting mixtures, the ratio of the total combined amount of silica fume and perlite tailings to the total amount of borosilicate glass (the "(SF + P)/BG" ratio), the ratio of the total amount of silica fume to the total amount of perlite tailings (the "SF/P" ratio), the ratio of silicon to sodium, the particle size of the unexpanded precursor material, the temperature at which expansion was carried out, the measured loose bulk density of the materials following expansion, the particle size of the materials following expansion, the dso of the materials following expansion, the water absorption of the materials following expansion, the water repellency of the materials following expansion, the percentage of the expanded particles which were floaters, the compaction resistance at 1" or 2" of the expanded materials, the thermal conductivity of the expanded materials, the pH of the expanded materials and the skeletal density of the expanded materials.

Table 6.

| Material | C1 | C2 | C3 | C4 | C5 |
|---|---|---|---|---|---|
| Borosilicate glass (wt. %) | 15 | 15 | 15 | 15 | 15 |
| Silica fume (wt. %) | 10.4 | 10.4 | 10.4 | 10.4 | 10.4 |
| Perlite tailings (wt. %) | 34.6 | 34.6 | 43.6 | 43.6 | 43.6 |
| NaOH (wt. %) | 13.4 | 13.4 | 12.8 | 12.8 | 12.8 |
| Water (wt. %) | 26.6 | 26.6 | 27.2. | 27.2 | 27.2 |
| LiOH.$H_2$O (wt. %) | 0 | 0 | 0 | 0 | 0 |
| Water repellent (%) | 0 | 0 | 0 | 0 | 0 |
| (SF + P)/BG ratio | - | - | - | - | - |
| SF/P ratio | - | - | - | - | - |
| Si/Na ratio | - | - | - | - | - |
| Precursor size (mm) | 0.3 - 2.0 | 0 - 0.3 | 0.5 - 1 | 0.125-0.5 | 0.1 - 1 |
| Expansion temperature (°C) | - | - | - | - | - |
| Loose bulk density (kg/$m^3$) | 61.8 | 95.2 | 78.6 | 82 | 76.7 |
| Maximum expanded particle size (mm) | - | - | - | - | - |
| $d_{50}$ (μm) | - | - | - | - | - |
| Water absorption (g/g) | - | - | - | - | - |
| Water repellency (%) | - | - | - | - | - |
| Floaters (%) | - | - | - | - | - |
| Compaction resistance (PSI at 1 "/PSI at 2") | -/37.7 | -/74 | -/46 | -/53.3 | -/67.8 |
| Thermal conductivity (W/mK) | 0.038 | 0.0394 | 0.0391 | 0.0377 | 0.0392 |
| pH | - | - | - | - | - |
| Skeletal density (g/$cm^3$) | - | - | - | - | - |

Table 7.

| Material | C6 | C7 | C8 | C9 | C10 |
|---|---|---|---|---|---|
| Borosilicate glass (wt. %) | 15 | 14.6 | 14.6 | 14.6 | 12.71 |
| Silica fume (wt. %) | 10.4 | 14.6 | 14.6 | 14.6 | 38.14 |
| Perlite tailings (wt. %) | 43.6 | 29.3 | 29.3 | 29.3 | - |
| NaOH (wt. %) | 12.8 | 16.4 | 16.4 | 16.4 | 16.97 |
| Water (wt. %) | 27.2 | 25.1 | 25.1 | 25.1 | 26.26 |

(continued)

| Material | C6 | C7 | C8 | C9 | C10 |
|---|---|---|---|---|---|
| LiOH.H$_2$O (wt. %) | 0 | 0 | 0 | 0 | 5.91 |
| Water repellent (%) | 0 | 0 | 0 | 0 | 0 |
| (SF + P)/BG ratio | - | - | - | - | 3 |
| SF/P ratio | - | - | - | - | ∞ |
| Si/Na ratio | - | - | - | - | 1.8 |
| Precursor size (mm) | 0.1 - 1 | 0.5 - 1 | 0.125 - 0.5 | 0 - 0.3 | 0.5 - 1 |
| Expansion temperature (°C) | - | - | - | - | 600 |
| Loose bulk density kg/m$^3$) | 97.1 | 25.8 | 30.7 | 34.9 | 14.2 |
| Maximum expanded particle size (mm) | - | - | - | - | 0-5 |
| d$_{50}$ (μm) | - | - | - | - | 2497 |
| Water absorption (g/g) | - | - | - | - | 8.4 |
| Water repellency (%) | - | - | - | - | 73.2 |
| Floaters (%) | - | - | - | - | >97% |
| Compaction resistance (PSI at 1"/PSI at 2") | -/69 | -/8.8 | -/10.1 | -/12.2 | 2.7/5.3 |
| Thermal conductivity (W/mK) | 0.0408 | 0.0337 | 0.033 | 0.0327 | 0.0323 |
| pH | - | - | - | - | - |
| Skeletal density (g/cm$^3$) | - | - | -- | | 0.728 |

Table 8.

| Material | C11 | C12 | C13 | C14 | C15 |
|---|---|---|---|---|---|
| Borosilicate glass (wt. %) | 14.2 | 14.9 | 14.93 | 15 | 12.71 |
| Silica fume (wt. %) | 9.83 | 10.31 | 10.33 | 10.38 | 38.14 |
| Perlite tailings (wt. %) | 32.78 | 34.37 | 34.44 | 34.62 | 0 |
| NaOH (wt. %) | 11.32 | 15.53 | 14.44 | 13.39 | 16.97 |
| Water (wt. %) | 26.36 | 24.19 | 25.36 | 26.61 | 26.26 |
| LiOH.H$_2$O (wt. %) | 5.51 | 0 | 0 | 0 | 5.91 |
| Water repellent (%) | 0 | 0.7 | 0.5 | 0 | 0 |
| (SF + P)/BG ratio | 3 | 3 | 3 | 3 | 3 |
| SF/P ratio | 0.3 | 0.3 | 0.3 | 0.3 | ∞ |
| Si/Na ratio | 1.7 | 1.8 | 1.9 | 2 | 1.8 |
| Precursor size (mm) | 0.5 - 2 | 0.3 - 2 | 0.3 - 2 | 0.3 - 2 | 0.3 - 0.5 |
| Expansion temperature (°C) | 600 | 600 | 600 | 600 | 650 |
| Loose bulk density (kg/m$^3$) | 71 | 50.7 | 49.7 | 61.8 | 13 |
| Maximum expanded particle size (mm) | 0-5 | 0-5 | 0-5 | 0-6 | 0-3 |
| d$_{50}$ (μm) | 2525 | 2534 | 2585 | 2984 | 1514 |
| Water absorption (g/g) | 1.43 | 1.22 | 1.61 | 2.25 | 13.7 |
| Water repellency (%) | 79.2 | 87.6 | 84.1 | 72.2 | 64.4 |

(continued)

| Material | C11 | C12 | C13 | C14 | C15 |
|---|---|---|---|---|---|
| Floaters (%) | 99.7 | 100 | 100 | 100 | 97.3 |
| Compaction resistance (PSI at 1"/PSI at 2") | 12.4/30.1 | 13.3/27.8 | 12.5/28.1 | 18.1/37.7 | 2.6/5.6 |
| Thermal conductivity (W/mK) | 0.04 | 0.035 | 0.036 | 0.038 | 0.034 |
| pH | 10.6 | 10.4 | 10.8 | 10.6 | - |
| Skeletal density (g/cm$^3$) | 0.673 | 0.818 | - | 1.448 | - |

Table 9.

| Material | C16 | C17 | C18 | C19 | C20 |
|---|---|---|---|---|---|
| Borosilicate glass (wt. %) | 12.71 | 12.72 | 14.2 | 14.2 | 14.9 |
| Silica fume (wt. %) | 38.14 | 38.15 | 9.83 | 9.83 | 10.31 |
| Perlite tailings (wt. %) | 0 | 0 | 32.78 | 32.78 | 34.37 |
| NaOH (wt. %) | 16.97 | 10.82 | 13.09 | 13.09 | 15.53 |
| Water (wt. %) | 26.26 | 32.41 | 24.58 | 24.58 | 24.19 |
| LiOH.H$_2$O (wt. %) | 5.91 | 5.91 | 5.51 | 5.51 | 0 |
| Water repellent (%) | 0 | 0 | 0 | 0 | 0.7 |
| (SF + P)/BG ratio | 3 | 3 | 3 | 3 | 3 |
| SF/P ratio | ∞ | ∞ | 0.3 | 0.3 | 0.3 |
| Si/Na ratio | 1.8 | 2.9 | 2 | 2 | 1.8 |
| Precursor size (mm) | 0.125 - 0.5 | 0.5 - 1 | 0 - 1 | 0.09 - 1 | 0.063 - 1 |
| Expansion temperature (°C) | 600 | 600 | 600 | 600 | 600 |
| Loose bulk density (kg/m$^3$) | 17 | 57.1 | 79.1 | 96.6 | 68.9 |
| Maximum expanded particle size (mm) | 0-3 | 0-3 | 0-3 | 0-3 | 0-3 |
| d$_{50}$ ($\mu$m) | 1062 | 1423 | 840 | 1170 | 1053 |
| Water absorption (g/g) | 12.2 | 2.6 | 3.12 | 1.49 | 1.27 |
| Water repellency (%) | 58 | 70.1 | 50.7 | 71.4 | 65.4 |
| Floaters (%) | >97.0 | 99.9 | 99.7 | 99.7 | 100 |
| Compaction resistance (PSI at 1"/PSI at 2") | 2.6/5.6 | 19.4/42.1 | -/- | 25.1/61.7 | 16.2/35.6 |
| Thermal conductivity (W/mK) | 0.034 | 0.039 | 0.038 | 0.04 | 0.037 |
| pH | - | - | - | 10.8 | 10.3 |
| Skeletal density (g/cm$^3$) | 0.686 | 0.811 | 0.517 | 1.082 | 0.821 |

Table 10.

| Material | C21 | C22 | C23 | C24 | C25 |
|---|---|---|---|---|---|
| Borosilicate glass (wt. %) | 15 | 15 | 15 | 12.72 | 12.72 |
| Silica fume (wt. %) | 10.38 | 10.38 | 10.38 | 38.15 | 38.15 |
| Perlite tailings (wt. %) | 34.62 | 34.62 | 34.62 | 0 | 0 |
| NaOH (wt. %) | 13.95 | 12.83 | 12.83 | 10.82 | 10.82 |

(continued)

| Material | C21 | C22 | C23 | C24 | C25 |
|---|---|---|---|---|---|
| Water (wt. %) | 26.05 | 27.17 | 27.17 | 32.41 | 32.41 |
| LiOH.$H_2$O (wt. %) | 0 | 0 | 0 | 5.91 | 5.91 |
| Water repellent (%) | 0 | 0 | 0 | 0 | 0 |
| (SF + P)/BG ratio | 3 | 3 | 3 | 3 | 3 - |
| SF/P ratio | 0.3 | 0.3 | 0.3 | ∞ | ∞ |
| Si/Na ratio | 1.95 | 2.1 | 2.1 | 2.9 | 2.9 |
| Precursor size (mm) | 0.063 - 1 | 0.1 - 1 | 0.1 - 1 | 0.212 - 0.5 | 0 - 0.5 |
| Expansion temperature (°C) | 600 | 600 | 600 | 600 | 600 |
| Loose bulk density (kg/m³) | 63.3 | 76.7 | 97.1 | 67.5 | 99 |
| Maximum expanded particle size (mm) | 0-3 | 0-3 | 0-3 | 0-1.25 | 0-1.25 |
| $d_{50}$ (μm) | 1091 | 1076 | 1538 | 577 | 424 |
| Water absorption (g/g) | 4.1 | 1.09 | 2.35 | 4.1 | 3.9 |
| Water repellency (%) | 48.2 | 83.3 | 54.3 | 44.2 | 25.4 |
| Floaters (%) | - | 100 | 100 | 99.8 | - |
| Compaction resistance (PSI at 1"/PSI at 2") | 10.5/24.9 | 27.8/67.8 | 30.0/69 | 21.1/51.5 | 35.3/88.1 |
| Thermal conductivity (W/mK) | 0.0357 | 0.039 | 0.041 | 0.04 | 0.04 |
| pH | - | 10.5 | 10.6 | - | - |
| Skeletal density (g/cm³) | 0.829 | 1.483 | 0.914 | 0.772 | 0.772 |

Table 11.

| Material | C26 | C27 | C28 | C29 | C30 |
|---|---|---|---|---|---|
| Borosilicate glass (wt. %) | 14.2 | 14.9 | 15.57 | 15 | 15 |
| Silica fume (wt. %) | 9.83 | 10.31 | 10.78 | 10.38 | 10.38 |
| Perlite tailings (wt. %) | 32.78 | 34.37 | 35.92 | 34.62 | 34.62 |
| NaOH (wt. %) | 13.09 | 15.53 | 16.21 | 13.39 | 13.39 |
| Water (wt. %) | 24.58 | 24.19 | 21.53 | 26.61 | 26.61 |
| LiOH.$H_2$O (wt. %) | 5.51 | 0 | 0 | 0 | 0 |
| Water repellent (%) | 0 | 0.7 | 0 | 0 | 0 |
| (SF + P)/BG ratio | 3 | 3 | 3 | 3 | 3 |
| SF/P ratio | 0.3 | 0.3 | 0.3 | 0.3 | 0.3 |
| Si/Na ratio | 2 | 1.8 | 1.8 | 2 | 2 |
| Precursor size (mm) | 0 - 0.5 | 0 - 0.3 | 0.063 - 0.425 | 0 - 0.3 | 0.063 - 0.3 |
| Expansion temperature (°C) | 600 | 600 | 600 | 600 | 600 |
| Loose bulk density (kg/m³) | 90 | 84.1 | 104.4 | 123.6 | 95.2 |
| Maximum expanded particle size (mm) | 0-1.25 | 0-1.25 | 0-1.25 | 0-1 | 0-1 |
| $d_{50}$ (μm) | 401 | 345 | 562 | 555 | 291 |
| Water absorption (g/g) | 3.92 | 0.24 | 2.8 | 2.9 | 4 |

(continued)

| Material | C26 | C27 | C28 | C29 | C30 |
|---|---|---|---|---|---|
| Water repellency (%) | 29.5 | 95.9 | 41.4 | 29.2 | 25.1 |
| Floaters (%) | 99.2 | - | 98.2 | - | - |
| Compaction resistance (PSI at 1"/PSI at 2") | -/- | 15.6/40.3 | 33.2/72.7 | 39.2/105. 7 | 31.2/74 |
| Thermal conductivity (W/mK) | 0.038 | 0.039 | 0.0411 | 0.043 | 0.039 |
| pH | 10.9 | 10.1 | - | 10.7 | 10.8 |
| Skeletal density (g/cm$^3$) | 0.475 | 0.874 | 0.803 | 0.929 | 1.142 |

Table 12.

| Material | C31 | C32 | C33 | C34 | C35 |
|---|---|---|---|---|---|
| Borosilicate glass (wt. %) | 13.98 | 14.36 | 14.93 | 14.93 | 14.63 |
| Silica fume (wt. %) | 13.98 | 14.36 | 16.79 | 14.93 | 14.63 |
| Perlite tailings (wt. %) | 27.97 | 28.72 | 27.98 | 29.85 | 29.25 |
| NaOH (wt. %) | 15.11 | 18.09 | 18.29 | 17.75 | 16.37 |
| Water (wt. %) | 23.38 | 24.46 | 21.51 | 22.05 | 25.12 |
| LiOH.H$_2$O (wt. %) | 5.57 | 0 | 0 | 0 | 0 |
| Water repellent (%) | 0 | 0 | 0.5 | 0.5 | 0 |
| (SF + P)/BG ratio | 3 | 3 | 3 | 3 | 3 |
| SF/P ratio | 0.5 | 0.5 | 0.6 | 0.5 | 0.5 |
| Si/Na ratio | 1.8 | 1.5 | 1.6 | 1.63 | 1.72 |
| Precursor size (mm) | 0 - 0.3 | 0 - 0.3 | 0 - 0.3 | 0 - 0.3 | 0.063 - 0.3 |
| Expansion temperature (°C) | 600 | 600 | 600 | 600 | 600 |
| Loose bulk density (kg/m$^3$) | 38.7 | 54.8 | 49.9 | 38.9 | 45.9 |
| Maximum expanded particle size (mm) | 0-1.25 | 0-1.25 | 0-1.25 | 0-1.25 | 0-1.25 |
| d$_{50}$ ($\mu$m) | 591 | - | 432 | 483 | 650 |
| Water absorption (g/g) | 9.4 | 5.6 | 1.9 | 3.4 | 6.11 |
| Water repellency (%) | 27.2 | 71.1 | 80.5 | 73.6 | 44 |
| Floaters (%) | 99.5 | - | 99.9 | 100 | - |
| Compaction resistance (PSI at 1"/PSI at 2") | 5.7/13.4 | 9.4/21.9 | 4.5/12.9 | 4.4/11.9 | 10.1/24.2 |
| Thermal conductivity (W/mK) | 0.033 | 0.035 | 0.034 | 0.0335 | 0.0343 |
| pH | 11 | 11.1 | 10.3 | 11 | 10.3 |
| Skeletal density (g/cm$^3$) | 0.527 | 0.593 | 0.66 | 0.888 | - |

Table 13.

| Material | C36 | C37 | C38 | C39 | C40 |
|---|---|---|---|---|---|
| Borosilicate glass (wt. %) | 14.63 | 14.63 | 15 | 15 | 15 |
| Silica fume (wt. %) | 14.63 | 14.63 | 10.38 | 0 | 0 |
| Perlite tailings (wt. %) | 29.25 | 29.25 | 34.62 | 45 | 45 |

(continued)

| Material | C36 | C37 | C38 | C39 | C40 |
|---|---|---|---|---|---|
| NaOH (wt. %) | 16.37 | 16.37 | 13.39 | 10.04 | 10.04 |
| Water (wt. %) | 25.12 | 25.12 | 26.61 | 29.96 | 29.96 |
| LiOH.$H_2O$ (wt. %) | 0 | 0 | 0 | 0 | 0 |
| Water repellent (%) | 0 | 0 | 0 | 0 | 0 |
| (SF + P)/BG ratio | 3 | 3 | 3 | 3 | 3 |
| SF/P ratio | 0.5 | 0.5 | 0.3 | $\infty$ | 00 |
| Si/Na ratio | 1.72 | 1.72 | 2 | 2.35 | 2.35 |
| Precursor size (mm) | 0 - 0.3 | 0 - 0.5 | 0 - 0.5 | 0 -0.2 | - |
| Expansion temperature (°C) | 350 - 700 | 350 - 700 | 350 - 700 | 550 | 350 - 700 |
| Loose bulk density kg/m$^3$) | 42.6 | 122 | 240 | 250 | 300 |
| Maximum expanded particle size (mm) | 0-1.25 | <0.5 | <0.5 | <0.2 | - |
| $d_{50}$ ($\mu$m) | 586 | - | 245 | 50.9 | - |
| Water absorption (g/g) | 7.6 | - | - | - | - |
| Water repellency (%) | 33.1 | - | - | - | - |
| Floaters (%) | -0.033 | - | - | - | - |
| Compaction resistance (PSI at 1"/PSI at 2") | -/- | -/- | -/- | -/221.6 | -/- |
| Thermal conductivity (W/mK) | 0.033 | 0.04 | 0.0485 | 0.0474 | - |
| pH | - | - | - | - | - |
| Skeletal density (g/cm$^3$) | - | - | - | - | - |

Example 6

Five different expandable materials (D1 to D5) were formed using different mixtures of borosilicate glass, silica fume, perlite tailings, sodium hydroxide, lithium hydroxide and water as starting materials. The compositions of the expandable materials are set out in Table 14.

The applicability of the expandable materials as non-expanded intumescent flame retardant additives for polymer compositions was tested. An intumescent is a substance that swells as a result of heat exposure, thus increasing in volume and decreasing in density. Intumescent additives are typically used in passive fire protection.

The functionality of these new flame retardant formulations is based on the capability: (i) to release up to 30 wt.% bound water by absorbing heat; (ii) to expand and create an insulating barrier that hinders heat transfer and destabilisation of the surrounding polymer matrix (i.e. the avoidance of burning droplets); and (iii), at temperatures above 700°C, to melt while retaining at least part of the initial shape without collapse. All formulations were found to:

1. Release chemically bound water in the range 200-500°C.
2. Expand to Intumescent foam in the range 400-600°C.
3. Start melting at temperatures ≥700° C.

The tests were conducted according to DIN EN 45545 (fire prevention tests).

For every different polymer loaded with the fire retardant additives, the softening point, the melting point and the flowing point was successfully adjusted to meet specific targeted narrow temperature ranges. Adjustment was achieved through modification of the chemical composition as shown in Table 14.

Two different polymers were loaded with the fire retardant additives of the highest melting points: (1) PVC with 10 wt.% D2; (2) PVC with 10 wt.% D4; (3) Polypropylene with 5 wt.% and 10 wt.% D2 (i.e. two different levels of loading); and (4) Polypropylene with 5 wt.% and 10 wt.% wt. D4 (i.e. two different levels of loading). Polyurethane (PU) foam was also loaded with 8 wt.% of each fire retardant additive. Prior to loading, the softening point, the melting point and the flowing point of the fire retardant additives were successfully adjusted (vs. baseline material which was material D5) to maximize fire resistance. Adjustment was achieved through modification of the chemical composition as shown in Table 14.

Table 14.

| Component % w/w | D1 | D2 | D3 | D4 | D5 |
|---|---|---|---|---|---|
| $SiO_2$ | 52,00 | 53,70 | 50,40 | 58,20 | 46,80 |
| CaO | 0,46 | 0,51 | 0,64 | 1,00 | 0,73 |
| MgO | 0,34 | 0,38 | 0,40 | 0,31 | 0,32 |
| $Al_2O_3$ | 5,30 | 6,30 | 5,20 | 7,40 | 2,10 |
| $TiO_2$ | 0,05 | 0,05 | 0,04 | 0,08 | 0,01 |
| $Fe_2O_3$ | 0,47 | 0,76 | 0,49 | 0,60 | 0,13 |
| $MnO_2$ | 0,05 | 0,06 | 0,05 | 0,04 | 0,01 |
| $P_2O_5$ | 0,02 | 0,01 | 0,01 | 0,03 | 0,01 |
| $Na_2O$ | 15,80 | 12,70 | 13,30 | 15,80 | 16,50 |
| $K_2O$ | 1,70 | 2,00 | 1,80 | 1,90 | 0,70 |
| $CO_2$ | 0,61 | 2,01 | 1,50 | 0,59 | 0,30 |
| C total | 0,49 | 0,82 | 0,68 | 0,24 | 0,50 |
| S total | 0,01 | 0,01 | 0,01 | 0,00 | 0,01 |
| $B_2O_3$ | ≤3,0 | ≤3,0 | ≤3,0 | ≤3,0 | ≤3,0 |
| $H_2O$ 950 °C | 20,90 | 19,30 | 24,00 | 12,00 | 30,00 |
| $H_2O$ 105 °C | 12,88 | 13,19 | 12,74 | 1,66 | 12,41 |
| Softening point DIN 51730 | 617 | 634 | 562 | 686 | 627 |
| Melting point DIN 51730 | 868 | 913 | 775 | 900 | 790 |
| Flowing point DIN 51730 | 991 | 1068 | 864 | 996 | 835 |

Depending on the particle size distribution, the different granulometries set out in Table 15 have been examined in various polymers:

Table 15.

| Particle size | Application |
|---|---|
| 0 mm - 20 mm | Firestop collars, firestop pillows, firestop construction bricks. |
| 0.15 mm - 1mm | PU foams, plastics. |
| < 0.15 mm | PU foams, plastics, elastomers, cable insulation. |

**Claims**

1.   A method of manufacturing an expanded granular material, the method comprising:

forming a mixture comprising:

a silicate material;
an alkali compound; and
water;

curing the mixture to form a solid precursor;

crushing and/or milling the solid precursor to form an expandable granular material; and
heating the expandable granular material to form an expanded granular material.

2. The method according to claim 1, wherein the mixture comprises a glass network-forming element other than silicon, a glass network intermediate element and/or a glass network-modifying element, and optionally wherein:

the glass network-forming element other than silicon is selected from: boron, germanium, and phosphorous;
the glass network intermediate element is selected from: titanium, aluminium, zirconium, beryllium, magnesium and zinc; and/or
the glass network-modifying element is selected from: calcium, lead, lithium, sodium and potassium.

3. The method according to claim 1 or claim 2, wherein the mixture further comprises reactive silica, for example silica fume and/or fumed silica.

4. The method according to any preceding claim, wherein the mixture comprises two different silicate materials, for example:

wherein the mixture comprises: a silicate glass, such as an aluminosilicate glass; and a silicate mineral, for example an aluminosilicate mineral; or
wherein the mixture comprises: a first silicate glass, such as a first aluminosilicate glass; and a second silicate glass, such as a second aluminosilicate glass.

5. The method according to claim 4, wherein:

one of the two different silicate materials is selected from: a volcanic glass, such as a perlitic material, for example unexpanded natural perlite ore having a water content of greater than about 2 wt. %; a phyllosilicate mineral, for example bentonite, kaolin or calcined kaolin; diatomaceous earth; or combinations thereof; and/or
one of the two different silicate materials is a silicate glass selected from: fused silica glass, soda-lime glass, borosilicate glass, lead-oxide glass, aluminosilicate glass, silica-germania glass, optionally wherein the silicate glass is a recycled glass, for example in the form of recycled glass cullet.

6. The method according to any preceding claim, wherein the mixture comprises:

from about 10 wt. % to about 90 wt. %, for example, from about 15 wt. % to about 80 wt. %, or from about 20 wt. % to about 70 wt. %, of silicate material;
from about 5 wt. % to about 25 wt. %, from about 10 wt. % to about 20 wt. %, of alkali compound; and
from about 15 wt. % to about 50 wt. %, for example from about 20 wt. % to about 40 wt. %, of water,
optionally wherein the mixture comprises from about 5 wt. % to about 75 wt. %, for example from about 5 wt. % to about 50 wt. %, or from about 5 wt. % to about 40 wt. %, of reactive silica.

7. The method according to claim 6, wherein the silicate material comprises:

from about 50 wt. % to about 95 wt. %, for example, from about 60 wt. % to about 85 wt. %, of $SiO_2$;
from about 1 wt. % to about 30 wt. %, for example, from about 2 wt. % to about 15 wt. %, of $Na_2O$;
from about 0 wt. % to about 15 wt. %, for example, from about 0.01 wt. % to about 6 wt. %, of $K_2O$;
from about 0 wt. % to about 20 wt. %, for example, from about 0.05 wt. % to about 15 wt. %, of CaO;
from about 0 wt. % to about 20 wt. %, for example, from about 0.1 wt. % to about 15 wt. %, of $Al_2O_3$;
no greater than about 20 wt. %, for example, less than about 15 wt. %, of $B_2O_3$;
no greater than about 20 wt. %, for example, less than about 15 wt. %, of PbO;
no greater than about 10 wt. %, for example, less than about 5 wt. %, of MgO; and
no greater than about 10 wt. %, for example, less than about 5 wt. %, of BaO.

8. The method according to any preceding claim, wherein the mixture contains boron in an amount such that the expanded granular material comprises less than about 5.0 wt. %, for example less than about 3.5 wt. %, of $B_2O_3$.

9. The method according to any preceding claim, wherein:

curing the mixture to form the solid precursor comprises curing the mixture at a temperature no greater than about 250°C, for example no greater than about 120°C, or from about 20°C to about 250°C, or from about 20°C to about 120°C, or from about 50°C to about 110°C, or from about 70°C to about 100°C; and/or

heating the granular material to form the expanded granular material comprises heating the granular material to a temperature no greater than about 1100°C, for example no greater than about 700°C, or from about 300°C to about 900°C, or from about 300°C to about 700°C, or from about 400°C to about 600°C.

10. An expanded granular material having:

a loose bulk density, measured according to PI 200-77, of from about 15 kg/m$^3$ to about 450 kg/m$^3$, for example from about 20 kg/m$^3$ to about 100 kg/m$^3$, or from about 20 kg/m$^3$ to about 30 kg/m$^3$, or from about 20 kg/m$^3$ to about 40 kg/m$^3$, or from about 55 kg/m$^3$ to about 100 kg/m$^3$, or from about 70 kg/m$^3$ to about 100 kg/m$^3$;

a compaction resistance, measured according to PI 306-80, of from about 3 PSI to about 350 PSI at 2", for example from about 3 PSI to about 200 PSI at 2", or from about 3 PSI to about 100 PSI at 2", or from about 3 PSI to about 10 PSI at 2", or from about 30 PSI to about 80 PSI at 2", or from about 40 PSI to about 75 PSI at 2", or from about 5 PSI to about 20 PSI at 2"; and/or

a thermal conductivity, measured according to EN 12667, of from about 0.0300 W/mK to about 0.0700 W/mk, for example from about 0.0320 W/mK to about 0.0420 W/mK, from about 0.0350 W/mK to about 0.0400 W/mK, or from about 0.0360 W/mK to about 0.0410 W/mK, or from about 0 0320 W/mK to about 0.0340 W/mK, or from about 0.042 W/mK to about 0.055 W/mK, or from about 0.055 W/mK to about 0.070 W/mK.

11. The expanded granular material according to claim 10, wherein the expanded granular material comprises:

from about 8 wt. % to about 30 wt. %, for example from about 13 wt. % to about 22 wt. %, of $X_2O$, X being an alkali metal such as Na or Li;

from about 0 wt. % to about 15 wt. %, for example from about 5 wt. % to about 9 wt. %, of $Al_2O_3$; and

from about 50 wt. % to about 80 wt. %, for example from about 60 wt. % to about 75 wt. %, of $SiO_2$; and optionally from about 0 wt. % to about 10 wt. %, for example from about 0.5 wt. % to about 5 wt. % of $H_2O$;

and optionally wherein the expanded granular material comprises less than about 5 wt. %, for example less than about 3.5 wt. %, of $B_2O_3$.

12. The expanded granular material according to claim 10 or claim 11, wherein the expanded granular material is formed by expanding a precursor obtained by curing a mixture comprising:

a silicate material;

an alkali compound; and

water;

optionally wherein:

(a) the mixture comprises a glass network-forming element other than silicon, a glass network intermediate element and/or a glass network-modifying element;

(b) the mixture further comprises reactive silica; and/or

(c) the mixture comprises two different silicate materials;

further optionally wherein:

(i) one of the two different silicate materials is selected from: a volcanic glass such as a perlitic material, for example unexpanded natural perlite ore having a water content of greater than about 2 wt. %; a phyllosilicate mineral, for example bentonite, kaolin or calcined kaolin; diatomaceous earth; or any combination thereof; and/or

(ii) one of the two different silicate materials is a silicate glass selected from: fused silica glass, soda-lime glass, borosilicate glass, lead-oxide glass, aluminosilicate glass, silica-germania glass.

13. An expandable material comprising:

from about 0.1 wt. % to about 25 wt. %, for example from about 0.2 wt. % to about 5 wt. %, of $X_2O$, wherein X is an alkali metal such as Na or Li;

from about 0.1 wt. % to about 30 wt. %, for example from about 0.2 wt. % to about 20 wt. %, of $Al_2O_3$;

from about 30 wt. % to about 80 wt. %, for example from about 40 wt. % to about 60 wt. %, of $SiO_2$; and

from about 10 wt. % to about 30 wt. %, for example from about 15 wt. % to about 30 wt. %, of $H_2O$;
wherein the expandable material optionally comprises less than about 5 wt. %, for example less than about 3.5 wt. %, of $B_2O_3$.

14. The expandable material according to claim 13, wherein the expandable material is substantially amorphous and/or wherein the expandable material is granular and optionally has a particle size from about 10 $\mu$m to about 2 cm.

15. A method of manufacturing an expandable material, the method comprising:

    (a) forming a mixture comprising:

        a silicate material;
        an alkali compound; and
        water;

    wherein optionally:

        (i) the mixture comprises a glass network-forming element other than silicon, a glass network intermediate element and/or a glass network-modifying element;
        (ii) the mixture further comprises reactive silica; and/or
        (iii) the mixture comprises two different silicate materials; and

    (b) curing the mixture to form the expandable material; and

    optionally:

        (c) crushing the expandable material.

16. A thermally insulating product, for example a bulk material for insulating cavity walls, a filler for insulation board, insulation board, a filler for ceiling tiles such as acoustic ceiling tiles, ceiling tiles such as acoustic ceiling tiles, a granular material for thermally insulating a cryogenic or low-temperature vessel, or a thermally insulated cryogenic or low-temperature vessel, comprising the expanded granular material of any of claims 10 to 12 or the expanded granular material formed by expanding the expandable material of claim 13 or claim 14 or by expanding the expandable material manufactured according to the method of claim 15.

17. A construction material, for example a sheet such as a fibre cement sheet, a mortar or plaster such as cementitious, gypsum-based and/or acrylic-based mortar or plaster, or concrete, comprising the expanded granular material of any of claims 10 to 12 or the expanded granular material formed by expanding the expandable material of claim 13 or claim 14 or by expanding the expandable material manufactured according to the method of claim 15.

18. A horticultural or agricultural substrate or substrate component comprising the expanded granular material of any of claims 10 to 12 or the expanded granular material formed by expanding the expandable material of claim 13 or claim 14 or by expanding the expandable material manufactured according to the method of claim 15.

19. A flame retardant functional material comprising the expanded granular material of claim 13 or claim 14 or the expandable granular material manufactured according to the method of claim 15.

Europäisches
Patentamt

European
Patent Office

Office européen
des brevets

# EUROPEAN SEARCH REPORT

Application Number

EP 18 38 6035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 647 605 A1 (NOF NOF TECHNOLOGY SIA [LV]) 9 October 2013 (2013-10-09) * paragraph [0026]; example 7 * | 1-19 | INV.<br>C03C11/00<br>C04B20/00<br>C09K21/02<br>A01G24/00 |
| X | EP 3 135 652 A1 (KYUNG DONG ONE CORP [KR]) 1 March 2017 (2017-03-01) * paragraphs [0011] - [0035] * | 10-19 | |
| X | US 3 951 632 A (SEKI YACHIO ET AL) 20 April 1976 (1976-04-20) * column V, line 65 - column VI, line 11; example 2 * | 1,4-6, 9-19 | |
| X | US 4 308 065 A (WALLS-MUYCELO JOSE) 29 December 1981 (1981-12-29) * example 1 * | 1,4-6, 10-19 | |
| A | "Foamed glass prodn. charge - contains sodium hydroxide, carbon and perlite", DERWENT, 15 December 1981 (1981-12-15), XP002195963, * abstract * | 1-19 | |
| A | WO 2011/048446 A1 (UAB STIKLOPORAS [LT]; JEGOROV VLADIMIR VALENTOVICH [RU] ET AL.) 28 April 2011 (2011-04-28) * paragraphs [0016] - [0032] * | 1-19 | |

**TECHNICAL FIELDS SEARCHED (IPC)**

C03C
G02F
A01G
C04B
C09K

The present search report has been drawn up for all claims

| Place of search | Date of completion of the search | Examiner |
|---|---|---|
| Munich | 30 April 2019 | Lecerf, Nicolas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                                                                  
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 18 38 6035

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2019

| Patent document cited in search report | | | Publication date | Patent family member(s) | | | Publication date |
|---|---|---|---|---|---|---|---|
| EP 2647605 | A1 | | 09-10-2013 | NONE | | | |
| EP 3135652 | A1 | | 01-03-2017 | CN | 106232555 | A | 14-12-2016 |
| | | | | EP | 3135652 | A1 | 01-03-2017 |
| | | | | US | 2017044441 | A1 | 16-02-2017 |
| | | | | WO | 2015163502 | A1 | 29-10-2015 |
| US 3951632 | A | | 20-04-1976 | DE | 2453882 | A1 | 22-05-1975 |
| | | | | JP | S5082114 | A | 03-07-1975 |
| | | | | JP | S5239609 | B2 | 06-10-1977 |
| | | | | US | 3951632 | A | 20-04-1976 |
| US 4308065 | A | | 29-12-1981 | CA | 1125315 | A | 08-06-1982 |
| | | | | DE | 2842673 | A1 | 03-05-1979 |
| | | | | FR | 2407901 | A1 | 01-06-1979 |
| | | | | GB | 2008086 | A | 31-05-1979 |
| | | | | JP | S5488910 | A | 14-07-1979 |
| | | | | JP | S6242871 | B2 | 10-09-1987 |
| | | | | MX | 147334 | A | 17-11-1982 |
| | | | | US | 4308065 | A | 29-12-1981 |
| WO 2011048446 | A1 | | 28-04-2011 | RU | 2009139009 | A | 27-04-2011 |
| | | | | WO | 2011048446 | A1 | 28-04-2011 |

EPO FORM P0459

For more details about this annex : see Official Journal of the European Patent Office, No. 12/82